# EUROPÄISCHE PATENTANMELDUNG

(11) **EP 3 719 713 A1**
(43) Veröffentlichungstag der Anmeldung: **07.10.2020**
(21) Anmeldenummer: 20177191.2
(22) Anmeldetag: 02.08.2018
(51) Int. Cl.: G06N 7/00

(54) **VERFAHREN UND STEUERSYSTEM ZUM STEUERN UND/ODER ÜBERWACHEN VON GERÄTEN**

(30) Priorität: 23.10.2017 EP 17197791; 22.01.2018 EP 18152750; 22.01.2018 EP 18000379; 16.03.2018 EP 18162189; 18.04.2018 WO PCT/EP2018/059891; 18.04.2018 EP 18167960; 27.04.2018 WO PCT/EP2018/060900; 29.05.2018 EP 18174922
(62) Teilanmeldung aus: 18753124.9
(71) Anmelder: Siemens Aktiengesellschaft, 80333 München (DE)
(72) Erfinder: Jetzfellner, Thomas, 85609 Aschheim (DE)

(57) **Zusammenfassung**

Mit der Erfindung können auf einfache Weise komplexe Steuerbefehlsketten in einem (Automatisierungs-)Netzwerk, in dem Knoten und/oder Geräteknoten und/oder blockkettenexternen Geräte miteinander vernetzt sind, abgearbeitet werden, selbst wenn sich unterschiedliche Betreiber der einzelnen Knoten und Geräte nicht vertrauen.

## Beschreibung

Die Erfindung bezieht sich auf ein Verfahren und Steuersystem zum Steuern und/oder Überwachen von Geräten.

Geräte, wie Feldgeräte und Fertigungsgeräte, werden immer stärker vernetzt und können beispielsweise von unterschiedlichen Betreibern bereitgestellt/betrieben werden. Diesen Geräten werden oft Befehlsfolgen übermittelt, die durch die Geräte ausgeführt werden können. Nachteilig ist dabei, dass eine Abarbeitung der Befehlsfolgen in einem heterogenen Netz aus Geräten von unterschiedlichen Betreibern schwer zu steuern ist.

Aus dem Stand der Technik ist das Dokument DE102011018878 bekannt. Dieses betrifft ein Verfahren zum Synchronisieren der Datenbestände von Datenbanken in einem verteilten Datenbanksystem, wobei sich Datenbanken auf mobilen Netzwerkknoten und auf festen Netzwerkknoten befinden, die zumindest teilweise über nicht ständig verfügbare Netzwerkverbindungen miteinander verbunden sind.

Eine Aufgabe der vorliegenden Erfindung ist es, eine Alternative zu bekannten Lösungen aus dem Stand der Technik zu finden.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Gemäß einem Aspekt betrifft die Erfindung ein Steuersystem zum Steuern und/oder Überwachen von Geräten, umfassend:
- ein erstes Bestimmungsmodul (110) zum Bestimmen von Ausführungsanforderungen für eine Ausführung von Steuerbefehlen durch die Geräte, wobei
   - in den Ausführungsanforderungen gerätespezifische Anforderungen und/oder vorausgesetzte Steuerbefehle gespeichert sind;
- ein verteiltes Datenbanksystem (BC) aufweisend,
   - eine Vielzahl von Knoten (BCN, BCN D), wobei die Knoten (300, BCN, BCN_D) und die Geräte (300, D, BCN_D) über ein erstes Kommunikationsnetzwerk (NW1) miteinander verbunden sind;
- ein erstes Zuordnungsmodul (120) zum Zuordnen der jeweiligen Ausführungsanforderungen zu den Steuerbefehlen;
- ein erstes Speichermodul (130) zum Speichern der jeweiligen Steuerbefehle mit den zugeordneten Ausführungsanforderungen in Steuertransaktionen, wobei
   - die Steuertransaktionen in dem verteilten Datenbanksystems (BC) gespeichert werden;
- die Steuertransaktionen mittels des verteilten Datenbanksystems an die Geräte (300, D, BCN_D) übertragen werden.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.
Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweites Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "Bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Eine Bestätigungstransaktion kann beispielsweise nach der erfolgreichen Ausführung von Steuertransaktionen durch ein Gerät in dem verteilten Datenbanksystem gespeichert werden (z. B. speichert das Gerät die Bestätigungstransaktion in dem verteilten Datenbanksystem). Eine Bestätigungstransaktion kann beispielsweise eine Bestätigung für eine Ausführung der Steuerbefehle der Steuertransaktion durch eines der Geräte umfassen, wenn ein entsprechendes Gerät der Geräte die Steuerbefehle der Steuertransaktion erfolgreich ausgeführt hat. Hierzu kann die Bestätigungstransaktion beispielsweise eine von dem entsprechenden Gerät erzeugte Prüfsumme (z. B. eine Transaktionsprüfsumme) über die ausgeführten Steuerbefehle umfassen und/oder eine Bestätigung der Ausführung umfassen, die z. B. von der Prüfsumme ebenfalls geschützt ist. Eine Bestätigungstransaktion kann beispielsweise auch in dem verteilten Datenbanksystem gespeichert werden, wenn das Gerät die Steuerbefehle teilweise ausführt und/oder die Ausführung der Steuerbefehle unterbrochen wird. Dies kann z. B. der Fall sein, wenn während der Ausführung der Steuerbefehle ein Defekt an dem Gerät aufgetreten ist, der die Ausführung der Steuerbefehle nicht mehr erlaubt (z. B. trat ein Defekt an einem Aktor oder Werkzeug auf). Beispielsweise kann ein anderes Gerät, das beispielsweise die Ausführungsanforderungen für die verbleibenden unausgeführten Steuerbefehle erfüllt, dann anhand der Bestätigungstransaktion diese unausgeführten Steuerbefehle der entsprechenden Steuertransaktion ausführen. Entsprechend kann die Bestätigungstransaktion beispielsweise den Grad der Ausführung bzw. eine Angabe über den ausgeführten Teil der Steuerbefehle umfassen. Alternativ oder zusätzlich kann eine Bestätigungstransaktion die Steuerbefehle angeben, die für eine erfolgreiche Ausführung der Steuerbefehle einer entsprechenden Steuertransaktion noch ausgeführt werden müssen. Entsprechend kann beispielsweise eine Bestätigungstransaktion einen Datensatz umfassen, der angibt welche der Steuerbefehle noch auszuführen sind bzw. der angibt welche der Steuerbefehle für die erfolgreiche Ausführung der Steuerbefehle einer entsprechenden Steuertransaktion fehlen. Hierdurch wird beispielsweise ermöglicht, dass eine Weiterverarbeitung der Steuerbefehle erfolgen kann, selbst wenn die Ausführung der Steuerbefehle bei einem Gerät unterbrochen wurde. Entsprechend kann beispielsweise in den Ausführungsanforderungen gefordert sein, dass mehr als ein Gerät (z. B. zwei oder drei Geräte oder mehr Geräte) die Ausführungsanforderungen erfüllt, damit eine Ausführung der Steuerbefehle auch garantiert ist, selbst wenn z. B. ein Gerät während der Ausführung der Steuerbefehle einer entsprechenden Steuertransaktion ausfällt.

Alternativ kann eine Transaktion beispielsweise eine Datenstruktur sein, die Daten speichert (z. B. die Steuerbefehle). Eine Transaktion kann beispielsweise auch als Nachricht (also eine Kommunikationsnachricht, welche Daten speichert) bezeichnet werden bzw. eine Nachricht sein, die z. B. entsprechende Daten (z. B. Steuerbefehle) speichert. Mit der Erfindung können somit entsprechende Transaktionen oder Nachrichten ausgetauscht werden. Transaktionen können dabei z. B. die Steuerbefehle und/oder Vertragsdaten und/oder andere Daten wie Videodaten, Nutzerdaten, Messdaten etc. umfassen.

Unter "Steuerbefehle" oder "Steuertransaktionen" können im Zusammenhang mit der Erfindung beispielsweise ein Smart-Contract [4][5] oder ausführbarer Programmcode verstanden werden, der insbesondere durch das verteilte Datenbanksystem ausgeführt wird, wobei beispielsweise das verteilte Datenbanksystem bzw. dessen Knoten und Infrastruktur die entsprechenden Steuerbefehle abarbeitet bzw. umsetzt. Insbesondere ergeben mehrere Steuerbefehle oder Steuertransaktionen aus einem oder mehreren Datenblöcken eine Befehlsfolge, die insbesondere eine Fertigungsanlage mit den zugehörigen Fertigungsmaschinen steuern, die Geräte eines Automatisierungsnetzes steuern oder die Geräte eines Energieversorgungsnetzes steuern oder Geräte im Internet der Dinge steuern. Insbesondere sind in den Steuerbefehlen oder Steuertransaktionen (also auch in den Befehlsfolgen) die Fertigungsanweisungen oder Fertigungsschritte für ein Produkt kodiert. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage und/oder Geräte im Internet der Dinge, die insbesondere auch ein Knoten des verteilten Datenbanksystems sind. Dabei können die Geräte beispielsweise Feldgeräte sein, die insbesondere auch ein Knoten des verteilten Datenbanksystems sind. Die Geräte können beispielsweise auch Bankautomaten sein, wobei die Steuerbefehle eine Geldauszahlung veranlassen. Beispielsweise können die Steuerbefehle aus einer Befehlsfolge abgeleitet werden bzw. aus diesen bestimmt werden. Beispielsweise kann eine Steuertransaktion einen oder mehrere Steuerbefehle umfassen. Beispielsweise kodieren die Steuerbefehle mechanische Bewegung und/oder andere physikalische Größen (z. B. Druck oder Temperatur), die von einem entsprechenden Gerät/Knoten (z. B. durch einen entsprechenden Aktor) in die entsprechende mechanische Bewegung und/oder die entsprechende andere physikalische Größen umgesetzt werden. Mit den Steuerbefehlen werden dann beispielsweise Aktoren der Geräte und/oder Knoten gesteuert. Entsprechend umfasst ein entsprechendes Gerät/Knoten beispielsweise einen Aktor. Ist ein Gerät/Knoten beispielsweise ein Roboter so würde ein Aktor auch als Effektor bezeichnet werden. Bei einem Gerät kann es sich beispielsweise auch um ein mechatronisches Gerät oder System handeln, wobei ein mechatronisches Gerät/System beispielsweise ein Aktor und/oder ein lineartechnisches Gerät ist. Ein lineartechnisches Gerät ist beispielsweise ein Gerät zur Ausführung translativer Bewegungen. Bei einem entsprechenden Gerät kann es sich beispielsweise auch um ein Antriebssystem handeln. Mittels der Steuerbefehle und der Geräte und/oder Knoten kann beispielsweise auch ein Regelkreis geregelt und/oder gesteuert werden, indem beispielsweise die Bestätigungstransaktionen für ausgeführte Steuerbefehle durch das Steuersystem ausgewertet werden und entsprechende Steuerbefehle als Reaktion auf die Bestätigungstransaktionen erzeugt werden. Für diese neuen Steuerbefehle werden dann beispielsweise wieder entsprechende Ausführungsanforderungen bestimmt und diese werden dann beispielsweise wieder in Steuertransaktionen gespeichert, damit diese beispielsweise - wie in der Erfindung beschrieben - von den entsprechenden Geräten ausgeführt werden können. Bei den Steuerbefehlen kann es sich beispielsweise auch um Steuerbefehle zum Steuern von kryptographischen Geräten und/oder Verfahren handeln (z. B. eine Nutzerauthentisierung oder Nutzerauthentifizierung).

Unter Steuerbefehlen können beispielsweise auch Befehlsfolgen oder auch Transaktionen aus einer Datenbank bzw. eines Datenbanksystems verstanden werden, die durch Geräte oder Knoten des verteilten Datenbanksystems ausgeführt werden sollen. Bei dem Datenbanksystem kann es sich beispielsweise um das verteilte Datenbanksystem handeln, wenn es z. B. Transaktionen gibt, denen noch keine Ausführungsanforderungen zugewiesen bzw. zugeordnet wurden. Alternativ oder zusätzlich kann das Datenbanksystem eine andere Datenbank sein, z. B. eine konventionelle hierarchische Datenbank, von der die entsprechenden Transaktionen abgerufen werden können. Unter Steuerbefehle können beispielsweise auch Befehlsfolgen oder auch Transaktionen verstanden werden, die durch ein Eingabesystem bereitgestellt werden und die von dem verteilten Datenbanksystem ausgeführt werden sollen. Unter Steuerbefehlen können beispielsweise Befehlsfolgen oder Steuerbefehle verstanden werden mit denen mechanische und/oder elektrische und/oder elektromechanische und/oder elektronische Geräte gesteuert werden.

Unter "gerätespezifischen Anforderungen" können im Zusammenhang mit der Erfindung beispielsweise ein bestimmtes Gerät, das z. B. durch einen eindeutigen Identifizierer festgelegt ist, Geräte die vorgegebene Steuerungsaktionen durchführen können (z. B. ein Fertigungsroboter, der Metallteile verschweißen kann; ein Lackierroboter, der vorgegebene Farben auf ein Fertigungsteil auftragen kann; Geräte, die in einem Umspannwerk elektrische Verbindungen automatisiert herstellen) oder Geräte sein, die Fertigungsschritte bzw. Steuerbefehle mit einer vorgegebenen Präzision und/oder Geschwindigkeit ausführen (z. B. Drehbänke, Fräsen und Schneidemaschinen). Alternativ oder zusätzlich können "gerätespezifischen Anforderungen" auch bestimmte Geräteklassen voraussetzen, die für eine Ausführung oder Abarbeitung der Steuerbefehle vorgegeben werden. Insbesondere wird dabei unter einer Geräteklasse ein oder mehrere Geräte (z. B. Schleifgeräte oder Sägegeräte) verstanden, die beispielsweise in der Lage sind bestimmte vorgegebene Aktionen auszuführen (z. B. ein bestimmtes Material schleifen oder sägen). Insbesondere sind die gerätespezifischen Anforderungen, die Anforderungen die zum Ausführen der Steuerbefehle an die entsprechenden Geräte und/oder Knoten gestellt werden. Die gerätespezifische Daten oder Geräteeigenschaften entsprechen dann beispielsweise den tatsächlichen und/oder aktuellen gerätespezifische Daten oder Geräteeigenschaften eines Gerätes. Beispielsweise wird überprüft, ob ein Gerät bzw. ein Fertigungsmaschine in der Lage ist die Steuerbefehle mit der vorgegebenen Präzision, die z. B. in den gerätespezifischen Anforderungen vorgegeben sind, auszuführen. Insbesondere können gerätespezifischen Anforderungen auch als maschinelle und/oder mechatronische und/oder fertigungsspezifische Anforderungen bezeichnet werden. Insbesondere können gerätespezifische Daten oder Geräteeigenschaften auch als maschinelle und/oder mechatronische und/oder fertigungsspezifische Daten oder Geräteeigenschaften bezeichnet werden. Insbesondere können gerätespezifische Daten oder Geräteeigenschaften auch als Geräteinformationen bezeichnet werden. Insbesondere geben die gerätespezifischen Anforderungen die Anforderungen vor, die durch die gerätespezifischen Daten eines Gerätes erfüllt sein sollen. Mit anderen Worten geben die gerätespezifischen Anforderungen einen "Soll"-Wert vor, der mit dem "Ist"-Wert von den Geräten abgeglichen wird. Die gerätespezifischen Daten stellen dabei insbesondere die aktuellen Geräteeigenschaften dar. Diese Geräteeigenschaften/gerätespezifischen Daten umfassen beispielsweise die UID eines Gerätes bzw. eines Systems, verfügbare Werkzeuge oder unterstützte Fertigungsverfahren (fräsen, schleifen oder 3D-drucken), Fertigungspräzision, Fertigungskosten, Standort der Geräte, Netzwerkadresse zum Ansprechen/Ansteuern des Gerätes, berechtigte Nutzer usw.

Die gerätespezifischen Anforderungen können beispielsweise auch Sicherheitsanforderungen oder ortsbezogene Anforderungen (z. B. eine Länderangabe, eine GPS-Angabe oder Postleitzahl (PLZ)) sein, die ein Gerät für die Ausführung der Steuerbefehle erfüllen soll. Beispielsweise kann gefordert sein, dass das Gerät vorgegebene Sicherheitseinrichtungen aufweisen soll oder für die Ausführung der Steuerbefehle am Gerät noch eine bestimmte/vorgegebene Authentisierung und/oder Authentifizierung notwendig ist. Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert, dass er z. B. nur in vorgegebenen Ländern, z. B. Italien, Frankreich und Österreich, eine Bargeldauszahlung erlaubt, so wird dies in den gerätespezifischen Anforderungen (und insbesondere ggf. implizit in den Ausführungsanforderungen ebenfalls) gespeichert. Ein Geldautomat in Andorra würde dann ggf. keine Auszahlung erlauben bzw. diese unterbinden. Alternativ kann dies z. B. auch durch einen anderen Knoten des verteilten Datenbanksystems unterbunden werden oder durch einen Smart-Contract des verteilten Datenbanksystems unterbunden werden. Auch kann beispielsweise durch die Sicherheitsanforderungen eine spezifische Authentifizierung des Kunden gefordert sein. Beispielsweise, dass ein Pin für ein Auszahlung eingegeben wird (was z. B. in den USA nicht zwangsläufig der Fall ist) und/oder eine bestimmte Pin-Länge gefordert ist (z. B. 8 Zeichen) und/oder, dass andere zusätzliche Authentisierungsverfahren gefordert sind (z. B. 2 Faktor-Authentisierung, Mobile-Tan, Google Authenticator)

Alternativ kann das Bestimmungsmodul die Steuerbefehle auch weiter analysieren und, wenn beispielsweise das Bestimmungsmodul bereits feststellt, dass die gerätespezifischen Anforderungen nicht erfüllt sind oder nicht erfüllbar sind, eine Steuertransaktion erstellen, die das entsprechende Gerät oder das System darauf hinweist und ggf. eine Ausführung der Steuerbefehle unterbindet. Alternativ kann beispielsweise auch keine Steuertransaktion erzeugt werden und es gibt irgendwann einen Timeout für die Ausführung der Steuerbefehle, z. B. nach einem vorgegebenen Zeitraum, der vorzugsweise konfigurierbar ist.

Unter "systemspezifischen Daten " oder "gerätespezifische Daten" können im Zusammenhang mit der Erfindung beispielsweise auch Systemeigenschaften oder Geräteeigenschaften eines Gerätes oder eines technischen Systems verstanden werden. Die gerätespezifischen Daten oder systemspezifischen Daten sind beispielsweise aktuelle Geräteeigenschaften oder Systemeigenschaften. Die gerätespezifischen Daten oder systemspezifischen Daten (bzw. die entsprechenden Eigenschaften) können beispielsweise für ein technisches System, die Geräte eines technischen Systems oder ein Gerät folgende Daten umfassen: die UID des Gerätes bzw. des Systems, verfügbare Werkzeuge oder unterstützte Fertigungsverfahren (fräsen, schleifen oder 3D-drucken) des Gerätes bzw. des Systems, Fertigungspräzision des Gerätes bzw. des Systems, Fertigungskosten des Gerätes bzw. des Systems, Standort des Gerätes bzw. des Systems, Netzwerkadresse zum Ansprechen/Ansteuern des Gerätes bzw. des Systems, berechtigte Nutzer für das Gerät oder das System, Namen des Gerätes bzw. des Systems, usw.

Je nach gewählter Implementierung können beispielsweise die systemspezifischen Daten übergreifend für ein oder mehreren Geräte eines technischen Systems realisiert sein, indem z. B. über eine UID/(Netzwerk-)Adresse des technischen Systems auch die entsprechenden Geräte des technischen Systems adressiert, identifiziert oder mit diesen kommuniziert werden können. Alternativ oder zusätzlich können beispielsweise die gerätespezifischen Daten für das eine Gerät oder die mehreren Geräte des technischen Systems in den systemspezifischen Daten umfasst sein.

Unter einem "technischen System" können im Zusammenhang mit der Erfindung beispielsweise ein Gerät oder mehrere Geräte verstanden werden, die kommunikativ miteinander und/oder mit einem verteilten Datenbanksystem (z. B. das erste verteilte Datenbanksystem) verbunden sind.

Unter "vorausgesetzte Steuerbefehle" können im Zusammenhang mit der Erfindung beispielsweise Steuerbefehle verstanden werden, die insbesondere durch andere Knoten (des verteilten Datenbanksystems) und/oder durch eines oder mehrere der Geräte bereits ausgeführt sein müssen, bevor die entsprechenden Steuerbefehle ausgeführt werden können. Insbesondere sind für diese vorausgeführten Steuerbefehle entsprechende Bestätigungstransaktionen in dem verteilten Datenbanksystem gespeichert (z. B. in Datenblöcken des verteilten Datenbanksystems), wenn z. B. die vorausgeführten Steuerbefehle durch Geräte oder Knoten erfolgreich ausgeführt wurden. Insbesondere werden bei diesen vorausgeführten oder vorausgesetzten Steuerbefehlen auch die diesen vorausgeführten Steuerbefehlen zugeordneten gerätespezifischen Anforderungen mit überprüft bzw. mit berücksichtigt. Mittels der Ausführungsanforderungen wird insbesondere sichergestellt, dass beispielsweise eine Reihenfolge der Fertigungsschritte beim Erstellen eines Produktes eingehalten wird. Es wird damit beispielsweise erreicht, dass die Fertigungsreihenfolge in sinnvoller Weise eingehalten wird. Es wird z. B. verhindert, dass ein Fertigungsschritt durch einen anderen zerstört wird, nur weil die Fertigungsreihenfolge nicht eingehalten wurde. Auf ähnliche Weise kann insbesondere auch eine Steuerung von einem Energieversorgungsnetz gesteuert werden, indem z. B. Transformatoren oder Spannungskoppler in der richtigen Reihenfolge eingeschaltet oder mit dem Energieversorgungsnetz verbunden werden. Werden beispielsweise für das Ausführen von Steuerbefehlen bzw. Steuertransaktionen keine vorausgesetzten Steuerbefehle benötigt, können die vorausgesetzten Steuerbefehle leer sein. Beispielsweise können diese mit einer Null belegt sein, einem Leerstring belegt sein oder einem Wert der angibt, dass keine vorausgesetzten Steuerbefehle notwendig sind. Alternativ kann beispielsweise einem Teil der Steuerbefehle keine Ausführungsanforderung zugeordnet sein, wobei insbesondere zumindest einem der Steuerbefehle zumindest eine Ausführungsanforderung zugeordnet ist. Beispielsweise handelt es sich bei den vorausgesetzten Steuerbefehlen um Steuerbefehle, die z. B. von einem Gerät und/oder Knoten in eine vorgegebene mechanische Bewegung und/oder andere physikalische Größen (z. B. Druck oder Temperatur) umgesetzt wurden oder vor der Abarbeitung der Steuerbefehle umgesetzt sein sollen (z. B. für ein Vorbereiten eines Werkstückes). Mit den vorausgesetzten Steuerbefehlen (sofern diese erfolgreich ausgeführt) wurden dann beispielsweise die Aktoren der Geräte und/oder der Knoten derart angesteuert, dass ein Werkstück in den Zustand bzw. Fertigungszustand versetzt wurde, dass z. B. eine Weiterverarbeitung möglich ist oder nach der Abarbeitung der vorausgesetzten Steuerbefehle ermöglicht wird. Entsprechend können dann z. B. die entsprechenden Geräten/Knoten mit den Steuerbefehlen der Steuertransaktion derart angesteuert werden, dass die Weiterverarbeitung erfolgt (wenn z. B. die vorausgesetzten Steuerbefehle ausgeführt wurden und für diese insbesondere Bestätigungstransaktionen vorliegen). Mittels der vorausgesetzten Steuerbefehle und der Geräte und/oder Knoten kann beispielsweise auch ein Regelkreis geregelt und/oder gesteuert werden, indem beispielsweise die Bestätigungstransaktionen für ausgeführte/vorausgesetzte Steuerbefehle durch das Steuersystem ausgewertet werden und entsprechende Steuerbefehle als Reaktion auf die Bestätigungstransaktionen erzeugt werden. Bei den vorausgesetzten Steuerbefehlen kann es sich beispielsweise auch um Steuerbefehle handeln, mit denen ein kryptographisches Gerät und/oder Verfahren angesteuert wurde (z. B. eine Nutzerauthentisierung oder Nutzerauthentifizierung).Alternativ oder zusätzlich kann durch die vorausgesetzten Steuerbefehle beispielsweise eine Erfassung von bestimmten Messgrößen (z. B. durch einen Sensor) vorgegeben sein. Beispielsweise wird damit vorgegeben, dass entsprechende Transaktionen mit entsprechenden Messwerten vorgegebene Messwertbereiche oder Schwellwerte einhalten sollen. Die Messwerte können beispielsweise einen Wert einer gemessenen Größe (z. B. 30 °C) und/oder Datum/Uhrzeit der Erfassung und/oder Ort der Erfassung und/oder Sensortyp und/oder weitere Informationen über den Sensor (z. B. Messgenauigkeit).
Insbesondere ist unter "Speichern von Transaktionen in Datenblöcken" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. eine virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "separaten und/oder direkten Kommunikationskanal" kann im Zusammenhang mit der Erfindung beispielsweise eine Datenübertragung (z. B. ein Senden, ein Empfangen, ein Übertragen, ein Bereitstellen oder ein Übermitteln) mittels eines Kommunikationskanals verstanden werden, wie dieser beispielsweise durch das Lightning-Netzwerk zunächst nur für die Übertragung von Kryptowährung realisiert ist [9]. Beispielsweise können über diesen Kanal Transaktionen/Nachrichten schneller verschickt werden und eine Bestätigung über diesen Datenaustausch im verteilten Datenbanksystem gespeichert werden. Damit können beispielsweise wichtige und/oder zeitkritische Steuerbefehle bzw. Steuertransaktionen mit höherer Geschwindigkeit an ein entsprechendes Gerät übertragen werden und dabei z. B. die langsamere Datenübertragung des verteilten Datenbanksystems (z. B. bei der Replikation der Datenblöcke/Transaktionen) vermieden werden. Beispielsweise können für die Erfindung und die genannten Aspekte, Ausführungsbeispiele, Ausführungsformen der Erfindung und ihre Varianten für eine Datenübertragung zwischen einem Gerät (und/oder Knoten) ein separater und/oder direkter Kommunikationskanal aufgebaut werden. Beispielsweise werden bei einem direkten Kommunikationskanal die Transaktionen/Nachrichten direkt zwischen einem Sender (z. B. das (erste) Speichermodul und/oder das (erste) Bestimmungsmodul) und einem Empfänger (z. B. das Gerät, das die Steuerbefehle ausführen soll) ausgetauscht ohne, dass weitere Knoten und/oder Geräte des verteilten Datenbanksystems in diesem Datenaustausch involviert sind. Hingegen können bei einem separaten Kommunikationskanal Knoten und/oder Geräte des verteilten Datenbanksystems in den Datenaustausch involviert sein. Wurde der separate und/oder direkte Kommunikationskanal erfolgreich zwischen dem Sender und dem Empfänger aufgebaut (es wurde also hierdurch insbesondere eine Kommunikationsverbindung etabliert), so können Daten beispielsweise in Form von Transaktionen oder Nachrichten zwischen dem Sender und dem Empfänger ausgetauscht werden. Beispielsweise können die notwendigen Daten für ein Ermitteln der Ausführbarkeit und/oder die Steuertransaktionen zwischen dem Sender und/dem Empfänger ausgetauscht werden. Wird beispielsweise der Kommunikationskanal geschlossen/beendet (also es wird insbesondere eine Kommunikationsverbindung beendet) so wird beispielsweis ein Ergebnis der Datenübertragung z. B. in Form von Transaktionen (z. B. als eine Übertragungsbestätigungstransaktion) in dem verteilten Datenbanksystem gespeichert (z. B. in Datenblöcken des verteilten Datenbanksystems). Das Ergebnis der Datenübertragung kann beispielsweise eine Bestätigung des der Übertragung oder des Empfangs der entsprechenden Transaktionen/Nachrichten sein und/oder ein Analyseergebnis und/oder die letzte übertragene Transaktion/Nachricht, die über den separaten und/oder direkten Kommunikationskanal übertragen wurde bevor der Kommunikationskanal geschlossen wurde. Das Speichern der Transaktion mit dem Ergebnis kann beispielsweise durch den Sender und/oder Empfänger erfolgen. Bei dem Analyseergebnis kann es sich beispielsweise um die Bestätigung der Ausführbarkeit der Steuerbefehle durch ein Gerät handeln, wobei beispielsweise ein entsprechendes Gerät bestätigt hat, dass es die Steuerbefehle ausführen kann. Dies kann beispielsweise wiederum in einer Transaktion (z. B. in einer Ausführbarkeitsbestätigungstransaktion) gespeichert werden und z. B. in den Ausführungsanforderungen (z. B. in den gerätespezifischen Anforderungen) gespeichert werden. Alternativ oder zusätzlich wird die Ausführbarkeitsbestätigungstransaktion in dem verteilten Datenbanksystem gespeichert. Die Ausführbarkeitsbestätigungstransaktion umfasst dabei beispielsweise einen eindeutigen Identifizierer für das Gerät, das in der Lage ist die Steuerbefehle auszuführen bzw. die entsprechenden Ausführungsanforderungen erfüllt. Alternativ oder zusätzlich umfasst die Ausführbarkeitsbestätigungstransaktion beispielsweise Daten über die Ausführung z. B. wie gut bzw. zu welchem Grad die Ausführungsanforderungen erfüllt werden (z. B. wie schnell die Steuerbefehle abgearbeitet sind, wann diese sicher abgearbeitet sind, wie genau oder präzise die Steuerbefehle ausgeführt werden - beispielsweise beim Ausführen von Fertigungssteuerbefehlen). Alternativ oder zusätzlich umfasst die Ausführbarkeitsbestätigungstransaktion beispielsweise gerätespezifische Daten des entsprechenden Gerätes, die für die Ausführung der Steuerbefehle relevant sind, wobei z. B. die gerätespezifische Daten von dem entsprechenden Gerät zum Zeitpunkt der Bestätigung der Ausführbarkeit durch das Gerät ermittelt wurden. Dabei erfolgt z. B. die Bestätigung der Ausführbarkeit und die Ermittlung der gerätespezifischen Daten (in etwa) zum gleichen Zeitpunkt - beispielsweise innerhalt eines Zeitfensters von wenigen Sekunden oder Minuten. Beispielsweise können die Daten der Ausführbarkeitsbestätigungstransaktion auch zwischen dem Sender und dem Empfänger ausgetauscht worden sein, bevor die Ausführbarkeitsbestätigungstransaktion z. B. in dem verteilten Datenbanksystem gespeichert wird. Die Ausführbarkeitsbestätigungstransaktion kann beispielsweise noch kryptographisch geschützt sein (z. B. kann diese verschlüsselt sein oder durch eine Transaktionsprüfsumme geschützt sein). Auch können beispielsweise die Steuertransaktionen auf analoge Weise an das entsprechende Gerät übertragen werden, das die Steuerbefehle ausfühlen soll bzw. kann. Hierzu kann beispielsweise ein weiterer separater und/oder direkter Kommunikationskanal zwischen den Sender und dem Empfänger aufgebaut werden. Alternativ der oben genannte Kommunikationskanal beispielsweise weiterverwendet werden. Über den entsprechenden Kommunikationskanal werden dann beispielsweise die entsprechenden Steuertransaktionen an das entsprechende Gerät übertragen. Wird beispielsweise der Kommunikationskanal wieder geschlossen/beendet, wenn die Übertragung (erfolgreich) abgeschlossen wurde, wird das Ergebnis der Übertragung z. B. als eine Übertragungsbestätigungstransaktion in dem verteilten Datenbanksystem gespeichert. Auch kann beispielsweise die zuletzt über den Kommunikationskanal ausgetauschte Nachricht in der Übertragungsbestätigungstransaktion gespeichert werden (z. B. falls der Kommunikationskanal unterbrochen wird) und die Übertragungsbestätigungstransaktion z. B. dann im verteilten Datenbanksystem gespeichert werden. Diese zuletzt ausgetauschte Nachricht kann beispielsweise verwendet werden, um bei einem erneuten Aufbau des Kommunikationskanals den Datenaustausch bzw. die Datenübertragung fortzusetzen. Die Übertragungsbestätigungstransaktion kann beispielsweise auch kryptographisch geschützt sein. Die Übertragungsbestätigungstransaktion kann beispielsweise die Steuerbefehle und/oder die Steuertransaktion und/oder die letzte ausgetauschte Nachricht zwischen dem Sender und dem Empfänger umfassen. Eine Fortsetzung des Datenaustausches bzw. der Datenübertragung kann beispielsweise auch für andere Datenübertragungen genutzt werden und ist nicht speziell auf die Datenübertragung bzw. den Datenaustausch von Steuertransaktionen beschränkt.

Der separate und/oder direkte Kommunikationskanal ist dahingehend vorteilhaft um eine Übertragungsgeschwindigkeit und/oder Übertragungslatenzzeit zu verbessern. Es ist beispielsweise auch ein Hybridverfahren möglich, indem beispielsweise ein entsprechender Kommunikationskanal für zeitkritische Steuerbefehle (z. B. mit hoher Priorität) genutzt wird. Beispielsweise kann anhand der Ausführungsanforderungen (z. B. es sind zeitkritische Steuerbefehle oder Steuerbefehle für eine Echtzeitanwendung) bestimmt werden, ob es sich um entsprechende Steuerbefehle handelt, die über einen entsprechenden separaten Kommunikationskanal übertragen werden sollen. Alternativ oder zusätzlich kann das (erste) Bestimmungsmodul beispielsweise beim bestimmen der Ausführungsanforderungen entsprechende Übertragungsanforderungen für eine Datenübertragung der Steuertransaktionen bestimmen. Die Übertragungsanforderungen können beispielsweise in den Ausführungsanforderungen gespeichert werden. Anhand der Übertragungsanforderungen kann dann beispielsweise das Speichermodul ermitteln, ob die Steuertransaktionen über eine Übertragung an das entsprechende Gerät in dem verteilten Datenbanksystem gespeichert werden oder ob der separate und/oder direkte Kommunikationskanal für eine Datenübertragung an das entsprechende Gerät genutzt wird. Die Datenübertragung kann dann beispielsweise durch das (erste) Speichermodul erfolgen, das hierzu z. B. ein entsprechendes Kommunikationsmodul (z. B. eine Netzwerkschnittstelle) umfasst.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" kann im Zusammenhang mit der Erfindung insbesondere ein Ausführen eines Programmcodes (z. B. der Steuerbefehle oder eines Smart-Contracts) in einem Prozess durch das verteilte Datenbanksystem bzw. deren Infrastruktur verstanden werden.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten verbunden. Dies bedeutet insbesondere, dass (alle) Kanten (immer) die gleiche Richtung haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Bei einem verteilten Datenbanksystem kann es sich beispielsweise auch um ein verteiltes Kommunikationssystem zum Datenaustausch oder ein Peer 2 Peer Kommunikationssystem oder eine Peer 2 Peer Applikation handeln. Dies kann beispielsweise ein Netzwerk oder ein Peer-2-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blockkette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreift und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart-Contracts erfolgen, der insbesondere in einer Transaktion des verteilten Datenbanksystems gespeichert ist. Ein Gerät oder Knoten kann beispielsweise einen Aktor umfassen. Bei einem Gerät oder Knoten kann es sich beispielsweise auch um ein mechatronisches Gerät oder System handeln, wobei ein mechatronisches Gerät/System beispielsweise ein Aktor und/oder ein lineartechnisches Gerät ist. Ein lineartechnisches Gerät ist beispielsweise ein Gerät zur Ausführung translativer Bewegungen. Bei einem entsprechenden Gerät kann es sich beispielsweise auch um ein Antriebssystem handeln. Bei einem Gerät oder Knoten kann es sich beispielsweise kryptographisches Gerät/Knoten handeln (z. B. zum Durchführen einer Nutzerauthentisierung oder Nutzerauthentifizierung).

Unter "digitalen Zwilling" (engl. Digital Twin) kann im Zusammenhang mit der Erfindung beispielsweise ein digitales Abbild, insbesondere in Form eines Datenmodells oder einer Datenstruktur, eines realen Produkts, (technischen) Gegenstandes oder eines (physikalischen) Objektes verstanden werden. Dies sind z. B. (elektrische /elektromechanische /elektronische) Geräte, Windturbine, oder Großanlagen wie Offshore-Plattformen. Insbesondere ist der Begriff digitaler Zwilling auch in den folgenden Patentanmeldungen erläutert: WO2016/141998 oder PCT/EP2016/064785. Insbesondere kann ein digitaler Zwilling anhand von Daten des Gegenstandes der abgebildet wird, aktualisiert werden. Diese entsprechenden Daten können beispielsweise durch Sensoren erfasst werden und dann den digitalen Zwilling aktualisieren. Dies kann beispielsweise in Echtzeit, periodisch, manuell gesteuert oder zu vorgegebenen Zeitpunkten erfolgen. Unter einem primären digitalen Zwilling kann beispielsweise eine sehr detaillierte digitale Abbildung eines Gegenstandes verstanden werden, die insbesondere eine große Datenmenge umfasst und beispielsweise hunderte oder tausende Datensätze umfasst. Insbesondere kann ein digitaler Zwilling ein Steuermodul (z. B. Steuersoftware) oder Steuersystem (z. B. ein Überwachungssystem des Gegenstandes, das durch den digitalen Zwilling abgebildet wird) umfassen, sodass beispielsweise der digitale Zwilling Steueraktionen (z. B. kann der primäre digitale Zwilling Transaktionen mit aktualisierten Daten in die Blockkette einfügen oder seine Datenintegrität anhand der Blockkette selbständig prüfen) durchführen kann. Insbesondere können der primäre digitale Zwilling oder ein ausgewählter (oder sekundärer) digitaler Zwilling, der einen ausgewählten Teil der Daten des primären digitalen Zwillings umfasst, z. B. mittels der Erfindung (z. B. dem Steuersystem und/oder dem verteilten Datenbanksystem und/oder dem ersten verteiltes Datenbanksystem) realisiert werden. Dabei ist beispielsweise ein digitaler Zwilling (z. B. der primäre digitale Zwilling und/oder der sekundäre digitale Zwilling) ein erfindungsgemäßes Steuersystem und/oder ein erfindungsgemäßes verteiltes Datenbanksystem und/oder ein erfindungsgemäßes erstes verteiltes Datenbanksystem bzw. ein digitaler Zwilling ist z. B. als einer dieser erfindungsgemäßen Gegenstände (oder eine Kombination von diesen) ausgebildet.

Mit der Erfindung ist es insbesondere möglich eine dezentrale Infrastruktur zur Ausführung von Steuerbefehlen zu realisieren. Insbesondere lässt sich dadurch eine Steuerung der Geräte im Internet der Dinge dezentral durchführen, selbst wenn sich einzelne Betreiber von Geräten und/oder Gerätegruppen der Geräte nicht vertrauen. Insbesondere können dabei die Geräte als Knoten des verteilten Datenbanksystems ausgebildet sein und es kann beispielsweise zum Ausführen oder Abarbeiten der Steuerbefehle dynamisch durch das verteilte Datenbanksystem bzw. ein entsprechender Knoten oder ein entsprechendes Gerät gefunden werden, das die geforderten Ausführungsanforderungen zum Ausführen der Steuerbefehle erfüllt. Ein unrechtmäßiges Bevorzugen eines Knotens (z. B. durch Betrug/Bestechung) kann deutlich erschwert werden, wenn beispielsweise eine blockkettenbasierte Implementierung des verteilten Datenbanksystems genutzt wird, da ein Vertrauensschutz bzw. ein Manipulationsschutz analog zu Bitcoin bei den Steuertransaktionen bzw. Bestätigungstransaktionen realisiert wird. Insbesondere kann auf eine zentrale Instanz, die eine Authentisierung der Knoten vornimmt, verzichtet werden. Wird beispielsweise eine Realisierung des Datenbanksystems mittels einer Blockkette, die insbesondere eine kryptographische Währung wie Bitcoin implementiert, so kann beispielsweise auf einfache und effiziente Weise eine Abrechnung für eine Abarbeitung der Steuerbefehle einem Auftraggeber, der die Steuerbefehle eingestellt hat bzw. der eine Befehlsfolge (aus denen z. B. die Steuerbefehle hergeleitet sind) bereitgestellt hat, abgerechnet werden.

Zusätzlich kann beispielsweise die Sicherheit beim Betreiben des verteilten Datenbanksystems (z. B. einer Blockkette) erhöht werden, da insbesondere für die Ausführung der Steuerbefehle eine zusätzliche Prüfung eingeführt wurde. Mit anderen Worten werden insbesondere ungeprüfte Transaktionen bzw. Steuerbefehle in geprüfte Transaktionen konvertiert, wobei die Prüfung beispielsweise anhand von Knoten- oder Geräteeigenschaften von Geräten oder Knoten (z. B. den gerätespezifischen Daten) erfolgt, welche die Steuerbefehle ausführen sollen.

Es ist beispielsweise auch denkbar, dass mittels des Verfahrens die Auszahlung von Bargeld an Geldautomaten verbessert bzw. sicherer gemacht wird, wenn der Geldautomat beispielsweise ein Knoten des verteilten Datenbanksystems ist oder über einen Knoten des verteilten Datenbanksystems oder eine andere Schnittstelle auf die entsprechenden Steuertransaktionen des verteilten Datenbanksystems zugreift oder diese abruft.

Das Bestimmungsmodul kann dabei insbesondere unterschiedlich komplex implementiert werden. Beispielsweise können die Ausführungsanforderungen durch eine zentrale Policy vorgegeben werden oder die Ausführungsanforderungen werden durch das Bestimmungsmodul bestimmt und danach den Steuerbefehlen zugeordnet. Sind die Ausführungsanforderungen z. B. vorgegeben, kann das Bestimmungsmodul derart ausgebildet sein, dass insbesondere den jeweiligen Steuerbefehlen die entsprechenden Ausführungsanforderungen zugeordnet werden, die für deren Ausführung durch die Geräte notwendig sind.

Beispielsweise können die Transaktionen je nach Implementierung entweder direkt in den Datenblöcken des verteilten Datenbanksystems gespeichert werden oder direkt dem verteilten Datenbanksystem gespeichert werden. Alternativ oder zusätzlich können die Ausführungsanforderungen beispielsweise auch noch weitere für die Ausführung zu berücksichtigende Vorgaben umfassen. Dies kann beispielsweise eine Vorgabe sein, dass eine bestimmte Gebühr entrichtet sein muss, damit ein Steuerbefehl von einem entsprechenden Knoten oder Gerät abgearbeitet werden kann. Dies kann beispielsweise in den gerätespezifischen Anforderungen gespeichert werden, indem das Gerät für seine Nutzung bzw. für die Abarbeitung von Steuerbefehlen eine Entrichtung einer vorgegeben Gebühr voraussetzt. Die Entrichtung der vorgegeben Gebühr kann beispielsweise mittels kryptographischer Währungen erfolgen, die vorzugsweise ebenfalls in Transaktionen des verteilten Datenbanksystems dokumentiert bzw. gespeichert werden. Ob diese Vorgaben erfüllt sind (z. B. Gebührenentrichtung) kann z. B. ebenfalls durch das Bestimmungsmodul überprüft werden, indem z. B. überprüft wird, ob Transaktionen für eine entsprechende Entrichtung der Gebühren im verteilten Datenbanksystem verfügbar sind. Alternativ kann beispielsweise auch ein Kontostand bei einer Bank überprüft werden, ob eine entsprechende Gebührenentrichtung durchgeführt wurde. Sind diese Vorgaben der Ausführungsanforderungen z. B. für entsprechende Steuerbefehle erfüllt, können diese weiterverarbeitet werden und wie bereits erläutert in Steuertransaktionen gespeichert werden.

Mit anderen Worten werden mittels der Erfindung beispielsweise zunächst die Ausführungsanforderungen für die Steuerbefehle bestimmt, danach wird vorzugsweise ermittelt, ob die Steuerbefehle entsprechend der Ausführungsanforderungen (oder einem ersten Teil der Ausführungsanforderungen) durch entsprechende Geräte und/oder ausführbar sind. Alternativ oder zusätzlich wird beispielsweise von einem entsprechenden Gerät überprüft (z. B. nach einem Empfang der Steuertransaktionen), ob die entsprechenden Steuerbefehle einer entsprechenden Steuertransaktion durch das entsprechende Gerät ausführbar sind. Hierzu werden z. B. die den Steuerbefehlen zugeordneten Ausführungsanforderungen durch das Gerät überprüft (z. B. durch ein überprüfen des/eines zweiten Teils der Ausführungsanforderungen).

Bei einer ersten Ausführungsform des Steuersystems sind die vorausgesetzten Steuerbefehle bereits ausgeführte Steuerbefehle, für die eine Bestätigung über deren Ausführung in Bestätigungstransaktionen der Datenblöcke des verteilten Datenbanksystems gespeichert ist. Alternativ sind die die vorausgesetzten Steuerbefehle bereits ausgeführte Steuerbefehle, für die eine Bestätigung über deren Ausführung in Bestätigungstransaktionen des verteilten Datenbanksystems gespeichert ist.

Das Steuersystem ist dahingehend vorteilhaft, um insbesondere eine Reihenfolge bei der Ausführung bzw. Abarbeitung der Steuerbefehle durch das entsprechende Gerät mittels der vorausgesetzten Steuerbefehle vorzugeben. Insbesondere können die vorausgesetzten Steuerbefehle, Steuerbefehle der gleichen Befehlsfolge sein, die insbesondere zeitlich vor den durch das entsprechende Gerät (aktuell) auszuführenden Steuerbefehlen ausgeführt sein müssen. Die vorausgesetzten Steuerbefehle waren dabei insbesondere ebenfalls in Steuertransaktionen gespeichert, die wiederum in Datenblöcken (also einen Datenblock oder mehreren Datenblöcken) des verteilten Datenbanksystems gespeichert sind.

Bei weiteren Ausführungsformen des Steuersystems ist durch die Ausführungsanforderungen eine Abarbeitung der vorausgesetzten Steuerbefehle vorgegeben, bevor weitere Steuerbefehle abgearbeitet werden.

Das Steuersystem ist dahingehend vorteilhaft, um insbesondere bei der Ausführung bzw. Abarbeitung der Steuerbefehle durch das entsprechende Gerät sicherzustellen, dass beispielsweise eine Fertigung von einem Produkt schrittweise erfolgt. Dies ist insbesondere vorteilhaft, wenn sichergesellt werden soll, dass vorgegebene oder ausgewählte Steuerbefehle bzw. Fertigungsschritte von einem vorgegebenen oder ausgewählten Gerät ausgeführt werden.

Bei weiteren Ausführungsformen des Steuersystems ist durch die Ausführungsanforderungen eine Reihenfolge einer Abarbeitung der Steuerbefehle eines Datenblocks oder verschiedener Datenblöcke vorgegeben. Alternativ ist durch die Ausführungsanforderungen eine Reihenfolge einer Abarbeitung der Steuerbefehle und/oder ist durch die Ausführungsanforderungen eine Reihenfolge einer Abarbeitung der Steuertransaktionen des verteilten Datenbanksystems vorgegeben.

Das Steuersystem ist dahingehend vorteilhaft, um insbesondere eine Reihenfolge bei der Ausführung bzw. Abarbeitung der Steuerbefehle durch das entsprechende Gerät mittels der vorausgesetzten Steuerbefehle vorzugeben. Insbesondere können die vorausgesetzten Steuerbefehle, Steuerbefehle der gleichen Befehlsfolge sein, die insbesondere vor den durch das entsprechende Gerät (aktuell) auszuführenden Steuerbefehlen ausgeführt sein müssen. Die vorausgesetzten Steuerbefehle werden dabei insbesondere ebenfalls in Steuertransaktionen gespeichert, die wiederum in Datenblöcken (also einen Datenblock oder mehreren Datenblöcken) des verteilten Datenbanksystems gespeichert sind.

Bei weiteren Ausführungsformen des Steuersystems sind durch die Ausführungsanforderungen Abhängigkeiten gegenüber anderen Steuerbefehlen eines Datenblocks oder verschiedener Datenblöcke einer Abarbeitung der Steuerbefehle vorgegeben. Alternativ sind durch die Ausführungsanforderungen Abhängigkeiten gegenüber anderen Steuerbefehlen einer Abarbeitung der Steuerbefehle vorgegeben. Alternativ sind durch die Ausführungsanforderungen Abhängigkeiten gegenüber anderen Steuerbefehlen anderer Steuertransaktionen einer Abarbeitung der Steuerbefehle der Steuertransaktionen vorgegeben.

Das Steuersystem ist dahingehend vorteilhaft, um insbesondere eine Reihenfolge bei der Ausführung bzw. Abarbeitung der Steuerbefehle durch das entsprechende Gerät mittels der vorausgesetzten Steuerbefehle vorzugeben. Insbesondere können die vorausgesetzten Steuerbefehle, Steuerbefehle der gleichen Befehlsfolge sein, die insbesondere vor den durch das entsprechende Gerät (aktuell) für auszuführende Steuerbefehle ausgeführt sein müssen. Die vorausgesetzten Steuerbefehle waren dabei insbesondere ebenfalls in Steuertransaktionen gespeichert, die wiederum in Datenblöcken (also einen Datenblock oder mehreren Datenblöcken) des verteilten Datenbanksystems gespeichert sind.

Bei weiteren Ausführungsformen des Steuersystems sind durch die Ausführungsanforderungen Prioritäten für eine Abarbeitung der Steuerbefehle vorgegeben.

Das Steuersystem ist dahingehend vorteilhaft, um insbesondere bei der Ausführung bzw. Abarbeitung der Steuerbefehle durch das entsprechende Gerät vorgegebene Steuerbefehle zu bevorzugen bzw. zu priorisieren. Bevorzugt bedeutet dabei insbesondere, dass die entsprechenden Steuerbefehle schneller oder vor anderen nicht-bevorzugten Steuerbefehlen abgearbeitet werden (z. B. durch die Geräte oder das verteilte Datenbanksystem). Diese zu bevorzugenden Steuerbefehle oder kurz bevorzugten Steuerbefehle können beispielsweise wichtige/kritische Steuerbefehle sein, die unmittelbar ausgeführt werden müssen, um beispielsweise Geräteschäden, Infrastrukturschäden oder Personenschäden zu vermeiden. Stellt beispielsweise ein Überwachungsgerät, das insbesondere ebenfalls ein Knoten des verteilten Datenbanksystems ist, fest, dass das entsprechende Gerät, z. B. ein Fertigungsgerät, überhitzt oder eine Person gefährlich nahe an dem Gerät ist, so kann dieses Überwachungsgerät beispielsweise eine entsprechende Steuertransaktion mit Steuerbefehlen und Ausführungsanforderungen (z. B. umfassen die Ausführungsanforderungen die Priorität) zum Abschalten des Gerätes in Datenblöcken des verteilten Datenbanksystems einstellen. Das verteilte Datenbanksystem bzw. dessen Infrastruktur wertet diese Steuertransaktion aus und übermittelt vorzugsweise an das abzuschaltende Gerät die Steuertransaktion.

Bei weiteren Ausführungsformen des Steuersystems ist durch die Ausführungsanforderungen ein Zeitlimit vorgegeben, bis zu dem Steuerbefehle abzuarbeiten sind.

Das Steuersystem ist dahingehend vorteilhaft, um insbesondere vorgegebenen oder ausgewählten Steuerbefehlen ein Zeitlimit mittels der Ausführungsanforderungen vorzugeben, bis zu dem die Steuerbefehle durch das entsprechende Gerät abzuarbeiten sind. Wird dieses Zeitlimit beispielsweise überschritten, so kann insbesondere durch das Überprüfungsmodul ein Steuersignal bereitgestellt werden, um auf das Überschreiten des Zeitlimits zu reagieren. Mittels des Steuersignals kann dann beispielsweise ein Fertigungsmitarbeiter, ein Servicetechniker oder ein Alarmsignal automatisiert informiert bzw. angesteuert werden. Es kann beispielsweise auch der Fertigungsprozess neu gestartet werden.

Bei weiteren Ausführungsformen des Steuersystems umfasst das Steuersystem einen Optimierer, der eine Ausführung der Steuerbefehle durch die Geräte anhand eines vorgegebenen Kriteriums optimiert.

Das Steuersystem ist dahingehend vorteilhaft, um insbesondere einen Fertigungsprozess nach den vorgegeben Kriterien zu optimieren. Die vorgegebenen Kriterien können beispielsweise die Fertigungszeit, die verursachten Kosten oder die aufzuwendende Energie sein. Beispielsweise kann der Optimierer eine Befehlsfolge in Steuerbefehle zerlegen, die wiederum in den Steuertransaktionen gespeichert sind. Dabei zerlegt der Optimierer die Befehlsfolge in die Steuerbefehle anhand des vorgegebenen Kriteriums. Ist beispielsweise das Kriterium die Fertigungszeit bei der Produktion eines Produktes zu optimieren (z. B. Fertigungszeit für das Produkt möglichst gering zu halten), wird die Befehlsfolge derart zerlegt, dass die Einzelkomponenten parallel von mehreren Geräten hergestellt werden - also die entsprechenden Steuerbefehle in Steuertransaktionen von diesen abgearbeitet werden. Ist beispielsweise das Kriterium, die Fertigungskosten bei der Produktion eines Produktes zu optimieren, wird die Befehlsfolge derart zerlegt, dass die Einzelkomponenten seriell von einem Gerät (z. B. dem entsprechenden Gerät) oder möglichst wenigen Geräten hergestellt werden - also die entsprechenden Steuerbefehle in Steuertransaktionen von den entsprechenden abgearbeitet werden. Um dies zu steuern, werden beispielsweise durch den Optimierer die entsprechenden Informationen an das Bestimmungsmodul übergeben, sodass das Bestimmungsmodul diese Informationen in den Ausführungsanforderungen hinterlegt. Der Optimierer kann dabei beispielsweise ein separates Modul sein oder ein integraler Teil des Bestimmungsmoduls sein. Alternativ kann der Optimierer beispielsweise die Optimierung anhand der Ausführungsanforderungen vornehmen oder die Ausführungsanforderungen sogar selbst erstellen und dem Bestimmungsmodul bereitstellen.

Bei weiteren Ausführungsformen des Steuersystems ist das verteilte Datenbanksystem das erste verteilte Datenbanksystem oder eine ihrer Ausführungsformen.

Das Steuersystem ist dahingehend vorteilhaft, um insbesondere ein solches verteiltes Datenbanksystem für bestimmte Geräte oder ein bestimmtes Netzwerk zu nutzen. Dies ist insbesondere dadurch vorteilhaft, um zu vermeiden, dass nicht mehr benötigte Datenblöcke ein Teil des Steuersystems sind.

Bei weiteren Ausführungsformen des Steuersystems ist das verteilte Datenbanksystem eine Blockkette und die Datenblöcke sind Blöcke der Blockkette, oder das verteilte Datenbanksystem ist eine Peer-2-Peer Datenbanksystem.

Das Steuersystem ist dahingehend vorteilhaft, um insbesondere eine dezentrale Steuersysteminfrastruktur zu realisieren. Zudem kann insbesondere ein solches Steuersystem realisiert werden, selbst wenn sich die Betreiber der Geräte nicht vertrauen.

Bei weiteren Ausführungsformen des Steuersystems sind die Steuerbefehle durch ein entsprechendes Gerät ausführbar, wenn Bestätigungstransaktionen für die vorausgesetzten Steuerbefehle der jeweiligen Ausführungsanforderungen der jeweiligen Steuertransaktion in dem verteilten Datenbanksystems verfügbar sind. Mit anderen Worten sind beispielsweise für die vorausgesetzten Steuerbefehle der entsprechenden Ausführungsanforderungen Bestätigungstransaktionen verfügbar, indem beispielsweise das verteilte Datenbanksystem diese Bestätigungstransaktionen bereitstellt (sodass diese z. B. von einem/dem Gerät abgerufen werden können). Beispielsweise sind diese Bestätigungstransaktionen in dem verteilten Datenbanksystem gespeichert.

Bei weiteren Ausführungsformen des Steuersystems sind die Datenblöcke über eine kryptographische Hashfunktion (H) miteinander verkettet.

Bei weiteren Ausführungsformen des Steuersystems umfasst das Steuersystem oder das Bestimmungsmodul ein Aktivitätsmodul, wobei das Aktivitätsmodul dazu eingerichtet ist, die Aktivität des Steuersystems und/oder des Bestimmungsmoduls anzuzeigen und/oder zu dokumentieren.

Das Steuersystem ist dahingehend vorteilhaft, um insbesondere die Aktivität beispielsweise durch eine Statuslampe, ein Heartbeat Signal oder ein Steuersignal im Betrieb durch einen Administrator überprüfbar zu machen. Alternativ kann das Aktivitätsmodul beispielsweise Informationen in eine Datei schreiben, um beispielsweise Systemzustände oder Neustarts von Knoten oder Modulen oder des Bestimmungsmoduls zu dokumentieren.

Bei weiteren Ausführungsformen des Steuersystems bestimmt das Bestimmungsmodul die Ausführungsanforderungen und/oder bestimmt welcher der Steuerbefehle in Steuertransaktionen gespeichert wird, wobei das Bestimmen welche Steuerbefehle in Steuertransaktionen gespeichert werden anhand der Ausführungsanforderungen erfolgt. Das Speichern erfolgt vorzugsweise, wenn die Ausführbarkeit anhand der Ausführungsanforderungen bestätigt bzw. erfolgreich ermittelt werden konnte.

Dies ist dahingehend vorteilhaft, um insbesondere durch die Geräte überprüfen zu lassen und/oder den Geräten eine Überprüfung zu ermöglichen, ob und wann die vorausgesetzten Steuerbefehle der jeweiligen Ausführungsanforderungen abgearbeitet sind bzw. die Ausführungsanforderungen erfüllt sind.

Gemäß einem weiteren Aspekt betrifft die Erfindung eine Vorrichtung für ein Steuersystem mit einem verteilten Datenbanksystem zum Steuern und/oder Überwachen von Geräten aufweisend:
- ein erstes Bestimmungsmodul zum Bestimmen von Ausführungsanforderungen für eine Ausführung von Steuerbefehlen durch die Geräte oder Knoten, wobei
   - in den Ausführungsanforderungen gerätespezifische Anforderungen und/oder vorausgesetzte Steuerbefehle gespeichert sind.

Die Vorrichtung ist dahingehend vorteilhaft, um insbesondere die Ausführung in einem Netzwerk von Geräten oder Knoten (z. B. Fertigungsroboter, Steuersysteme für ein Energieverteilungsnetzwerk) zu verbessern. Zusätzlich kann beispielsweise die Sicherheit beim Betreiben des verteilten Datenbanksystems (z. B. einer Blockkette) erhöht werden. Mit anderen Worten werden durch die Vorrichtung insbesondere ungeprüfte Transaktionen in geprüfte Transaktionen konvertiert, wobei die Prüfung beispielsweise anhand von Knoten- oder Geräteeigenschaften von Geräten oder Knoten (z. B. anhand von gerätespezifischen Daten) erfolgt, welche die Steuerbefehle ausführen sollen.

Bei weiteren Ausführungsformen der Vorrichtung umfasst die Vorrichtung oder das Bestimmungsmodul einen Optimierer, wobei der Optimierer die Ausführung der Steuerbefehle durch die Geräte anhand eines vorgegebenen Kriteriums optimiert.

Bei weiteren Ausführungsformen der Vorrichtung umfasst die Vorrichtung oder das Bestimmungsmodul ein erstes Zerlegemodul, wobei das erste Zerlegemodul dazu eingerichtet ist, eine Befehlsfolge in die entsprechenden Steuerbefehle zu zerlegen. Die entsprechenden Steuerbefehle werden beispielsweise dem Steuersystem bzw. dem ersten Bestimmungsmodul bereitgestellt. Vorzugsweise werden die entsprechenden Steuerbefehle über das Bestimmungsmodul dem Steuersystem bereitgestellt, wobei das Steuersystem vorzugsweise die Steuerbefehle mittels des verteilten Datenbanksystems an die entsprechenden Knoten oder Geräte übermittelt.

Bei weiteren Ausführungsformen der Vorrichtung umfasst die Vorrichtung oder das Bestimmungsmodul ein Aktivitätsmodul, wobei das Aktivitätsmodul dazu eingerichtet ist, die Aktivität der Vorrichtung und/oder des Bestimmungsmoduls anzuzeigen oder zu dokumentieren.

Die Vorrichtung ist dahingehend vorteilhaft, um insbesondere die Aktivität beispielsweise durch eine Statuslampe, ein Heartbeat Signal oder ein Steuersignal im Betrieb durch einen Administrator überprüfbar zu machen. Alternativ kann das Aktivitätsmodul beispielsweise Informationen in eine Datei schreiben, um beispielsweise Systemzustände oder Neustarts von Knoten oder Modulen oder des Bestimmungsmoduls zu dokumentieren.

Gemäß einem weiteren Aspekt betrifft die Erfindung ein Bestimmungsmodul für ein verteiltes Datenbanksystem oder für ein Steuersystem mit einem verteilten Datenbanksystem zum Steuern und/oder Überwachen von Geräten aufweisend:
- eine erste Schnittstelle zum Empfangen oder Abrufen von Steuerbefehlen;
- eine erste Evaluierungseinheit zum Bestimmen von Ausführungsanforderungen für eine Ausführung von Steuerbefehle durch Knoten eines verteilten Datenbanksystems oder durch Geräte, wobei
   - die Ausführungsanforderungen anhand von gerätespezifischen Anforderungen und/oder vorausgesetzte Steuerbefehle bestimmt werden, die z. B. für die Steuerbefehle ermittelt wurden (oder ermittelt worden sind),
   - das verteilte Datenbanksystem beispielsweise eine Blockkette ist.

Das Bestimmungsmodul ist dahingehend vorteilhaft, um insbesondere die Ausführung von Steuerbefehlen von Geräten oder Knoten (z. B. Fertigungsroboter, Steuersysteme für ein Energieverteilungsnetzwerk, Bankterminals, Geldautomaten, Geldtransfers zwischen Banken) zu verbessern, die über ein Netzwerk miteinander verbunden sind.

Zusätzlich kann beispielsweise die Sicherheit beim Betreiben einer verteilten Infrastruktur (z. B. ein verteiltes Datenbanksystem mit Geräten und/oder Knoten bzw. mit Geräten, die auf das verteilte Datenbanksystem zugreifen) erhöht werden, die ganz oder teilweise mittels eines verteilten Datenbanksystems (z. B. einer Blockkette) implementiert ist. Insbesondere ist der Begriff "Steuerbefehle" breit zu verstehen. Hierbei kann es sich beispielsweise zusätzlich zu der oben genannten Definition auch um Transaktionen handeln, die durch ein Gerät (z. B. einen Knoten einer Blockkette oder ein Gerät außerhalb der Blockkette, z. B. Gerät D) ausgeführt werden sollen. Mit anderen Worten werden durch die Vorrichtung insbesondere ungeprüfte Transaktionen in geprüfte Transaktionen konvertiert, wobei die Prüfung beispielsweise anhand der gerätespezifischen Anforderungen und gerätespezifischen Daten erfolgt, welche die Steuerbefehle ausführen sollen.

Mittels der Erfindung können beispielsweise geforderte gerätespezifische Anforderungen für die Ausführung der Steuerbefehle am Gerät sichergestellt werden. Dabei können die gerätespezifischen Anforderungen beispielsweise auch Sicherheitsanforderungen und/oder ortsbezogene Anforderungen (z. B. eine Länderangabe, eine GPS-Angabe oder PLZ) sein, die ein Gerät für die Ausführung der Steuerbefehle erfüllen soll. Oder es kann beispielsweise noch eine bestimmte/vorgegebene Authentisierung und/oder Authentifizierung durch die gerätespezifischen Anforderungen für die Ausführung gefordert werden.

Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert (z. B. bei seiner Heimatbank oder beim Onlinebanking), dass er z. B. nur in vorgegebenen Ländern, z. B. Italien, Frankreich und Österreich, eine Bargeldauszahlung erlaubt, so wird dies in den gerätespezifischen Anforderungen (und somit insbesondere implizit ebenfalls in den Ausführungsanforderungen) gespeichert. Ein Geldautomat in Andorra würde dann ggf. keine Auszahlung erlauben bzw. diese unterbinden. Auch kann beispielsweise durch die Sicherheitsanforderungen eine vorgegebene Authentifizierung und/oder Authentifizierungsmethode des Kunden gefordert sein. Hierzu kann beispielsweise ein Pin für ein Auszahlung eingegeben werden bzw. gefordert sein (was z. B. in den USA nicht zwangsläufig der Fall ist) und/oder eine bestimmte Pin-Länge gefordert sein (z. B. 8 Zeichen) und/oder andere zusätzliche Authentisierungsverfahren gefordert sein (z. B. 2 Faktor-Authentisierung, Mobile-Tan, Google Authenticator).

Alternativ kann das Bestimmungsmodul, z. B. die Evaluierungseinheit, die Steuerbefehle auch weiter analysieren und, wenn beispielsweise das Bestimmungsmodul bzw. die (erste) Evaluierungseinheit bereits feststellt, dass die gerätespezifischen Anforderungen nicht erfüllt sind oder nicht erfüllbar sind (z. B. die Steuerbefehle wurden aus einem nicht freigegebenen Land geschickt oder sind für ein Gerät oder Knoten in einem nicht frei gegeben Land bestimmt), eine Steuertransaktion erstellen, die das entsprechende Gerät oder das System darauf hinweist und vorzugsweise eine Ausführung der Steuerbefehle unterbindet bzw. verbietet. Alternativ kann beispielsweise auch keine Steuertransaktion erzeugt werden und es gibt irgendwann einen Timeout für die Ausführung der Steuerbefehle, z. B. nach einem vorgegebenen Zeitraum. Alternativ oder zusätzlich kann beispielsweise ein Steuersignal bereitgestellt werden, das bei einer Nicht-Ausführbarkeit von Steuerbefehlen z. B. einen Techniker informiert oder ein Warnsignal steuert.

Es wäre beispielsweise auch denkbar, dass Online-Banking auf diese Weise abgesichert wird, indem Sicherheitsanforderungen und/oder ortsbezogene Anforderungen des Rechners (also das Gerät, das Steuerbefehle verschickt) überprüft wird und ob die Auszahlung durch ein (anderes) Gerät erlaubt ist.

Zusätzlich kann das Bestimmungsmodul beispielsweise noch ein erstes Zuordnungsmodul und/oder ein erstes Speichermodul und/oder weitere Module umfassen, so wie dies in den Ausführungsbeispielen erläutert wurde. Die Knoten oder Geräte können dann beispielsweise ein Überprüfungsmodul und/oder ein Ausführungsmodul umfassen, so wie dies in den Ausführungsbeispielen bzw. Ausführungsformen erläutert wurde. Auch lassen sich insbesondere andere Merkmale der anderen Aspekte und Ausführungsbeispiele der Erfindung auf diesen Aspekt der Erfindung übertragen.

Die gerätespezifischen Anforderungen für Knoten oder Geräte können beispielsweise auch nutzerbezogen sein oder nutzerspezifische Anforderungen umfassen. Beispielsweise kann ein erster Nutzer in den ihm zugeordneten gerätespezifischen Anforderungen eine niedrige Präzision bei der Fertigung eines Werkstückes fordern. Beispielsweise kann dann ein zweiter Nutzer in den ihm zugeordneten gerätespezifischen Anforderungen eine höhere Präzision bei der Fertigung eines Werkstückes fordern. Auf diese Weise können z. B. auch Sicherheitsanforderungen nutzerbezogen gespeichert werden. Es ist beispielsweise auch denkbar, dass bestimmten Typen oder Arten von Steuerbefehlen - nutzerbezogen oder nicht - gerätespezifische Anforderungen zugeordnet sind, die durch das Bestimmungsmodul berücksichtigt werden. Beispielsweise kann gefordert sein, dass ein Steuerbefehl zum Aufspielen einer Firmware nur durch ein Gerät erfolgt, das vorgegebene Sicherheitsanforderungen erfüllt, um z. B. sicherzustellen, dass nicht ohne weiteres Know-How der Firmware für jeden in einer Fertigungsanlage zugängig ist. Durch diese vorgegebenen Sicherheitsanforderungen kann beispielsweise gefordert sein, dass nur bestimmtes Personal einen Zugriff auf ein entsprechendes Gerät hat oder das Gerät durch ein Passwort und/oder anderen kryptographischen Mechanismen geschützt ist (z. B. Zugriff ist nur durch Einstecken einer Chipkarte und Eingeben einer Pin möglich).

Alternativ oder zusätzlich können die Ausführungsanforderungen beispielsweise auch noch weitere für die Ausführung zu berücksichtigende Vorgaben umfassen. Dies kann beispielsweise eine Vorgabe sein, dass eine bestimmte Gebühr entrichtet sein muss, damit ein Steuerbefehl von einem entsprechenden Knoten oder Gerät abgearbeitet werden kann. Dies kann beispielsweise in den gerätespezifischen Anforderungen und/oder vorausgesetzten Steuerbefehlen gespeichert werden, indem das Gerät für seine Nutzung bzw. für die Abarbeitung von Steuerbefehlen eine Entrichtung einer vorgegeben Gebühr voraussetzt. Die Entrichtung der vorgegeben Gebühr kann beispielsweise mittels kryptographischer Währungen erfolgen, die vorzugsweise ebenfalls in Transaktionen des verteilten Datenbanksystems dokumentiert bzw. gespeichert werden. Ob diese Vorgaben erfüllt sind (z. B. Gebührenentrichtung) kann z. B. ebenfalls durch das Bestimmungsmodul bzw. der Evaluierungseinheit überprüft werden, indem z. B. überprüft wird, ob Transaktionen für eine entsprechende Entrichtung der Gebühren im verteilten Datenbanksystem verfügbar sind. Es kann beispielsweise auch ein Kontostand bei einer Bank überprüft werden, ob eine entsprechende Gebührenentrichtung durchgeführt wurde. Sind diese Vorgaben der Ausführungsanforderungen z. B. für entsprechende Steuerbefehle erfüllt, können diese weiterverarbeitet werden und wie bereits erläutert in Steuertransaktionen gespeichert werden. Alternativ oder zusätzlich kann beispielsweise diese Überprüfung durch das Gerät erfolgen (z. B. das Überprüfungsmodul). Hierzu kann beispielsweise mittels Bestätigungstransaktionen überprüft werden, ob ein entsprechender Geldbetrag transferiert wurde. Ist dies z. B. der Fall, kann beispielsweise ein entsprechendes Gerät die Steuerbefehle aus einer Steuertransaktion abarbeiten/ausführen, wenn auch die restlichen Ausführungsanforderungen erfüllt sind. Die Ausführungsanforderungen können z. B. auch in einem zweistufigen Prozess überprüft werden. Beispielsweise wird ein erster Teil der Ausführungsanforderungen z. B. bereits beim Bestimmen der Ausführungsanforderungen und/oder beim Ermitteln der Ausführbarkeit der Steuerbefehle überprüft. Ein zweiter Teil der Ausführungsanforderungen wird beispielsweise dann von dem Gerät bzw. dem Überprüfungsmodul überprüft. Beispielsweise wird beim Überprüfen des ersten Teils der Ausführungsanforderungen überprüft, ob die Geräte technisch in der Lage sind (z. B. aktuell technisch in der Lage sind) die Steuerbefehle auszuführen. Beispielsweise wird beim Überprüfen des zweiten Teils der Ausführungsanforderungen überprüft, ob z. B. die vorausgesetzten Steuerbefehle bereits ausgeführt wurden oder ob sich das Gerät aktuell die gerätespezifischen Anforderungen erfüllt (z. B. indem überprüft für ob die aktuellen gerätespezifischen Daten die gerätespezifischen Anforderungen erfüllen) .
Das Bestimmungsmodul kann insbesondere unterschiedlich komplex implementiert werden. Beispielsweise können die Ausführungsanforderungen und/oder Übertragungsanforderungen durch eine zentrale Policy vorgegeben werden oder die Ausführungsanforderungen werden durch das Bestimmungsmodul bestimmt und danach den Steuerbefehlen zugeordnet. Sind die Ausführungsanforderungen vorgegeben, kann das Bestimmungsmodul derart ausgebildet sein, dass den jeweiligen Steuerbefehlen die entsprechenden Ausführungsanforderungen zugeordnet werden, die für deren Ausführung durch die Geräte notwendig sind.

Bei weiteren Ausführungsformen des Bestimmungsmoduls umfasst das Bestimmungsmodul einen Optimierer, wobei der Optimierer die Ausführung der Steuerbefehle durch die Geräte anhand eines vorgegebenen Kriteriums optimiert.

Bei weiteren Ausführungsformen des Bestimmungsmoduls sind die Steuerbefehle durch ein entsprechendes Gerät ausführbar, wenn Bestätigungstransaktionen für die vorausgesetzten Steuerbefehle der jeweiligen Ausführungsanforderungen der jeweiligen Steuertransaktion in dem verteilten Datenbanksystems verfügbar sind.

Dies ist dahingehend vorteilhaft, um insbesondere durch die Geräte überprüfen zu lassen und/oder den Geräten eine Überprüfung zu ermöglichen, ob und wann die vorausgesetzten Steuerbefehle der jeweiligen Ausführungsanforderungen abgearbeitet sind bzw. die Ausführungsanforderungen erfüllt sind.

Bei weiteren Ausführungsformen des Bestimmungsmoduls umfasst das Bestimmungsmodul ein erstes Zerlegemodul, wobei das erste Zerlegemodul dazu eingerichtet ist, eine Befehlsfolge in die entsprechenden Steuerbefehle zu zerlegen. Die entsprechenden Steuerbefehle werden beispielsweise dem Steuersystem oder dem ersten Bestimmungsmodul bereitgestellt. Vorzugsweise werden die entsprechenden Steuerbefehle über das Bestimmungsmodul dem Steuersystem bereitgestellt, sodass z. B. das Steuersystem die entsprechenden Steuertransaktionen mit Steuerbefehlen über das verteilte Datenbanksystem an die Knoten oder Geräte übermittelt.

Bei weiteren Ausführungsformen des Bestimmungsmoduls umfasst das Bestimmungsmodul ein Aktivitätsmodul, wobei das Aktivitätsmodul dazu eingerichtet ist, die Aktivität der Vorrichtung und/oder des Bestimmungsmoduls anzuzeigen oder zu dokumentieren.

Das Bestimmungsmodul ist dahingehend vorteilhaft, um insbesondere die Aktivität beispielsweise durch eine Statuslampe, ein Heartbeat Signal oder ein Steuersignal im Betrieb durch einen Administrator überprüfbar zu machen. Alternativ kann das Aktivitätsmodul beispielsweise Informationen in eine Datei schreiben, um beispielsweise Systemzustände oder Neustarts von Knoten oder Modulen oder des Bestimmungsmoduls zu dokumentieren.

Bei weiteren Ausführungsformen des Bestimmungsmoduls umfasst das Bestimmungsmodul einen Konfigurationsspeicher, der gerätespezifische Daten über die Geräte und/oder gerätespezifische Daten über die Knoten und/oder die gerätespezifische Anforderungen umfasst.

Das Bestimmungsmodul ist dahingehend vorteilhaft, um insbesondere schnell auf die gerätespezifischen Daten zuzugreifen und/oder die gerätespezifischen Anforderungen für bestimmte Transaktionen oder Geräte vorab zu konfigurieren. Der Konfigurationsspeicher kann beispielsweise durch Blöcke bzw. Datenblöcke des verteilten Datenbanksystems realisiert werden. Die gerätespezifischen Anforderungen für Knoten oder Geräte können beispielsweise auch nutzerbezogen sein. Beispielsweise kann ein erster Nutzer in den ihm zugeordneten gerätespezifischen Anforderungen eine niedrige Präzision bei der Fertigung eines Werkstückes fordern. Beispielsweise kann dann ein zweiter Nutzer in den ihm zugeordneten gerätespezifischen Anforderungen eine höhere Präzision bei der Fertigung eines Werkstückes fordern. Auf diese Weise können auch Sicherheitsanforderungen nutzerbezogen gespeichert werden. Es ist beispielsweise auch denkbar, dass bestimmten Typen oder Arten von Steuerbefehlen - nutzerbezogen oder nicht - gerätespezifische Anforderungen zugeordnet sind, die durch das Bestimmungsmodul berücksichtigt werden. Beispielsweise kann gefordert sein, dass ein Steuerbefehl zum Aufspielen einer Firmware nur durch ein Gerät erfolgt, das vorgegebene Sicherheitsanforderungen erfüllt, um z. B. sicherzustellen, dass nicht ohne weiteres Know-How der Firmware für jeden in einer Fertigungsanlage zugänglich ist. Durch diese vorgegebenen Sicherheitsanforderungen kann beispielsweise gefordert sein, dass nur bestimmtes Personal einen Zugriff auf ein entsprechendes Gerät hat oder das Gerät durch ein Passwort und/oder anderen kryptographischen Mechanismen geschützt ist (z. B. Zugriff ist nur durch Einstecken einer Chipkarte und Eingeben einer Pin möglich).

Bei weiteren Ausführungsformen des Bestimmungsmoduls umfasst das Bestimmungsmodul eine administrative Schnittstelle.

Das Bestimmungsmodul ist dahingehend vorteilhaft, um insbesondere eine Konfiguration des Bestimmungsmoduls zu ermöglichen. Über die administrative Schnittstelle können beispielsweise die gerätespezifischen Anforderungen konfiguriert werden und vorzugsweise im verteilten Datenbanksystem gespeichert werden.

Bei weiteren Ausführungsformen des Bestimmungsmoduls umfasst das Bestimmungsmodul eine Erfassungseinheit zum Erfassen von gerätespezifischen Daten über die Geräte oder von gerätespezifischen Daten über Knoten umfasst.

Das Bestimmungsmodul ist dahingehend vorteilhaft, um insbesondere eine Überprüfung und Erstellung der gerätespezifischen Daten zu erleichtern und zu beschleunigen. Zwar könnte das Bestimmungsmodul diese Daten jeweils bei jeder einzelnen Bestimmung neu von den Geräten oder Knoten abfragen, jedoch ist es insbesondere zweckdienlicher, dass die Erfassungseinheit diese Daten beispielsweise zu vorgegebenen Zeitpunkten oder Intervallen abfragt und z. B. in einen Konfigurationsspeicher speichert oder die Knoten und Geräte erledigen dies selbständig, z. B. nach dem Einschalten, zu vorgegebenen Zeitpunkten oder Intervallen, indem diese Informationen der Erfassungseinheit übermittelt werden. Ist die Erfassungseinheit beispielsweise als Smart-Contract des verteilten Datenbanksystems realisiert, kann dies beispielsweise auch beim Verbinden mit dem verteilten Datenbanksystem erfolgen.

Bei weiteren Ausführungsformen des Bestimmungsmoduls ist das Bestimmungsmodul ein Knoten eines verteilten Datenbanksystems oder ein Smart-Contract eines verteilten Datenbanksystems oder als Gerät ausgebildet.

Bei weiteren Ausführungsformen des Bestimmungsmoduls umfasst das Bestimmungsmodul ein erstes Zuordnungsmodul zum Zuordnen der jeweiligen Ausführungsanforderungen zu den Steuerbefehlen.

Bei weiteren Ausführungsformen des Bestimmungsmoduls umfasst das Bestimmungsmodul ein erstes Speichermodul zum Speichern der jeweiligen Steuerbefehle mit den zugeordneten Ausführungsanforderungen in Steuertransaktionen, wobei insbesondere die Steuertransaktionen in Datenblöcken (B) des verteilten Datenbanksystems (BC) gespeichert werden und/oder insbesondere die Steuertransaktionen mittels der Datenblöcke (B) an die Geräte (300, D, BCN_D) oder die Knoten übertragen werden. Dabei können insbesondere die Steuerbefehle zusammen mit den zugeordneten Ausführungsanforderungen in den Steuertransaktionen gespeichert werden, wenn die Steuerbefehle durch ein Gerät oder einen Knoten ausführbar sind.

Alternativ umfasst das Bestimmungsmodul ein erstes Speichermodul zum Speichern der jeweiligen Steuerbefehle mit den zugeordneten Ausführungsanforderungen in Steuertransaktionen, wobei insbesondere die Steuertransaktionen durch das verteilte Datenbanksystems (BC) gespeichert werden und/oder insbesondere die Steuertransaktionen mittels des verteilten Datenbanksystems an die Geräte (D, BCN_D) oder die Knoten übertragen werden. Dabei können insbesondere die Steuerbefehle zusammen mit den zugeordneten Ausführungsanforderungen in den Steuertransaktionen gespeichert werden, wenn die Steuerbefehle durch ein Gerät oder einen Knoten ausführbar sind.

Bei weiteren Ausführungsformen des Bestimmungsmoduls bestimmt die erste Evaluierungseinheit die Ausführungsanforderungen für die Ausführung (z. B. der Steuerbefehle bzw. die Ausführbarkeit der Steuerbefehle) anhand der gerätespezifische Anforderungen und/oder vorausgesetzte Steuerbefehle und gerätespezifischen Daten und/oder bereits ausgeführten Steuerbefehlen , wobei
- insbesondere die Ausführungsanforderungen abhängig von einem Ergebnis eines Vergleiches der gerätespezifische Anforderungen und/oder vorausgesetzte Steuerbefehle mit gerätespezifischen Daten und/oder bereits ausgeführten Steuerbefehlen bestimmt werden.

Hierbei werden beispielsweise zunächst die Ausführungsanforderungen, die für eine Ausführung der Steuerbefehle durch Geräte oder Knoten an die Geräte oder Knoten gestellt werden, z. B. anhand der Steuerbefehle und/oder einer vorgegebenen Policy bestimmt. Insbesondere wird dann beispielsweise die Ausführbarkeit der Steuerbefehle anhand der ermittelten Ausführungsanforderungen überprüft.

Bei weiteren Ausführungsformen des Bestimmungsmoduls bestimmt die erste Evaluierungseinheit die Ausführungsanforderungen für die Ausführung der Steuerbefehle (also die Ausführungsanforderungen die für die Ausführung der Steuerbefehle notwendig sind) anhand der gerätespezifischen Anforderungen und/oder vorausgesetzten Steuerbefehle und gerätespezifischen Daten und/oder bereits ausgeführten Steuerbefehle und/oder der entsprechenden Steuerbefehle selbst und/oder anhand einer Befehlsfolge, wobei
- insbesondere die Ausführungsanforderungen abhängig von einem Ergebnis eines Vergleiches der gerätespezifische Anforderungen und/oder vorausgesetzte Steuerbefehle mit gerätespezifischen Daten und/oder bereits ausgeführten Steuerbefehlen bestimmt werden,
- insbesondere die Befehlsfolge Vorgaben für eine Ausführung der Steuerbefehle umfasst.

Bei weiteren Ausführungsformen des Bestimmungsmoduls bestimmt die erste Evaluierungseinheit eine Ausführbarkeit der Steuerbefehle anhand der Ausführungsanforderungen, wobei
- insbesondere für die Bestimmung der Ausführbarkeit die gerätespezifische Anforderungen und/oder vorausgesetzte Steuerbefehle und/oder gerätespezifischen Daten und/oder bereits ausgeführte Steuerbefehle berücksichtigt werden.
- insbesondere die Ausführungsanforderungen abhängig von einem Ergebnis eines Vergleiches der gerätespezifische Anforderungen und/oder vorausgesetzte Steuerbefehle mit gerätespezifischen Daten und/oder bereits ausgeführten Steuerbefehlen bestimmt werden.

Bei weiteren Ausführungsformen des Bestimmungsmoduls bestimmt die erste Evaluierungseinheit die Ausführungsanforderungen für die Ausführung anhand einer Ausführbarkeit der Steuerbefehle durch einen Knoten des verteilten Datenbanksystems oder ein Gerät, wobei insbesondere die Ausführungsanforderungen abhängig von einem Ergebnis einer Prüfung einer Ausführbarkeit Steuerbefehle durch einen Knoten des verteilten Datenbanksystem oder der Geräte bestimmt werden. Es wird hierzu beispielsweise überprüft, ob z. B. die Geräte oder Knoten technisch in der Lage sind die entsprechenden Steuerbefehle auszuführen. Es kann hierzu beispielsweise anhand der Steuerbefehle überprüft werden, welche technischen Voraussetzungen ein Knoten und/oder ein Gerät erfüllen muss, um die Steuerbefehle auszuführen. Konnte beispielsweise anhand der gerätespezifischen Daten und/oder bereits ausgeführten Steuerbefehle festgestellt werden, dass z. B. ein spezifisches Gerät oder mehrere spezifische Geräte für die Ausführung der Steuerbefehle technisch geeignet sind, werden z. B. die entsprechenden Ausführungsanforderungen erstellt, die vorzugsweise gerätespezifische Anforderungen für die spezifischen Geräte umfassen. Mit anderen Worten kann hiermit beispielsweise überprüft werden, ob das Steuersystem mit seinen Knoten und/oder Geräten überhaupt in der Lage ist die Steuerbefehle auszuführen und falls dies beispielsweise bestätigt werden kann, werden beispielsweise entsprechende Ausführungsanforderungen erzeugt/berechnet. Hierzu werden beispielsweise zunächst die Ausführungsanforderungen für die Steuerbefehle bestimmt und anschließend die Ausführbarkeit der Steuerbefehle durch die Geräte/Knoten anhand der Ausführungsanforderungen ermittelt.

Gemäß einem weiteren Aspekt betrifft die Erfindung ein Verfahren zum rechnergestützten Bestimmen von Ausführungsanforderungen für Steuerbefehle mit folgenden Verfahrensschritten:
- Empfangen (910) oder Abrufen von Steuerbefehlen;
- Bestimmen (920, 930) von Ausführungsanforderungen für eine Ausführung von Steuerbefehlen durch Knoten eines verteilten Datenbanksystems oder durch Geräte, wobei
   - die Ausführungsanforderungen anhand gerätespezifischer Anforderungen und/oder vorausgesetzter Steuerbefehle bestimmt werden, die z. B. für die Steuerbefehle ermittelt wurden,
   - das verteilte Datenbanksystem beispielsweise eine Blockkette ist.

Bei weiteren Ausführungsformen des Verfahrens umfasst das Verfahren weitere Verfahrensschritte um die funktionalen Merkmale oder um weitere Merkmale des Bestimmungsmoduls zu realisieren.

Gemäß einem weiteren Aspekt betrifft die Erfindung ein Verfahren zum rechnergestützten Steuern von Geräten mit folgenden Verfahrensschritten:
- Bestimmen (510) von Ausführungsanforderungen für eine Ausführung der Steuerbefehle durch die Geräte;
- Zuordnen (520) der jeweiligen Ausführungsanforderungen zu den Steuerbefehlen;
- Speichern (530) der jeweiligen Steuerbefehle mit den entsprechenden Ausführungsanforderungen in Steuertransaktionen, wobei die Steuertransaktionen in einem verteilten Datenbanksystem gespeichert werden.

Bei weiteren Ausführungsformen des Verfahrens umfasst das Verfahren weitere Verfahrensschritte um die funktionalen Merkmale oder um weitere Merkmale des Steuersystems zu realisieren.

Gemäß einem weiteren Aspekt betrifft die Erfindung ein Gerät umfassend:
- ein Kommunikationsmodul zum Empfangen von Datenblöcken eines verteilten Datenbanksystems, wobei
   - Steuertransaktionen mit Steuerbefehlen für das Gerät in den Datenblöcken des verteilten Datenbanksystems gespeichert sind,
   - die Steuertransaktionen Ausführungsanforderungen umfassen,
   - die Ausführungsanforderungen gerätespezifische Anforderungen für das Gerät und/oder vorausgesetzte Steuerbefehle umfassen,
   - den jeweiligen Steuertransaktionen die entsprechende Ausführungsanforderungen zugeordnet sind.

Optional kann das Gerät beispielsweise noch folgendes umfassen:
- ein erstes Überprüfungsmodul zum Überprüfen der jeweiligen Ausführungsanforderungen der Steuerbefehle einer der Steuertransaktionen eines Steuerbefehls durch das Gerät, wobei
   - insbesondere die gerätespezifischen Anforderungen für das Gerät überprüft werden; und/oder
   - insbesondere überprüft wird, ob Bestätigungstransaktionen für die vorausgesetzten Steuerbefehle in Datenblöcken des verteilten Datenbanksystems verfügbar sind;
   - insbesondere überprüft wird, ob Bestätigungstransaktionen für die vorausgesetzten Steuerbefehle in dem verteilten Datenbanksystems verfügbar sind;
- ein optionales Ausführungsmodul zum Ausführen der Steuerbefehle durch das entsprechende Gerät abhängig von einem Ergebnis des Überprüfens;
- ein optionales zweites Speichermodul zum Speichern des Ergebnisses des Ausführens der Steuerbefehle in Bestätigungstransaktionen, wobei die Bestätigungstransaktionen beispielsweise in dem verteilten Datenbanksystem gespeichert werden bzw. sind (z. B. in Datenblöcken des/eines verteilten Datenbanksystems).

Bei einer weiteren Ausführungsform des Gerätes umfasst das Gerät zumindest ein weiteres Modul oder mehrere weitere Module, um mögliche Ausführungsformen eines Gerätes zu realisieren, die in den Ausführungsformen des Steuersystems offenbart sind.

Gemäß einem weiteren Aspekt betrifft die Erfindung ein verteiltes Datenbanksystem umfassend:
- ein erstes Bestimmungsmodul zum Bestimmen von Ausführungsanforderungen für eine Ausführung von Steuerbefehlen durch Geräte, wobei
   - in den Ausführungsanforderungen gerätespezifischen Anforderungen und/oder vorausgesetzte Steuerbefehle gespeichert werden;
- eine Vielzahl von Knoten, wobei die Knoten über ein erstes Kommunikationsnetzwerk miteinander verbunden sind;
- ein erstes Zuordnungsmodul zum Zuordnen der jeweiligen Ausführungsanforderungen zu den Steuerbefehlen;
- ein erstes Speichermodul zum Speichern der jeweiligen Steuerbefehle mit den entsprechenden Ausführungsanforderungen in Steuertransaktionen, wobei
- die Steuertransaktionen in dem verteilten Datenbanksystem gespeichert werden;
- die Steuertransaktionen mittels des verteilten Datenbanksystems an die Geräte übermittelt werden (z. B. indem Datenblöcke mit entsprechenden Daten an die Geräte übermittelt werden).

Bei einer weiteren Ausführungsform des verteilten Datenbanksystems, umfasst das verteilte Datenbanksystem zumindest ein weiteres Modul oder mehrere weitere Module, um mögliche Ausführungsformen eines verteilten Datenbanksystems zu realisieren, die in den Ausführungsformen des Steuersystems oder des ersten verteilten Datenbanksystems offenbart sind.

Gemäß einem weiteren Aspekt betrifft die Erfindung ein erstes verteiltes Datenbanksystem zum Speichern von Datenblöcken aufweisend:
- eine Vielzahl von Knoten, die über ein zweites Kommunikationsnetzwerk miteinander verbunden sind;
- ein drittes Speichermodul zum Speichern von Transaktionen in Datenblöcken des verteilten Datenbanksystems;
- ein viertes Speichermodul zum Zuordnen eines Aufgabendatensatzes einer spezifischen Aufgabe zu dem verteilten Datenbanksystem, wobei
   - insbesondere die Transaktionen Daten zum Durchführen der spezifischen Aufgabe umfassen;
- ein zweites Zuordnungsmodul zum Zuordnen eines Gültigkeitsdatensatzes für das verteilte Datenbanksystem, wobei
   - insbesondere der Gültigkeitsdatensatz eine Gültigkeit für vorgegebene Funktionen des verteilten Datenbanksystems angibt.

Das erste verteilte Datenbanksystem ist dahingehend vorteilhaft, um insbesondere bei einem verteilten Datenbanksystem, das beispielsweise als Blockkette realisiert ist, für eine spezifische Situation insbesondere nur einen Aufgabe eine vorgegebene Gültigkeit zu erlauben, wobei die Gültigkeit beispielsweise durch den Lebenszyklus (z. B. die Nutzungsdauer) eines Gerätes definiert ist. Dies ist vorteilhaft, um beispielsweise ein großes (insbesondere im Sinne der notwendigen Speicherkapazität bzw. Datenmenge) verteiltes Datenbanksystem zu vermeiden und stattdessen insbesondere mehrere kleinere verteilte Datenbanksysteme zu realisieren, die insbesondere einem spezifischen Gerät, einem technischen System (mit mehreren Geräten) oder einem technischen Subsystem (mit mehreren Geräten) zugeordnet sind. Ein Problem beispielsweise eines großen verteilten Datenbanksystems, das beispielsweise als Blockkette realisiert ist, ist, dass Datenblöcke aus diesem verteilten Datenbanksystem nicht mehr gelöscht werden können (ist eine Eigenschaft von Blockketten). Dies hat insbesondere zur Folge, dass große Datenmengen in der Blockkette gespeichert sind, die beispielsweise nicht mehr benötigt werden. Dies ist insbesondere für eine Nutzung solcher Architekturen im Internet der Dinge nachteilig, da beispielsweise sehr viel Energie und Speicherplatz verschwendet wird.

Beispielsweise kann ein Beginn der Gültigkeit bzw. der Lebenszyklus des ersten verteilten Datenbanksystems durch einen ersten Trigger zur Erzeugung des ersten verteilten Datenbanksystems realisiert werden und die Gültigkeit bzw. der Lebenszyklus wird durch einen zweiten Trigger beendet, wenn z. B. der letzte Befehl einer Befehlsfolge abgearbeitet wurde oder das Gerät/technische System/technische Subsystem ausgewechselt wurde. Ein Trigger kann beispielsweise ein Steuersignal, ein Interrupt oder durch einen Softwareschalter sein. Der erste Trigger kann beispielsweise dadurch realisiert werden, dass das Gerät/technische System/technische Subsystem erstmalig installiert oder eingeschaltet wird oder der Startbefehl einer Befehlsfolge zum Steuern eine Kraftwerksanlage ausgeführt wird. Ist beispielsweise die Gültigkeit an die Abarbeitung einer Befehlsfolge (diese Abarbeitung kann z. B. Wochen oder Monate dauern) durch eine Vielzahl von Geräten in einem Energieversorgungsnetz gerichtet oder gebunden, so kann die Gültigkeit bzw. der Lebenszyklus enden, wenn alle Geräte ihre Befehle abgearbeitet haben.

Bei weiteren Ausführungsformen des ersten verteilten Datenbanksystems umfasst das erste verteilte Datenbanksystem ein Aktivitätsmodul, wobei das Aktivitätsmodul dazu eingerichtet ist, die Aktivität des ersten verteilten Datenbanksystems anzuzeigen und/oder zu dokumentieren.

Das erste verteilte Datenbanksystem ist dahingehend vorteilhaft, um insbesondere die Aktivität beispielsweise durch eine ein Heartbeat Signal oder ein Steuersignal im Betrieb durch einen Administrator überprüfbar zu machen. Hierdurch kann beispielsweise angegeben werden, wie viele Knoten des ersten verteilten Datenbanksystems gerade aktiv sind und/oder deren Speicherauslastung und/oder deren Prozessorauslastung aufgezeichnet werden. Alternativ kann das Aktivitätsmodul beispielsweise diese Informationen in eine Datei schreiben, um beispielsweise Systemzustände oder Neustarts von Knoten des ersten verteilten Datenbanksystems zu dokumentieren.

Bei weiteren Ausführungsformen des ersten verteilten Datenbanksystems umfasst das erste verteilte Datenbanksystem eine administrative Schnittstelle.

Das erste verteilte Datenbanksystem ist dahingehend vorteilhaft, um insbesondere eine Konfiguration des ersten verteilten Datenbanksystems zu ermöglichen. Über die administrative Schnittstelle können beispielsweise Knoten neu gestartet werden und/oder Knoten und/oder Blockketten-Orakel [8] dem ersten verteilten Datenbanksystem hinzugefügt werden.

Bei weiteren Ausführungsformen des ersten verteilten Datenbanksystems umfasst das erste verteilte Datenbanksystem eine Ausgabeschnittstelle.

Das erste verteilte Datenbanksystem ist dahingehend vorteilhaft, um insbesondere über die Ausgabeschnittstelle Statusmeldungen abrufen zu können (z. B. die Ausgabeschnittstelle ist zum Abrufen der Statusmeldungen und/oder Statusdaten ausgebildet). Dies kann beispielsweise durch das Aktivitätsmodul verwendet werden. Die Ausgabeschnittstelle kann beispielsweise einen Gesamtsystemstatus und/oder einen Teilsystemstatus bereitstellen, der z. B. angibt wie viele Knoten des ersten verteilten Datenbanksystems zu einem bestimmten Zeitpunkt (z. B. um 12:50 Uhr) aktiv waren und/oder wie viele Knoten des ersten verteilten Datenbanksystems offline oder inaktiv waren. Es ist beispielsweise auch denkbar, dass andere Systeminformationen bereitgestellt werden, wie z. B. der Speicherverbrauch und/oder das Speichervolumen des ersten verteilten Datenbanksystems und/oder einzelner Knoten. Alternativ oder zusätzlich kann z. B. eine Prozessorauslastung und/oder Speicherauslastung des ersten verteilten Datenbanksystems und/oder einzelner Knoten über die Ausgabeschnittstelle bereitgestellt werden.

Bei weiteren Ausführungsformen des ersten verteilten Datenbanksystems ist der Gültigkeitsdatensatz durch den Aufgabendatensatz der spezifischen Aufgabe festgelegt.

Das erste verteilte Datenbanksystem ist dahingehend vorteilhaft, um insbesondere ein erstes verteiltes Datenbanksystem zu erzeugen, das vorzugsweise nur für die spezifische Aufgabe (z. B. Abarbeiten einer Befehlsfolge für die Fertigung eines Produktes durch mehrere Geräte) gültig ist. Dies ist beispielsweise bei der Fertigung von komplexen Produkten vorteilhaft, da hierdurch auf einfache Weise ein integritätsgeschützter Datenspeicher bzw. eine integritätsgeschützte Datenbank bereitgestellt werden kann. Dies ist insbesondere vorteilhaft, wenn das erste verteilte Datenbanksystem z. B. bei einer Abarbeitung von Befehlsfolgen oder Steuerbefehlen, wie dies bei dem erfindungsgemäßen Steuersystem erläutert wurde, eingesetzt wird. In einem solchen Anwendungsszenario kann ein erstes verteiltes Datenbanksystem z. B. für alle Geräte verwendet werden, die bei der Abarbeitung der Steuerbefehle einer Befehlsfolge beteiligt sind. Alternativ können auch mehrere erste verteilte Datenbanksysteme für Gruppen oder Klassen von Geräten verwendet werden, die bei dem Steuersystem gesteuert und/oder überwacht werden. Die Gültigkeit und/oder die spezifische Aufgabe des ersten verteilten Datenbanksystems ist beispielsweise durch den Beginn und dem Ende der Abarbeitung der Befehlsfolge definiert. Es ist beispielsweis auch möglich, dass die Gültigkeit und/oder die spezifische Aufgabe des ersten verteilten Datenbanksystems durch eine Nutzungsdauer eines oder mehrerer Geräte definiert sind.

Bei weiteren Ausführungsformen des ersten verteilten Datenbanksystems umfasst das erste verteilte Datenbanksystem ein zweites Überprüfungsmodul, das die Gültigkeit für vorgegebene Funktionen überprüft.

Das erste verteilte Datenbanksystem ist dahingehend vorteilhaft, um insbesondere eine Überprüfung der Gültigkeit durch das verteilte Datenbanksystem selbst durchzuführen, ohne dass dafür beispielsweise eine zentrale Instanz erforderlich ist.

Bei weiteren Ausführungsformen des ersten verteilten Datenbanksystems umfassen die Transaktionen Steuerbefehle und/oder Befehlsfolgen und/oder gerätespezifische Daten über ein Gerät oder ein Feldgerät.

Das erste verteilte Datenbanksystem ist dahingehend vorteilhaft, um insbesondere ein erfinderisches Steuersystem mittels des ersten verteilten Datenbanksystems zu realisieren.

Bei weiteren Ausführungsformen des ersten verteilten Datenbanksystems umfasst das erste verteilte Datenbanksystem einen ersten eindeutigen Identifizierer, wobei
- ein zweites verteiltes Datenbanksystem das erste verteilte Datenbanksystem in einem Referenzierungsdatensatz referenziert,
- der Referenzierungsdatensatz den Gültigkeitsdatensatz und/oder den Aufgabendatensatz und/oder den ersten eindeutigen Identifizierer umfasst.

Das erste verteilte Datenbanksystem ist dahingehend vorteilhaft, um insbesondere das erste verteilte Datenbanksystem durch das zweite verteilte Datenbanksystem zu referenzieren, z. B. über eine Webadresse oder eine Speicheradresse. Beispielsweise kann das zweite verteilte Datenbanksystem allen Geräten eines technischen Systems, z. B. eine Fertigungsanlage oder ein Energieversorgungsnetz, zugeordnet sein. Insbesondere um zu vermeiden, dass das zweite verteilte Datenbanksystem keine Daten bzw. Transaktionen umfasst, die nicht mehr benötigt werden, werden beispielsweise für die Geräte oder Subsysteme des technischen Systems erste verteilte Datenbanksysteme erzeugt, die durch das zweite verteilte Datenbanksystem referenziert werden. Wird beispielsweise eines der Subsysteme ausgetauscht, so läuft beispielsweise die Gültigkeit des entsprechenden ersten verteilten Datenbanksystems für dieses Subsystem ab, und es wird insbesondere für das neue Subsystem ein neues erstes verteiltes Datenbanksystem erzeugt.

Es ist beispielsweise auch denkbar, dass das erste verteilte Datenbanksystem oder das zweite verteilte Datenbanksystem ein Bestimmungsmodul umfasst, so wie dies in den anderen Ausführungsbeispielen erläutert ist. Beispielsweise umfasst das erste verteilte Datenbanksystem vorzugsweise die Steuerbefehle, für die das Bestimmungsmodul die Ausführungsanforderungen oder Optimierungen (falls das Bestimmungsmodul z. B. einen Optimierer umfasst) bestimmt. In das zweite verteilte Datenbanksystem werden dann vorzugsweise die Steuertransaktionen zusammen mit den jeweils zugehörigen Ausführungsanforderungen geschrieben bzw. gespeichert. Das zweite verteilte Datenbanksystem umfasst somit vorzugsweise dann die Steuertransaktionen zusammen mit den jeweils zugehörigen Ausführungsanforderungen. Dieses zweite verteilte Datenbanksystem ist vorzugsweise mit den Geräten oder Knoten verbunden, welche die Steuerbefehle ausführen sollen.

Bei weiteren Ausführungsformen des ersten verteilten Datenbanksystems ist nach Ablauf der Gültigkeit das erste verteilte Datenbanksystem versiegelt.

Das erste verteilte Datenbanksystem ist dahingehend vorteilhaft, um insbesondere ein nachträgliches Verändern des ersten verteilten Datenbanksystems bzw. dessen Daten zu verhindern. Dies kann beispielsweise dadurch erfolgen, dass in das zweite verteilte Datenbanksystem eine Prüfsumme des letzten Datenblocks des ersten verteilten Datenbanksystems gespeichert wird.

Bei weiteren Ausführungsformen des ersten verteilten Datenbanksystems umfasst der Gültigkeitsdatensatz einen Ablaufdatensatz, der insbesondere angibt wie lange das versiegelte erste verteilte Datenbanksystem verfügbar ist.

Das erste verteilte Datenbanksystem ist dahingehend vorteilhaft, um insbesondere einen Verfügbarkeitszeitraum in dem Ablaufdatensatz des versiegelten ersten verteilten Datenbanksystems bereitzustellen/zu speichern. Beispielsweise kann es notwendig sein, dieses versiegelte erste verteilte Datenbanksystem bis zum Ablauf der Garantie eines Produktes nach dessen Fertigung verfügbar zu haben. Ist dieser Verfügbarkeitszeitraum abgelaufen, so kann beispielsweise durch das zweite verteilte Datenbanksystem, beispielsweise mittels eines Smart-Contracts, das entsprechende erste verteilte Datenbanksystem gelöscht werden. Dieser Ablaufdatensatz wird insbesondere erst nach Ablauf der Gültigkeit berücksichtigt.

Bei weiteren Ausführungsformen des ersten verteilten Datenbanksystems ist das erste verteilte Datenbanksystem und/oder das zweite verteilte Datenbanksystem eine Blockkette und die Datenblöcke sind Blöcke der Blockkette, oder das erste verteilte Datenbanksystem und/oder das zweite verteilte Datenbanksystem sind eine Peer-2-Peer Datenbank.

Bei weiteren Ausführungsformen des ersten verteilten Datenbanksystems die sind Datenblöcke über eine kryptographische Hashfunktion (H) miteinander verkettet.

Gemäß einem weiteren Aspekt betrifft die Erfindung ein Verfahren zum rechnergestützten Bereitstellen von Transaktionen mit folgenden Verfahrensschritten:
- Speichern von Daten in Transaktionen, wobei die Transaktionen in Datenblöcken eines ersten verteilten Datenbanksystems gespeichert sind;
- Zuordnen eines Aufgabendatensatzes einer spezifischen Aufgabe zu dem ersten verteilten Datenbanksystem, wobei
   - insbesondere die Transaktionen Daten zum Durchführen der spezifischen Aufgabe umfassen;
- Zuordnen eines Gültigkeitsdatensatzes für das verteilte Datenbanksystem, wobei
   - insbesondere der Gültigkeitsdatensatz eine Gültigkeit für vorgegebene Funktionen des verteilten Datenbanksystems angibt.

Bei weiteren Ausführungsformen des Verfahrens umfasst das Verfahren weitere Verfahrensschritte um die funktionalen Merkmale des ersten verteilten Datenbanksystems zu realisieren.

Gemäß einem weiteren Aspekt betrifft die Erfindung ein Verfahren zum rechnergestützten Übermitteln von Steuertransaktionen mit folgenden Verfahrensschritten:
- Bestimmen von Ausführungsanforderungen für eine Ausführung von Steuerbefehlen durch Geräte, wobei
   - in den Ausführungsanforderungen gerätespezifische Anforderungen und vorausgesetzte Steuerbefehle gespeichert werden;
- Zuordnen der jeweiligen Ausführungsanforderungen zu den Steuerbefehlen;
- Speichern der jeweiligen Steuerbefehle mit den entsprechenden Ausführungsanforderungen in Steuertransaktionen, wobei
- die Steuertransaktionen mittels eines verteilten Datenbanksystems gespeichert werden (z. B. indem die Steuertransaktionen in Datenblöcken des verteilten Datenbanksystems gespeichert sind/werden),
- die Steuertransaktionen mittels des verteilten Datenbanksystems an die Geräte übermittelt werden (z. B. indem die Datenblöcke des verteilten Datenbanksystems übermittelt werden),
- das verteilte Datenbanksystem eine Vielzahl von Knoten umfasst,
- die Knoten über ein erstes Kommunikationsnetzwerk miteinander verbunden sind;

Gemäß einem weiteren Aspekt betrifft die Erfindung ein Verfahren zum rechnergestützten Empfangen von Steuertransaktionen mit folgenden Verfahrensschritten:
- Empfangen von Steuertransaktionen mittels eines verteilten Datenbanksystems (z. B. indem die Steuertransaktionen in Datenblöcken des verteilten Datenbanksystems gespeichert sind und mittels diesen übermittelt werden), wobei
   - die Steuertransaktionen gespeicherte Steuerbefehlen umfassen,
   - die Steuertransaktionen Ausführungsanforderungen umfassen,
   - die Ausführungsanforderungen gerätespezifische Anforderungen für das Gerät und vorausgesetzte Steuerbefehle umfasst,
   - den jeweiligen Steuertransaktionen die entsprechende Ausführungsanforderungen zugeordnet sind.

Zudem kann das Verfahren insbesondere einen der folgenden Verfahrensschritte oder eine Kombination von diesen Verfahrensschritten optional umfassen:
- Überprüfen der jeweiligen Ausführungsanforderungen zum Ausführen der Steuerbefehle einer der Steuertransaktionen durch das Gerät, wobei
   - die gerätespezifischen Anforderungen für das Gerät überprüft werden; und/oder
   - überprüft wird, ob Bestätigungstransaktionen für die vorausgesetzten Steuerbefehle in dem verteilten Datenbanksystem verfügbar sind (z. B. indem die Bestätigungstransaktionen in Datenblöcken des verteilten Datenbanksystems gespeichert sind).
- Ausführen der Steuerbefehle durch das entsprechende Gerät abhängig von einem Ergebnis des Überprüfens;
- Speichern des Ergebnisses des Ausführens der Steuerbefehle in Bestätigungstransaktionen des verteilten Datenbanksystems (z. B. in Datenblöcken des verteilten Datenbanksystems) .

Dabei sind die Verfahrensschritte Überprüfen und/oder Ausführen und/oder Speichern (durch insbesondere entsprechend gekennzeichnet) insbesondere fakultative Verfahrensschritte, die nicht zwangsläufig notwendig sind.

Gemäß einem weiteren Aspekt betrifft die Erfindung ein Gerät aufweisend:
- ein erstes Kommunikationsmodul zum Empfangen von Steuertransaktionen, wobei ein verteiltes Datenbanksystem die Steuertransaktionen bereitstellt, wobei
   - die Steuertransaktionen Steuerbefehle für das Gerät umfassen,
   - die Steuertransaktionen Ausführungsanforderungen umfassen,
   - die Ausführungsanforderungen gerätespezifische Anforderungen für das Gerät und/oder vorausgesetzte Steuerbefehle umfassen,
   - den jeweiligen Steuertransaktionen die entsprechende Ausführungsanforderungen zugeordnet sind.
- ein erstes Überprüfungsmodul zum Überprüfen der jeweiligen Ausführungsanforderungen für ein Ausführen der Steuerbefehle einer der Steuertransaktionen durch das Gerät, wobei
   - überprüft wird, ob Bestätigungstransaktionen für die vorausgesetzten Steuerbefehle der jeweiligen Ausführungsanforderungen der jeweiligen Steuertransaktion in dem verteilten Datenbanksystem verfügbar sind;
- ein erstes Ausführungsmodul zum Ausführen der Steuerbefehle durch das entsprechende Gerät abhängig von einem Ergebnis des Überprüfens.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße verteilte Datenbanksystem und/oder das erste verteilte Datenbanksystem und/oder das Steuersystem und/oder das Gerät erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße verteilte Datenbanksystem und/oder das erste verteilte Datenbanksystem und/oder das Steuersystem und/oder das Gerät erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung;
- Fig. 5: ein weiteres Ausführungsbeispiel der Erfindung;
- Fig. 6: ein weiteres Ausführungsbeispiel der Erfindung;
- Fig. 7: ein weiteres Ausführungsbeispiel der Erfindung;
- Fig. 8: ein weiteres Ausführungsbeispiel der Erfindung; und
- Fig. 9: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

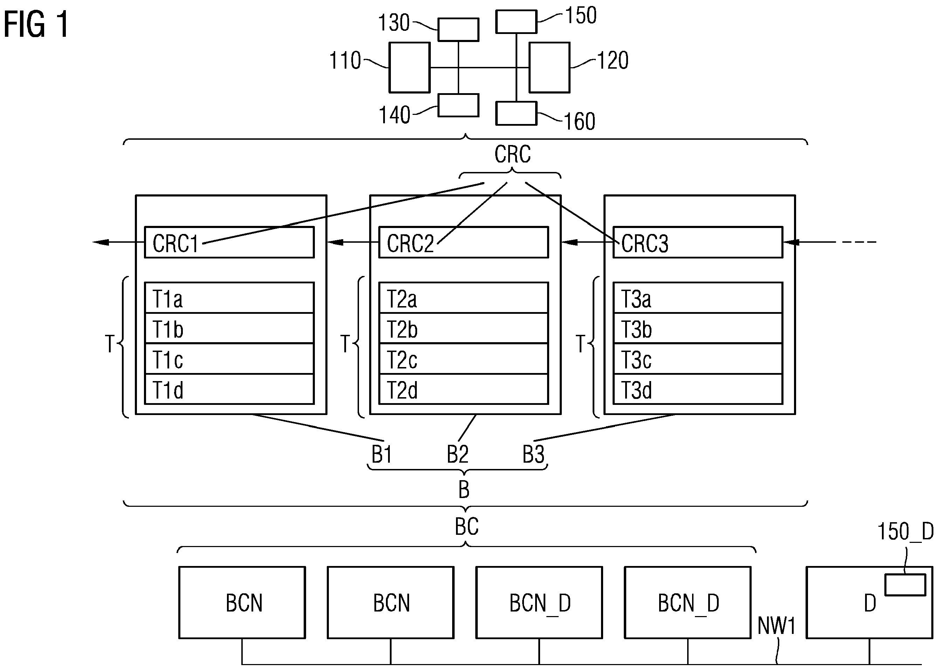

Die Fig. 1 zeigt ein erstes Ausführungsbeispiel der Erfindung. Fig. 1 zeigt dabei ein Steuersystem zum Steuern und/oder Überwachen von Geräten, wobei das verteilte Datenbanksystem beispielsweise mittels einer Blockkette BC realisiert wird.

Nachfolgend werden zunächst einige Varianten des Ausführungsbeispiels genannt. Anschließend erfolgt eine genauere Erläuterung des Ausführungsbeispiels und einige seiner Varianten. Das Ausführungsbeispiel für ein Steuersystem zum Steuern und/oder Überwachen von Geräten kann in einer Variante folgende Merkmale umfassen:
- ein erstes Bestimmungsmodul zum Bestimmen von Ausführungsanforderungen für eine Ausführung von Steuerbefehlen durch die Geräte, wobei
   - in den Ausführungsanforderungen gerätespezifischen Anforderungen und/oder vorausgesetzte Steuerbefehle gespeichert sind;
- ein verteiltes Datenbanksystem aufweisend,
   - eine Vielzahl von Knoten, wobei die Knoten und die Geräte über ein erstes Kommunikationsnetzwerk miteinander verbunden sind;
- ein erstes Zuordnungsmodul zum Zuordnen der jeweiligen Ausführungsanforderungen zu den Steuerbefehlen;
- ein erstes Speichermodul zum Speichern der jeweiligen Steuerbefehle mit den zugeordneten Ausführungsanforderungen in Steuertransaktionen, wobei
   - die Steuertransaktionen in Datenblöcken des verteilten Datenbanksystems gespeichert werden;
   - die Steuertransaktionen mittels der Datenblöcke an die Geräte übermittelt werden;
- ein erstes Überprüfungsmodul zum Überprüfen der jeweiligen Ausführungsanforderungen zum Ausführen der Steuerbefehle einer der Steuertransaktionen durch ein entsprechendes Gerät, wobei
   - die gerätespezifischen Anforderungen für das entsprechende Gerät überprüft werden; und/oder
   - überprüft wird, ob Bestätigungstransaktionen für die vorausgesetzten Steuerbefehle in Datenblöcken des verteilten Datenbanksystems verfügbar sind;
- ein Ausführungsmodul zum Ausführen der Steuerbefehle durch das entsprechende Gerät abhängig von einem Ergebnis des Überprüfens;
- ein zweites Speichermodul zum Speichern des Ergebnisses des Ausführens der Steuerbefehle in Bestätigungstransaktionen der Datenblöcke des verteilten Datenbanksystems.

Das Ausführungsbeispiel für ein Steuersystem zum Steuern und/oder Überwachen von Geräten kann in einer weiteren Variante, die beispielsweise (daten)blocklos implementiert ist, folgendes umfassen:
- ein erstes Bestimmungsmodul (110) zum Bestimmen von Ausführungsanforderungen für eine Ausführung von Steuerbefehlen durch die Geräte, wobei
   - in den Ausführungsanforderungen gerätespezifische Anforderungen und/oder vorausgesetzte Steuerbefehle gespeichert sind;
- ein verteiltes Datenbanksystem (BC) aufweisend,
   - eine Vielzahl von Knoten (BCN, BCN D), wobei die Knoten (300, BCN, BCN_D) und die Geräte (300, D, BCN_D) über ein erstes Kommunikationsnetzwerk (NW1) miteinander verbunden sind;
- ein erstes Zuordnungsmodul (120) zum Zuordnen der jeweiligen Ausführungsanforderungen zu den Steuerbefehlen;
- ein erstes Speichermodul (130) zum Speichern der jeweiligen Steuerbefehle mit den zugeordneten Ausführungsanforderungen in Steuertransaktionen, wobei
   - die Steuertransaktionen mittels des verteilten Datenbanksystems (BC) gespeichert werden;
   - die Steuertransaktionen des verteilten Datenbanksystems (BC) an die Geräte (300, D, BCN_D) übertragen werden;
- ein optionales erstes Überprüfungsmodul (140) zum Überprüfen der jeweiligen Ausführungsanforderungen zum Ausführen der Steuerbefehle einer der Steuertransaktionen durch ein entsprechendes Gerät, wobei
   - die gerätespezifischen Anforderungen für das entsprechende Gerät überprüft werden; und/oder
   - überprüft wird, ob Bestätigungstransaktionen für die vorausgesetzten Steuerbefehle in Datenblöcken des verteilten Datenbanksystems verfügbar sind;
- ein optionales erstes Ausführungsmodul (150, 150_D) zum Ausführen der Steuerbefehle durch das entsprechende Gerät abhängig von einem Ergebnis des Überprüfens;
- ein optionales zweites Speichermodul (160) zum Speichern des Ergebnisses des Ausführens der Steuerbefehle in Bestätigungstransaktionen der Datenblöcke des verteilten Datenbanksystems.

Das Ausführungsbeispiel für ein Steuersystem zum Steuern und/oder Überwachen von Geräten kann in einer weiteren Variante, die beispielsweise (daten)blocklos implementiert ist, folgendes umfassen:
- beispielsweise ein erstes Bestimmungsmodul (110) zum Bestimmen von Ausführungsanforderungen für eine Ausführung von Steuerbefehlen durch die Geräte, wobei
   - beispielsweise in den Ausführungsanforderungen gerätespezifische Anforderungen und/oder vorausgesetzte Steuerbefehle gespeichert sind;
- beispielsweise ein verteiltes Datenbanksystem (BC) aufweisend,
   - beispielsweise eine Vielzahl von Knoten (BCN, BCN_D), wobei die Knoten (300, BCN, BCN_D) und die Geräte (300, D, BCN_D) über ein erstes Kommunikationsnetzwerk (NW1) miteinander verbunden sind;
- beispielsweise ein erstes Zuordnungsmodul (120) zum Zuordnen der jeweiligen Ausführungsanforderungen zu den Steuerbefehlen;
- beispielsweise ein erstes Speichermodul (130) zum Speichern der jeweiligen Steuerbefehle mit den zugeordneten Ausführungsanforderungen in Steuertransaktionen, wobei
   - beispielsweise die Steuertransaktionen in dem verteilten Datenbanksystems (BC) gespeichert werden;
   - beispielsweise die Steuertransaktionen mittels des verteilten Datenbanksystems an die Geräte (300, D, BCN_D) übertragen werden.

Das Ausführungsbeispiel für ein Steuersystem zum Steuern und/oder Überwachen von Geräten kann in einer weiteren Variante folgende Merkmale umfassen:
- ein erstes Bestimmungsmodul (110) zum Bestimmen von Ausführungsanforderungen für eine Ausführung von Steuerbefehlen durch die Geräte, wobei
   - in den Ausführungsanforderungen gerätespezifische Anforderungen und/oder vorausgesetzte Steuerbefehle gespeichert sind,
   - das Bestimmungsmodul beispielsweise ein Bestimmungsmodul nach einem der Ansprüche 17 - 28;
- ein verteiltes Datenbanksystem (BC) aufweisend,
   - eine Vielzahl von Knoten (BCN, BCN D), wobei die Knoten (300, BCN, BCN_D) und die Geräte (300, D, BCN_D) über ein erstes Kommunikationsnetzwerk (NW1) miteinander verbunden sind;
- ein erstes Zuordnungsmodul (120) zum Zuordnen der jeweiligen Ausführungsanforderungen zu den Steuerbefehlen;
- ein erstes Speichermodul (130) zum Speichern der jeweiligen Steuerbefehle mit den zugeordneten Ausführungsanforderungen in Steuertransaktionen, wobei
   - die Steuertransaktionen in Datenblöcken (B) des verteilten Datenbanksystems (BC) gespeichert werden;
- die Steuertransaktionen mittels der Datenblöcke (B) an die Geräte (300, D, BCN_D) übertragen werden.

Das Ausführungsbeispiel für ein Steuersystem zum Steuern und/oder Überwachen von Geräten kann in einer weiteren Variante folgende Merkmale umfassen:
- beispielsweise ein erstes Bestimmungsmodul zum Bestimmen von Ausführungsanforderungen für eine Ausführung von Steuerbefehlen durch die Geräte, wobei
   - beispielsweise in den Ausführungsanforderungen gerätespezifischen Anforderungen und/oder vorausgesetzte Steuerbefehle gespeichert sind;
- beispielsweise ein verteiltes Datenbanksystem aufweisend,
   - beispielsweise eine Vielzahl von Knoten, wobei die Knoten und die Geräte über ein erstes Kommunikationsnetzwerk miteinander verbunden sind (mit anderen Worten weist das verteilte Datenbanksystem die entsprechenden Knoten auf);
- beispielsweise ein erstes Zuordnungsmodul zum Zuordnen der jeweiligen Ausführungsanforderungen zu den Steuerbefehlen;
- beispielsweise ein erstes Speichermodul zum Speichern der jeweiligen Steuerbefehle mit den zugeordneten Ausführungsanforderungen in Steuertransaktionen, wobei
   - beispielsweise die Steuertransaktionen in dem verteilten Datenbanksystems gespeichert werden;
   - beispielsweise die Steuertransaktionen mittels des verteilten Datenbanksystems an die Geräte übermittelt werden;
- beispielsweise ein erstes Überprüfungsmodul zum Überprüfen der jeweiligen Ausführungsanforderungen zum (oder für ein) Ausführen der Steuerbefehle einer der Steuertransaktionen durch ein entsprechendes Gerät, wobei
   - beispielsweise die gerätespezifischen Anforderungen für das entsprechende Gerät überprüft werden; und/oder
   - beispielsweise überprüft wird, ob Bestätigungstransaktionen für die vorausgesetzten Steuerbefehle in dem verteilten Datenbanksystem verfügbar sind;
- beispielsweise ein Ausführungsmodul zum Ausführen der Steuerbefehle durch das entsprechende Gerät abhängig von einem Ergebnis des Überprüfens;
- beispielsweise ein zweites Speichermodul zum Speichern des Ergebnisses des Ausführens der Steuerbefehle in Bestätigungstransaktionen des verteilten Datenbanksystems (hierzu werden die entsprechenden Bestätigungstransaktionen vorzugsweise in dem verteilten Datenbanksystem gespeichert).

Im Einzelnen zeigt die Fig. 1 Blöcke B, beispielsweise einen ersten Block B1, einen zweiten Block B2 und einen dritten Block B3, der Blockkette BC.

Die Blöcke B umfassen jeweils mehrere Transaktionen T. Die Transaktionen T können dabei Steuertransaktionen und/oder Bestätigungstransaktionen umfassen.

Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette BC selbst wird durch eine Blockketten-Infrastruktur mit mehreren Blockketten-Knoten BCN, BCN D realisiert. Bei den Knoten kann es sich beispielsweise um Rechner, Blockkettenorakel, vertrauenswürdige Knoten oder um eines oder mehrere oder alle der Geräte handeln, die gesteuert bzw. überwacht werden sollen. Mit anderen Worten können insbesondere die Geräte entweder als Blockkettenknoten ausgebildet sein, die dann beispielsweise als Geräteknoten BCN D bezeichnet werden. Geräte, die beispielsweise nicht als Blocckettenknoten ausgebildet sind und beispielsweise nur lesend auf die Blockkette zugreifen, werden insbesondere als blocckettenexterne Geräte D bezeichnet. Die Knoten sind über ein erstes Netzwerk NW1 (z. B. ein Kommunikationsnetzwerk wie das Internet oder ein Ethernet-Netzwerk) miteinander kommunikativ verbunden. Mittels der Blockketten-Infrastruktur werden beispielsweise zumindest ein Teil der Datenblöcke B oder alle Datenblöcke B der Blockkette BC für einen Teil oder alle Knoten der Blockkette repliziert.

Insbesondere können unter Geräten blockkettenexterne Geräte D verstanden werden oder Geräteknoten BCN_D verstanden werden.

Das Steuersystem, das mittels der Blockkette BC realisiert ist, umfasst zudem ein erstes Bestimmungsmodul 110, ein erstes Zuordnungsmodul 120, ein erstes Speichermodul 130, ein erstes Überprüfungsmodul 140, ein erstes Ausführungsmodul 150 und ein zweites Speichermodul 160, die über das Steuersystem (z. B. einen Bus) oder über die Blockkette und deren Infrastruktur kommunikativ miteinander verbunden sind (z. B. das erste Netzwerk NW1). Das erste (Kommunikations-)Netzwerk NW1 kann dabei ein Mobilfunknetzwerk, ein Ethernet-Netzwerk, ein WAN, ein LAN oder das Internet sein. Das erste Überprüfungsmodul 140, des erste Ausführungsmodul 150 und/oder das zweite Speichermodul 160 können in Implementierungsvarianten optionale Module sein.

Das erste Bestimmungsmodul 110 ist zum Bestimmen von Ausführungsanforderungen für eine Ausführung von Steuerbefehlen durch die Geräte eingerichtet, wobei in den Ausführungsanforderungen gerätespezifischen Anforderungen und/oder vorausgesetzte Steuerbefehle gespeichert sind bzw. diese umfasst. Bei einer konkreten Implementierung können die Ausführungsanforderungen (oder einfach nur Anforderungen genannt) beispielsweise in Anforderungsdatensätzen gespeichert werden, die wiederum dann in den Transaktionen (z. B. in Steuertransaktionen) gespeichert werden. Das erste Bestimmungsmodul selbst kann beispielsweise als Softwarekomponente (z. B. als Smart-Contract) oder als Hardwarekomponente oder als eine Kombination aus Hardware- und Softwarekomponenten realisiert werden.

Zum Bestimmen der Ausführungsanforderungen für die Steuerbefehle werden die Steuerbefehle beispielsweise analysiert, um zu ermittelt welche technischen Voraussetzungen/Anforderungen (z. B. gerätespezifische Daten/Geräteeigenschaften) die Geräte/Knoten z. B. für eine Ausführung der Steuerbefehle erfüllen sollen. Alternativ oder zusätzlich kann für eine Ausführung der Steuerbefehle ermittelt werden, welche (vorausgesetzten) Steuerbefehle z. B. ausgeführt sein müssen, damit die entsprechenden Steuerbefehle (die in der Steuertransaktion gespeichert werden sollen) durch ein Gerät ausgeführt werden können.

In einer Variante ermittelt das Bestimmungsmodul eine Ausführbarkeit der Steuerbefehle durch Knoten des verteilten Datenbanksystems oder durch Geräte anhand der Ausführungsanforderungen.

Die Ausführbarkeit kann beispielsweise dadurch bestimmt werden, dass überprüft wird, ob die Geräte und/oder Knoten in der Lage sind die entsprechenden Steuerbefehle auszuführen. Dies kann beispielsweise dadurch bestimmt werden, dass die gerätespezifischen Anforderungen mit den gerätespezifischen Daten abgeglichen werden, um festzustellen ob ein Gerät und/oder welches Gerät in der Lage ist die entsprechenden Steuerbefehle umzusetzen/auszuführen. Es können beispielsweise auch bei der Überprüfung der Ausführbarkeit weitere Ausführungsanforderungen wie z. B. die vorausgesetzten Steuerbefehle überprüft werden.

Hierzu können zunächst die entsprechenden Geräteinformationen (oder gerätespezifische Daten oder Geräteeigenschaften) aus dem/einem Registrierungsmodul oder einer Gerätedatenbank abgerufen werden und mit den gerätespezifischen Anforderungen abgeglichen werden. Erfüllt ein Gerät oder mehrere Geräte die gerätespezifischen Anforderungen, ist die Ausführbarkeit der Steuerbefehle hinsichtlich der gerätespezifischen Anforderungen (erfolgreich) ermittelt worden. Mit anderen Worten sind die entsprechenden Steuerbefehle zumindest durch ein Gerät bzw. Knoten ausführbar.

In einer Variante können von dem Steuersystem, dem Bestimmungsmodul, dem Registrierungsmodul oder der Gerätedatenbank aktuelle gerätespezifische Daten von einem entsprechenden Gerät abgerufen werden oder zusätzlich abgerufen werden, um beispielsweise einen aktuellen Gerätezustand (z. B. Fehlerzustand des Gerätes, Gerät ist in einem Wartungsmodus, Gerät ist aktuell betriebsbereit) des Gerätes/Knoten bei der Ermittlung der Ausführbarkeit zu berücksichtigen. Beispielsweise kann ein entsprechendes Gerät laut den Geräteinformationen des Registrierungsmoduls die Steuerbefehle ausführen (was unter Umständen - wie nachfolgend erläutert - falsch sein kann). Sind diese Geräteinformationen beispielsweise veraltet (diese wurden z. B. bei der Installation des Gerätes im Registrierungsmodul gespeichert), so kann es beispielsweise sein, dass der aktuelle Gerätezustand (z. B. Gerät ist in einem Fehlerzustand) keine Ausführung der Steuerbefehle durch eines der Geräte erlaubt. In einem solchen Fall kann die Ausführbarkeit der Steuerbefehle nicht erfolgreich ermittelt werden bzw. eine Ausführbarkeit der Steuerbefehle wird nicht bestätigt. Ein Gerätezustand ist dabei z. B. ein "Fehlerzustand" (z. B. Betriebssystem abgestürzt, Werkzeug defekt, ein Gerätebauteil ist defekt), ein "Wartungszustand" (das Gerät kann beispielsweise keine Steuerbefehle ausführen, da gerade Ersatzteile eingebaut werden), "Ausgelastet" (das Gerät kann beispielsweise im Augenblick keine Steuerbefehle abarbeiten, da es im Augenblick bereits Steuerbefehle abarbeitet) oder "Betriebsbereit" (das Gerät ist in der Lage die Steuerbefehle abzuarbeiten). Die aktuellen gerätespezifischen Daten umfassen dabei vorzugsweise einen aktuellen Gerätezustand und/oder eine Information wann das Gerät in der Lage ist die Steuerbefehle abzuarbeiten und/oder wann das Gerät voraussichtlich die Steuerbefehle abgearbeitet hat und/oder wann das Gerät die Steuerbefehle sicher abgearbeitet hat. Dabei ist insbesondere eine Information wann das Gerät die Steuerbefehle sicher abgearbeitet hat für Echtzeitanwendungen oder in Echtzeitszenarien relevant. Wurden beispielsweise aktuelle gerätespezifische Daten ermittelt, werden anhand dieser Daten beispielsweise die Einträge in der Gerätedatenbank aktualisiert.

In einer Variante wird beispielsweise zunächst überprüft, wann die gerätespezifischen Daten für ein entsprechendes Gerät (oder einen entsprechenden Knoten) in der Gerätedatenbank aktualisiert wurden. Erfolgte dies kürzlich (z. B. innerhalb eines vorgegebenen Zeitraums - beispielsweise 1 Stunde oder 5 Minuten) so kann beispielsweise auf ein erneutes Abrufen gerätespezifischer Daten verzichtet werden, da die Daten der Gerätedatenbank als aktuell angesehen werden. Entsprechend umfassen die Einträge in der Gerätedatenbank mit gerätespezifischer Daten beispielsweise einen Zeitstempel, der die letzte Aktualisierung angibt.

In einer Variante wird die Ausführbarkeit der Steuerbefehle ermittelt bzw. überprüft, indem überprüft wird, ob z. B. für die entsprechenden vorausgesetzten Steuerbefehle entsprechende Bestätigungstransaktionen beispielsweise im verteilten Datenbanksystem vorhanden sind bzw. von dem verteilten Datenbanksystem gespeichert sind. Mit anderen Worten sind beispielsweise die Steuerbefehle durch ein entsprechendes Gerät ausführbar, wenn Bestätigungstransaktionen für die (entsprechenden) vorausgesetzten Steuerbefehle der jeweiligen Ausführungsanforderungen der jeweiligen Steuertransaktion im verteilten Datenbanksystem verfügbar sind. Beispielsweise wenn solche Bestätigungstransaktionen in entsprechenden Datenblöcken gespeichert sind.

In einer weiteren Variante können beispielsweise auch die Geräte direkt befragt werden, ob diese in der Lage sind die entsprechenden Steuerbefehle auszuführen. Dies kann z. B. erfolgen indem entsprechende Anfragetransaktionen oder Anfragenachrichten an die entsprechenden Geräte gesendet werden. Wenn die Geräte dies z. B. mittels entsprechender Nachrichten bestätigen und beispielsweise auch eine Einhaltung der Ausführungsanforderungen bestätigen, werden die entsprechenden Ausführungsanforderungen für die entsprechenden Steuerbefehle bestimmt bzw. erzeugt.

Für dieses direkte Befragen kann ggf. ein direkter und/oder separater Kommunikationskanal zwischen dem Bestimmungsmodul (oder einem anderen Modul, das die Ausführbarkeit ermittelt) und dem entsprechenden Gerät aufgebaut werden. Über diesen Kommunikationskanal werden dann die entsprechenden Transaktionen oder Nachrichten ausgetauscht, um festzustellen, ob ein Gerät in der Lage ist und/oder gewillt ist die entsprechenden Steuerbefehle auszuführen. Hierzu werden beispielsweise dem entsprechenden Gerät über den Kommunikationskanal die Ausführungsanforderungen übermittelt, sodass das Gerät anhand dieser Ausführungsanforderungen der Steuerbefehle die Ausführbarkeit der Steuerbefehle bestätigt werden kann (z. B. das Gerät erfüllt die gerätespezifischen Anforderungen). Eine entsprechende Bestätigung der Ausführbarkeit kann dann beispielsweise an das Bestimmungsmodul (oder ein anderes Modul das die Ausführbarkeit ermittelt) über den Kommunikationskanal zurückgesendet werden. Alternativ oder zusätzlich können über den Kommunikationskanal die entsprechenden aktuellen gerätespezifischen Daten für ein Gerät ausgetauscht werden (z. B. um die Ausführbarkeit der Steuerbefehle anhand der Ausführungsanforderungen für das Gerät zu ermitteln).

Die Ausführungsanforderungen können in einer weiteren Variante z. B. auch in einem zweistufigen Prozess überprüft werden. Beispielsweise wird ein erster Teil der Ausführungsanforderungen z. B. bereits beim Bestimmen der Ausführungsanforderungen und/oder beim Ermitteln der Ausführbarkeit der Steuerbefehle überprüft. Ein zweiter Teil der Ausführungsanforderungen wird beispielsweise dann von dem Gerät bzw. dem Überprüfungsmodul überprüft. Beispielsweise wird beim Überprüfen des ersten Teils der Ausführungsanforderungen überprüft, ob die Geräte technisch in der Lage sind (z. B. aktuell technisch in der Lage sind) die Steuerbefehle auszuführen. Beispielsweise wird beim Überprüfen des zweiten Teils er Ausführungsanforderungen überprüft, ob z. B. die vorausgesetzten Steuerbefehle bereits ausgeführt wurden oder ob das Gerät aktuell die gerätespezifischen Anforderungen erfüllt (z. B. indem überprüft für ob die aktuellen gerätespezifischen Daten die gerätespezifischen Anforderungen erfüllen).
Wird beispielsweise bereits beim Überprüfen des ersten Teils der Ausführungsanforderungen festgestellt, dass dieser erste Teil der Ausführungsanforderungen nicht von den Geräten/Knoten erfüllt werden kann, kann beispielsweise ein Zuordnen der Ausführungsanforderungen zu den Steuerbefehlen unterbleiben und/oder ein Speichern der Steuertransaktionen unterbleiben. Mit anderen Worten wird das Zuordnung und/oder Speichern abhängig von einem Ergebnis des Überprüfens der Ausführbarkeit (z. B. des ersten Teils der Ausführungsanforderungen) der Steuerbefehle von/durch die Geräte und/oder den Knoten durchgeführt.

In einer weiteren Variante umfasst das Bestimmungsmodul 110 das Zuordnungsmodul 120 selbst oder die Funktionalitäten des Zuordnungsmoduls 120.

Die Ausführungsanforderungen können durch das Bestimmungsmodul beispielsweise individuell für entsprechende Steuerbefehle berechnet werden und diesen dann z. B. durch ein Zuordnungsmodul zugeordnet werden. Alternativ können die Ausführungsanforderungen z. B. durch eine Policy (z. B. konfigurierte Ausführungsregeln) vorgegeben sein. Diese Ausführungsanforderungen werden dann durch das Bestimmungsmodul bzw. das Zuordnungsmodul den entsprechenden Steuerbefehlen zugeordnet. Dabei bestimmt das Bestimmungsmodul welche der Ausführungsanforderungen für die entsprechenden Steuerbefehle relevant sind. Beispielsweise werden den Steuerbefehlen zum Fräsen von Bohrlöchern entsprechenden Ausführungsanforderungen (z. B. in den gerätespezifischen Anforderungen) zugeordnet, dass diese mit einer vorgegebenen Genauigkeit/Präzision gefräst werden sollen und/oder beim Fräsen bestimmte Temperaturen nicht überschritten werden sollen. Diese Ausführungsanforderungen können dann durch die Geräte oder Überprüfungsmodule der Geräte überprüft werden, ob ein entsprechendes Gerät die Ausführungsanforderungen erfüllt. Alternativ oder zusätzlich können diese Ausführungsanforderungen beim Ermitteln der Ausführbarkeit der Steuerbefehle von dem Bestimmungsmodul überprüft werden, wobei überprüft wird, ob zumindest eines der Geräte und/oder Knoten in der Lage ist die entsprechenden Steuerbefehle entsprechend der Geräteeigenschaften eines entsprechenden Gerätes auszuführen. Anhand der Geräteeigenschaften kann beispielsweise ermittelt werden, ob ein Gerät technisch in der Lage ist die Steuerbefehle auszuführen.

Als Softwarekomponente kann das erste Bestimmungsmodul 110 beispielsweise als Smart-Contract realisiert sein, der durch die Blockkette bzw. deren Infrastruktur ausgeführt wird. Hierzu ist der Smart-Contract beispielsweise in Transaktionen gespeichert, die wiederum in Datenblöcken oder Blöcken der Blockkette BC gespeichert werden.

Als Hardwarekomponente kann das erste Bestimmungsmodul 110 beispielsweise durch ein Blockketten-Orakel und/oder einem Knoten/Gerät der Blockkette realisiert werden, die insbesondere beispielsweise vertrauenswürdig sind und mittels eines digitalen Zertifikats oder digitaler Signaturen die Ausführungsanforderungen signieren.

Optional kann das Steuersystem ein erstes Zerlegemodul umfassen, das beispielsweise als integrales Modul des ersten Bestimmungsmoduls 110 ausgebildet ist oder als separates Modul (z. B. als Software- und/oder Hardwarekomponente) ausgebildet ist - analog zum ersten Bestimmungsmodul (z. B. als Smart-Contract der Blockkette). Das erste Zerlegemodul ist dazu eingerichtet, eine Befehlsfolge in die entsprechenden Steuerbefehle zu zerlegen und dem Steuersystem, insbesondere dem ersten Bestimmungsmodul bzw. dem ersten Speichermodul, bereitzustellen.

Die Befehlsfolge kann dabei Steuerbefehle für eine Vielzahl von Geräten, z. B. Fertigungsmaschinen, umfassen, damit diese einen Gegenstand oder ein Produkt, z. B. eine Gasturbine oder einen Elektromotor, erstellen. Alternativ oder zusätzlich umfasst die Befehlsfolge eine Spezifikation des Produkts, die durch die Geräte umgesetzt werden soll. Die Befehlsfolge muss nicht zwangsläufig auf die Fertigung eines Produktes gerichtet sein. Sie kann beispielsweise auch die Steuerung eines Energieversorgungsnetzes sein. Die Befehlsfolge selbst kann dabei beispielsweise ein Smart-Contract sein, der in der Blockkette gespeichert wurde. Dieser Smart-Contract kann dann beispielsweise von dem Steuersystem (bzw. dem ersten Zerlegemodul und/oder dem ersten Bestimmungsmodul) mit der Blockkette bzw. deren Infrastruktur ausgewertet werden.

Auch kann die Befehlsfolge beispielsweise verschlüsselt sein, sodass das erste Bestimmungsmodul 110 oder das erste Zerlegemodul die Befehlsfolge zunächst entschlüsseln muss, bevor die Befehlsfolge zerlegt werden kann.

Alternativ oder zusätzlich sind die Steuerbefehle der Befehlsfolge verschlüsselt und entsprechende Anforderungen für deren Ausführung in der Befehlsfolge als Klartext hinterlegt.

Die Befehlsfolge selbst und/oder die Steuerbefehle können dabei beispielsweise dem Steuersystem durch einen Nutzer, durch eine Schnittstelle, durch eine andere Datenbank oder durch ein Eingabegerät bereitgestellt werden.

Alternativ oder zusätzlich werden die Steuerbefehle und/oder die Ausführungsanforderungen durch das erste Bestimmungsmodul 110 verschlüsselt, um beispielsweise einen Know-How-Schutz zu realisieren. Beispielsweise umfassen dann das entsprechende Gerät D zum Ausführen der Steuerbefehle und/oder das erste Überprüfungsmodul 140 und/oder das erste Ausführungsmodul 150, 150_D über entsprechende kryptographische Mittel. Beispielsweise sind die kryptographischen Mittel ein entsprechender kryptographischen Schlüssel, um ggf. die Steuerbefehle und/oder die Ausführungsanforderungen zu entschlüsseln. Die entsprechenden kryptographischen Mittel können dann beispielsweise dazu genutzt werden, um einen kryptographischen Schutz zu erzeugen (z. B. verschlüsseln) und/oder einen kryptographischen Schutz zu entfernen (z. B. eine Entschlüsselung durchführen).

Das erste Zerlegemodul und das erste Bestimmungsmodul zerlegen zunächst die Befehlsfolge in Steuerbefehle oder bestimmen die Steuerbefehle anhand der Befehlsfolge, wobei die Steuerbefehle auch eine Gruppe von Steuerbefehlen oder mehrere Steuerbefehle sein können. Das erste Bestimmungsmodul 110 kennt vorzugsweise die verfügbaren Geräte und/oder Knoten und bestimmt für die Steuerbefehle (die auch eine Gruppe von Steuerbefehlen sein können) Ausführungsanforderungen. Alternativ können die Ausführungsanforderungen bereits in der Befehlsfolge kodiert/gespeichert sein und das erste Bestimmungsmodul 110 bestimmt anhand dieser Information die Ausführungsanforderungen für die entsprechenden Steuerbefehle. Die Ausführungsanforderungen werden damit beispielsweise anhand der Steuerbefehle bestimmt oder berechnet (wie oben erwähnt).

Zusätzlich kann das Steuersystem einen Optimierer umfassen, der anhand der Ausführungsanforderungen eine Ausführung der Steuerbefehle durch die Geräte anhand eines vorgegebenen Kriteriums optimiert. Alternativ bestimmt der Optimierer die Ausführungsanforderungen und stellt sie dem ersten Bestimmungsmodul 110 bereit.

Das Steuersystem ist dadurch beispielsweise in der Lage, einen Fertigungsprozess nach den vorgegebenen Kriterien zu optimieren. Die vorgegebenen Kriterien können beispielsweise die Fertigungszeit, die verursachten Kosten oder die aufzuwendende Energie sein. Der Optimierer kann beispielsweise ein integrales Modul des ersten Zerlegemoduls oder des ersten Bestimmungsmoduls sein. Alternativ kann der Optimierer als eigenständiges Modul des Steuersystems ausgebildet sein.

Ist der Optimierer beispielsweise ein integrales Modul des Zerlegemoduls oder des Bestimmungsmoduls kann er beim Zerlegen der Befehlsfolge in Steuerbefehle und beim Bestimmen der Ausführungsanforderungen die Optimierung vornehmen. Dabei berücksichtigt das erste Zerlegemodul oder das erste Bestimmungsmodul 110 mittels des Optimierers, beispielsweise beim Zerlegen der Befehlsfolge in die Steuerbefehle, das vorgegebene Kriterium.

Ist beispielsweise das Kriterium, die Fertigungszeit bei der Produktion eines Produktes zu optimieren (z. B. Fertigungszeit für das Produkt möglichst gering zu halten), wird die Befehlsfolge derart zerlegt und/oder entsprechend optimierte Ausführungsanforderungen berechnet, dass die Einzelkomponenten des Produktes parallel von mehreren Geräten hergestellt werden - also die entsprechenden Steuerbefehle in Steuertransaktionen von diesen abgearbeitet werden. Ist beispielsweise das Kriterium, die Fertigungskosten bei der Produktion eines Produktes zu optimieren, wird die Befehlsfolge derart zerlegt und/oder entsprechend optimierte Ausführungsanforderungen berechnet, dass die Einzelkomponenten seriell von einem Gerät (z. B. dem entsprechenden Gerät) oder möglichst wenigen Geräten hergestellt werden - also die entsprechenden Steuerbefehle in Steuertransaktionen von den entsprechenden Knoten/Geräte abgearbeitet werden. Um dies zu steuern, werden beispielsweise durch den Optimierer die entsprechenden Informationen an das Bestimmungsmodul übergeben, sodass das Bestimmungsmodul diese Informationen in den Ausführungsanforderungen hinterlegt.

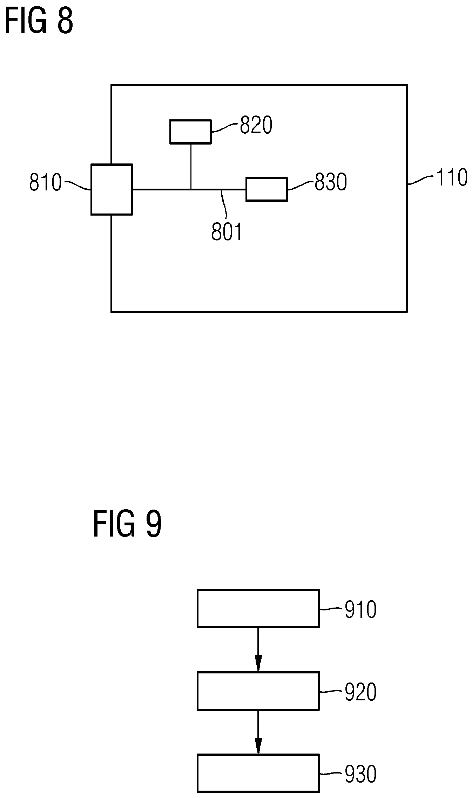

In einer Variante ist das Bestimmungsmodul ein Bestimmungsmodul für ein verteiltes Datenbanksystem oder für ein Steuersystem mit einem verteilten Datenbanksystem zum Steuern und/oder Überwachen von Geräten. In dieser Variante weist es einen Prozessor und optional eine Speichereinheit auf. Der Prozessor ist zum Bestimmen von Ausführungsanforderungen für eine Ausführung von Steuerbefehlen durch die Geräte eingerichtet, wobei in den Ausführungsanforderungen gerätespezifische Anforderungen und/oder vorausgesetzte Steuerbefehle gespeichert sind und die Ausführungsanforderungen in Transaktionen des verteilten Datenbanksystems gespeichert sind. Zusätzlich kann es beispielsweise die Ausführungsvarianten und die genannten Merkmale aus den Fig. 8 und 9 umfassen.

Umfasst z. B. das Bestimmungsmodul das erste Zuordnungsmodul 120, dann kann das erste Zuordnungsmodul 120 beispielsweise zum Zuordnen der jeweiligen Ausführungsanforderungen zu den Steuerbefehlen eingerichtet sein. Das erste Zuordnungsmodul 120 kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blockkette). Das erste Zuordnungsmodul 120 kann insbesondere durch die Blockkette bzw. einem Smart-Contract realisiert werden oder ist eine Softwarekomponente der Blockketten-Infrastruktur.
Werden beispielsweise für das Ausführen von Steuerbefehlen bzw. Steuertransaktionen keine vorausgesetzten Steuerbefehle benötigt, können die vorausgesetzten Steuerbefehle insbesondere leer sein. Beispielsweise können sie mit einer Null belegt sein, mit einem Leerstring belegt sein oder einem Wert, der angibt, dass keine vorausgesetzten Steuerbefehle notwendig sind, belegt sein. Alternativ kann beispielsweise einem Teil der Steuerbefehle keine Ausführungsanforderung zugeordnet sein, wobei insbesondere zumindest einem der Steuerbefehle zumindest eine Ausführungsanforderung zugeordnet ist.

Das erste Speichermodul 130 ist zum Speichern der jeweiligen Steuerbefehle mit den zugeordneten Ausführungsanforderungen in Steuertransaktionen eingerichtet, wobei die Steuertransaktionen in Datenblöcken B des verteilten Datenbanksystems (BC) gespeichert werden oder die Steuertransaktionen durch das verteilte Datenbanksystem BC gespeichert werden. Die Steuertransaktionen werden dabei beispielsweise mittels der Datenblöcke B an die Geräte D, BCN_D übertragen. Dies erfolgt beispielsweise dadurch, dass die entsprechenden Datenblöcke durch die Blockkette über das erste Netzwerk NW1 an die entsprechenden Knoten übertragen werden, z. B. wenn die Datenblöcke für die Blockkette und/oder Knoten und/oder spezifische Knoten repliziert werden. Handelt es sich beispielsweise um ein blockketten-externes Gerät, so kann dieses beispielsweise über eine Schnittstelle (z. B. ein Web-Interface) der Blockkette an ein solches Gerät übertragen werden oder ein solches Gerät ruft die entsprechenden Daten selbst von der Blockkette ab z. B. nach einem vorgegebenen Zeitintervall.

In einer weiteren Variante, die beispielsweise auf dem Lightning Netzwerk beruht, werden die Ausführungsanforderungen und die Steuerbefehle in Steuertransaktionen zunächst gespeichert. Für die Übertragung der Steuertransaktionen an die Geräte und/oder die Knoten kann ggf. ein direkter und/oder separater Kommunikationskanal zwischen dem Speichermodul (oder einem anderen Modul wie das Bestimmungsmodul oder das Zuordnungsmodul) und dem entsprechenden Gerät aufgebaut werden. Über diesen Kommunikationskanal werden dann die entsprechenden Transaktionen oder Nachrichten ausgetauscht, damit der entsprechende Knoten/das entsprechende Gerät die notwendigen Daten für eine Ausführung der Steuerbefehle erhält. Eine Bestätigung (z. B. in Form einer Bestätigungstransaktion) für eine Ausführung der Steuerbefehle durch das entsprechende Gerät (z. B. nachdem die entsprechenden Ausführungsanforderungen durch das Gerät geprüft wurden) kann dann beispielsweise in dem verteilten Datenbanksystem gespeichert werden. Werden beispielsweise die Steuertransaktionen an das entsprechende Gerät über den Kommunikationskanal übermittelt, so kann beispielsweise bei einem Schließen des Kommunikationskanals eine Bestätigung der Übertragung der Steuertransaktionen an das entsprechende Gerät in einer Transaktion (z. B. eine Übertragungsbestätigungstransaktion) gespeichert werden. Diese Übertragungsbestätigungstransaktion wird dann vorzugsweise in dem verteilten Datenbanksystem gespeichert (z. B. in Datenblöcken des verteilten Datenbanksystems). Dies ist insbesondere dahingehend vorteilhaft, um die Steuertransaktionen möglichst schnell an das entsprechende Gerät zu übertragen. Diese Übertragung kann beispielsweise auch erfolgen, wenn ein Kommunikationskanal mit dem entsprechenden Gerät aufgebaut wird, um die Ausführbarkeit der Steuerbefehle zu überprüfen.

Ein Speichermodul dieser Implementierungsvariante kann beispielsweise wie folgt ausgebildet sein:
Das erste Speichermodul 130 kann dabei zum Speichern der jeweiligen Steuerbefehle mit den zugeordneten Ausführungsanforderungen in Steuertransaktionen eingerichtet sein, wobei die Steuertransaktionen mittels eines separaten und/oder direkten Kommunikationskanals an das entsprechende Gerät übertragen werden. Der Kommunikationskanal kann dabei Teil des verteilten Datenbanksystems sein oder unabhängig von diesem realisiert sein. Vorzugsweise erfolgt die Übertragung, wenn die Ausführbarkeit der Steuerbefehle mittels der Ausführungsanforderungen für/durch das entsprechende Gerät bestätigt werden könnte. Dabei wird beispielsweise überprüft, ob das Gerät die entsprechenden Ausführungsanforderungen (z. B. den ersten Teil der Ausführungsanforderungen) für die Steuerbefehle erfüllt (so wie dies diesem Ausführungsbeispiel oder seiner Varianten beschrieben wird).

Vorzugsweise werden beim Bestimmen der Steuerbefehle durch das erste Bestimmungsmodul 110 diese gerätespezifisch bestimmt. Das bedeutet insbesondere, dass zunächst Gruppen von Steuerbefehlen gebildet werden, die vollständig von einem entsprechenden Gerät abgearbeitet werden können. Diesen Gruppen von Steuerbefehlen können auch einfach nur Steuerbefehle genannt werden. Für diese Gruppen von Steuerbefehlen bzw. Steuerbefehle werden dann die Ausführungsvoraussetzungen (die z. B. auch als Ausführungsanforderungen bezeichnet werden können) berechnet - so wie dies oben erläutert wurde. Beim Speichern werden dann eine entsprechende Gruppe von Steuerbefehlen bzw. die entsprechenden Steuerbefehle zusammen mit den zugehörigen/entsprechenden Ausführungsvoraussetzungen in einer Steuertransaktion gespeichert. Entsprechend umfassen vorzugsweise die Steuertransaktionen gerätespezifische Steuerbefehle.

Es kann sich bei dem Bestimmungsmodul beispielsweise auch um ein erfindungsgemäßes Bestimmungsmodul oder eine seiner Ausführungsformen bzw. ein Bestimmungsmodul, wie es in den Fig. 8 und/oder 9 erläutert wird.

Das Speichern kann auf unterschiedliche Weise realisiert werden. Beispielsweise kann ein Steuerbefehl oder mehrere Steuerbefehle in einer spezifischen Steuertransaktion gespeichert werden, wobei diese spezifische Steuertransaktion die entsprechenden Ausführungsanforderungen für den Steuerbefehl oder die mehreren Steuerbefehle umfasst. Dieser integrale Ansatz ist vorteilhaft, um auf die Daten möglichst einfach zuzugreifen.
Alternativ können die entsprechenden Ausführungsanforderungen in einer eigenen bzw. separaten Steuertransaktion gespeichert sein, wobei die eigene Transaktion eine Referenz oder einen Hinweis umfasst, auf welchen Steuerbefehl oder welche Steuerbefehle sich diese entsprechende Ausführungsanforderungen beziehen. Dies erfolgt beispielsweise mit einer Blocknummer (eines Blocks) mit den entsprechenden (Steuer-)Transaktionen (mit Steuerbefehlen), eine Prüfsumme des Blocks oder der Transaktion, der/die die Steuerbefehle umfasst. Dies ist vorteilhaft, wenn die Ausführungsanforderungen erst während der Abarbeitung der Steuerbefehle durch die entsprechenden Geräte bestimmt werden. Ein Gerät (bzw. das erste Überprüfungsmodul 140 bzw. das erste Ausführungsmodul 150), z. B. das entsprechende Gerät, das die Steuerbefehle oder einen Teil der Steuerbefehle einer Steuertransaktion abarbeitet, beginnt eine Abarbeitung der entsprechenden Steuerbefehle erst, wenn die entsprechenden Ausführungsanforderungen in einer Steuertransaktion in der Blockkette verfügbar sind. Andernfalls wartet das Gerät bzw. das erste Überprüfungsmodul 140 bzw. das erste Ausführungsmodul 150 bis diese Steuertransaktion mit den entsprechenden Ausführungsanforderungen durch die Blockkette BC bereitgestellt werden.

In einer weiteren Variante werden die Steuertransaktionen erstellt bzw. die Steuerbefehle und die Ausführungsanforderungen in Steuertransaktionen gespeichert, wenn die Ausführungsanforderungen erfolgreich für die Steuerbefehle bestimmt werden konnten und/oder eine Ausführbarkeit der Steuerbefehle erfolgreich bestimmt wurde (also die Steuerbefehle durch die Geräte ausgeführt werden können).

Das erste Speichermodul 130 kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blockkette). Das erste Speichermodul 130 kann insbesondere durch die Blockkette bzw. einen Smart-Contract realisiert werden oder ist eine Softwarekomponente der Blockketten-Infrastruktur.

In einer weiteren Variante umfasst das erste Speichermodul 130 das Zuordnungsmodul 120 selbst oder die Funktionalitäten des Zuordnungsmoduls 120.

Das erste Überprüfungsmodul 140 ist zum Überprüfen der jeweiligen Ausführungsanforderungen beim Ausführen der Steuerbefehle einer der Steuertransaktionen durch ein entsprechendes Gerät eingerichtet, wobei
- die gerätespezifischen Anforderungen der jeweiligen Ausführungsanforderungen der jeweiligen Steuertransaktion für das entsprechende Gerät überprüft werden; und/oder
- überprüft wird, ob Bestätigungstransaktionen für die vorausgesetzten Steuerbefehle der jeweiligen Ausführungsanforderungen der jeweiligen Steuertransaktion in Datenblöcken des verteilten Datenbanksystems verfügbar sind, und/oder
- überprüft wird, ob Bestätigungstransaktionen für die vorausgesetzten Steuerbefehle der jeweiligen Ausführungsanforderungen der jeweiligen Steuertransaktion in dem verteilten Datenbanksystem verfügbar sind.

Das Überprüfen, ob Bestätigungstransaktionen für die vorausgesetzten Steuerbefehle der jeweiligen Ausführungsanforderungen der jeweiligen Steuertransaktion in dem verteilten Datenbanksystem verfügbar sind, kann wie folgt realisiert werden. Es wird beispielsweise überprüft, ob für die vorausgesetzten Steuerbefehle entsprechende bzw. zugehörige Bestätigungstransaktionen in dem verteilten Datenbanksystem gespeichert sind, die insbesondere eine erfolgreiche Ausführung der vorausgesetzten Steuerbefehle bestätigen. Zusätzlich können auch weitere Daten der Bestätigungstransaktionen überprüft werden, z. B. mit welcher Qualität die vorausgesetzten Steuerbefehle ausgeführt wurden (z. B. wie groß sind die Abweichungen, die bei einem Fräsen eine Werkstücks auftraten, wie lange hat die Ausführung der vorausgesetzten Steuerbefehle gedauert). Um diese Überprüfung zu erleichtern, können beispielsweise die vorausgesetzten Steuerbefehlen Angaben zum Speicherort für Bestätigungstransaktionen der vorausgesetzten Steuerbefehle oder zu dem Gerät (z. B. eine UID des Gerätes) umfassen, das die Steuerbefehle ausführen soll (z. B. die gerätespezifischen Anforderungen und/oder die vorausgesetzten Steuerbefehle und/oder die Ausführungsanforderungen). Unter einem Speicherort ist dabei beispielsweise eine Speicheradresse, eine Kommunikationsschnittstelle, eine Verknüpfung/Referenz/Alias (engl. Link/Reference) mit dem die Bestätigungstransaktionen adressiert werden können oder eine Blocknummer oder Blockadresse einer Blockkette mit entsprechenden Bestätigungstransaktionen zu verstehen. Beispielsweise kann ein entsprechender Block einer Blockkette bzw. ein Datenblock des verteilten Datenbanksystems eine solche Verknüpfung/Referenz/Alias umfassen. Eine solche Verknüpfung adressiert beispielsweise eine Adresse in einem Datenspeicher oder Speichermodul. Der Speicherinhalt der Adresse ist zunächst z. B. mit 0 initialisiert und wird z. B. sobald die Bestätigungstransaktion verfügbar ist mit der Bestätigungstransaktion selbst oder einer Nummer oder Adresse der entsprechenden Bestätigungstransaktion oder eines Datenblocks, der die entsprechende Bestätigungstransaktion umfasst, belegt.

Dabei ist insbesondere mit "einem der Steuerbefehle" ein oder mehrere der Steuerbefehle gemeint (sprich es handelt sich z. B. um einen oder mehrere Steuerbefehle). Alternativ ist unter "mit einem der Steuerbefehle", "mindestens einen der Steuerbefehl" zu verstehen. Bei "einem der Steuerbefehle" handelt es sich vorzugsweise um die Steuerbefehle einer entsprechenden Steuertransaktion.

In einer Variante überprüft das Überprüfungsmodul einen eindeutigen Identifizierer (z. B. eine Unique Identifier (UID)) der in einer Steuertransaktion angibt, welches Gerät die Steuerbefehle ausführen soll. Hierdurch kann dann festgestellt werden, ob die entsprechende Steuertransaktion von dem Geräte oder Knoten ausgeführt werden kann. Das Ergebnis dieser Prüfung wird im Prüfergebnis festgehalten. Ein solcher eindeutiger Identifizierer kann beispielsweise durch das Bestimmungsmodul festgelegt bzw. ermittelt werden. Hierzu kann beispielsweise das Bestimmungsmodul über ein Verzeichnis aller Identifizierer der Geräte/Knoten umfassen. Für eine Ausführung der Steuerbefehle mittels der entsprechenden Steuertransaktionen werden die entsprechenden eindeutigen Identifizierer für die Geräte oder die Knoten, die die Steuerbefehle ausführen sollen, in den Ausführungsanforderungen und/oder den Steuertransaktionen und/oder Steuerbefehlen gespeichert (z. B. durch das Bestimmungsmodul selbst oder das erste Speichermodul).

Dies ist dahingehend vorteilhaft, damit die Geräte/Knoten beispielsweise schnell feststellen können, ob die entsprechenden Steuerbefehle z. B. durch ein bestimmtes Gerät ausgeführt werden können. Dabei ist den Geräten bzw. Knoten beispielsweise ein eindeutiger Identifizierer (Unique Identifier (UID)) zugeordnet. Das Steuersystem bzw. das Bestimmungsmodul kennt insbesondere die entsprechenden eindeutigen Identifizierer der Geräte (z. B. mit den Daten zu Geräten/Knoten im Konfigurationsspeicher gespeichert) und weist beim Bestimmen der Steuerbefehle entweder den Steuerbefehlen selbst und/oder mittels der Ausführungsanforderungen und/oder mittels der Steuertransaktionen die entsprechenden eindeutigen Identifizierer zu. Bei den zugewiesenen bzw. zugeordneten eindeutigen Identifizierern handelt es sich insbesondere um die entsprechenden eindeutigen Identifizierer der Geräte oder der Knoten, die die Steuerbefehle ausführen sollen.

Das erste Überprüfungsmodul 140 kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blockkette). Das erste Überprüfungsmodul 140 kann insbesondere durch die Blockkette bzw. einem Smart-Contract realisiert werden oder ist eine Softwarekomponente der Blockketten-Infrastruktur oder ist eine Komponente eines Knotens oder eines Gerätes, das die Steuerbefehle ausführen kann.

Ist die Überprüfung der Steuerbefehle eines Datenblocks und/oder einer/der Steuertransaktion (und/oder der entsprechend zugehörigen Ausführungsanforderungen und/oder vorausgesetzten Steuerbefehle), die durch das entsprechende Gerät ausgeführt werden sollen, durch das erste Überprüfungsmodul 140 abgeschlossen, so wird ein Ergebnis der Prüfung in einem Datensatz bereitgestellt. Das erste Überprüfungsmodul 140 kann beispielsweise noch zusätzliche Überprüfungen durchführen. Beispielsweise können die Transaktionsprüfsumme oder die Datenblockprüfsumme überprüft werden. Handelt es sich bei einer entsprechenden Prüfsumme um eine digitale Signatur oder ein Zertifikat, so kann beispielsweise überprüft werden, ob der Ausstellende bzw. Prüfsummenerzeuger überhaupt berechtigt ist, dass seine Steuerbefehle auf dem Gerät bzw. durch das Gerät abgearbeitet werden.

Es kann beispielsweise auch überprüft werden, ob das entsprechende Gerät über ein gefordertes digitales Zertifikat verfügt, das beispielsweise aussagt, dass das entsprechende Gerät vertrauenswürdig ist. Dies kann beispielsweise notwendig sein, wenn es sich um Steuerbefehle handelt, die Know-How umfassen, das nicht öffentlich zugänglich gemacht werden soll.

Es ist beispielsweise auch denkbar, dass die Steuerbefehle kryptographisch verschlüsselt sind und vorzugsweise nur das entsprechende Gerät D Mittel umfasst (z. B. einen entsprechenden Schlüssel), diese kryptographische Verschlüsselung aufzuheben. Diese Mittel kann das entsprechende Gerät D selbst umfassen oder das Ausführungsmodul 150, 150_D umfasst diese Mittel.

Das Ausführungsmodul 150, 150_D ist zum Ausführen der Steuerbefehle durch das entsprechende Gerät abhängig von dem Ergebnis des Überprüfens eingerichtet. Ergibt die Überprüfung bzw. umfasst das Ergebnis eine Bestätigung für das Ausführen der Steuerbefehle, führt das entsprechende Gerät diese Steuerbefehle aus. Es kann beispielsweise in eine Komponente ein Loch bohren entsprechend der Spezifikationen der Steuerbefehle, die ursprünglich in der Befehlsfolge spezifiziert wurden. Ergibt die Überprüfung bzw. umfasst das Ergebnis keine Bestätigung für das Ausführen der Steuerbefehle, so wird eine Abarbeitung/Ausführung der Steuerbefehle unterbunden.

Sagt das Ergebnis beispielsweise aus, dass die Steuerbefehle nicht durch das entsprechende Gerät ausgeführt werden sollen, kann beispielsweise ein Steuersignal bereitgestellt werden. Mit dem Steuersignal können beispielsweise ein Alarm, ein Servicetechniker oder die Steuerbefehle (vorzugsweise alle), die anhand einer Befehlsfolge erzeugt wurden, für ungültig erklärt werden, sodass andere Steuerbefehle der Befehlsfolge nicht mehr durch andere Geräte ausgeführt werden. Hierfür kann beispielsweise eine entsprechende Steuertransaktion mit einem solchen Steuerbefehl für alle Geräte in einem Block der Blockkette BC gespeichert werden und an die Geräte mittels der Blockkette BC übermittelt werden. Eine solche Steuertransaktion umfasst vorzugsweise ebenfalls Ausführungsanforderungen, die eine Priorität umfassen. Diese Priorität ist vorzugsweise höher als eine Priorität der übrigen Steuerbefehle. Mit dieser erhöhten Priorität wird die entsprechende Steueranweisung bevorzugt von den Geräten abgearbeitet, um beispielsweise die restlichen Steuerbefehle der Befehlsfolge zu invalidieren (für ungültig erklären) bzw. deren Ausführung zu unterbinden.

Ist das erste Überprüfungsmodul 140 beispielsweise ein Modul der Blockkette BC, so umfasst das erste Überprüfungsmodul 140 beispielsweise eine Liste der Geräte mit ihren gerätespezifischen Eigenschaften, anhand derer die gerätespezifischen Anforderungen überprüft werden können. Alternativ kann das erste Überprüfungsmodul 140 eine Liste der Geräte und ihre Netzwerkadressen umfassen, und die entsprechenden gerätespezifischen Eigenschaften bei den Geräten selbst abfragen. Dies ist vorteilhaft, um den aktuellen Betriebszustand der Geräte bei der Überprüfung zu berücksichtigen.

Das erste Ausführungsmodul 150, 150_D kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blocckette). Das Ausführungsmodul kann insbesondere durch die Blockkette bzw. einen Smart-Contract realisiert werden oder ist eine Softwarekomponente der Blockketten-Infrastruktur oder ist eine Komponente eines Knotens (z. B. ein Blockkettenausführungsmodul 150) oder eines Gerätes (z. B. ein Geräte-ausführungsmodul 150_D), das die Steuerbefehle ausführen kann.

Ist das erste Ausführungsmodul beispielsweise ein Modul der Blockkette, so umfasst das erste Ausführungsmodul 150 beispielsweise eine Liste der Geräte und deren Netzwerkadressen, um die Geräte für das Abarbeiten der Steuerbefehle anzusteuern.

Das zweite (optionale) Speichermodul 160 ist zum Speichern des Ergebnisses des Ausführens der Steuerbefehle in Bestätigungstransaktionen der Datenblöcke des verteilten Datenbanksystems eingerichtet. Alternativ werden z. B. die Bestätigungstransaktionen in dem verteilten Datenbanksystem gespeichert (z. B. bei blocklosen Implementierungen).

War die Abarbeitung der Steuerbefehle durch das entsprechende Gerät erfolgreich, so wird diese Information in einer Bestätigungstransaktion in der Blockkette gespeichert. Gibt es beispielsweise andere Steuerbefehle, die eine Abarbeitung der nun abgearbeiteten Steuerbefehle voraussetzen (vorausgesetzte Steuerbefehle), können nun diese anderen Steuerbefehle durch ein anderes entsprechendes Gerät oder das gleiche entsprechende Gerät abgearbeitet werden, sofern auch die restlichen Ausführungsanforderungen erfüllt sind.

Das zweite Speichermodul 160 kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blockkette). Das zweite Speichermodul 160 kann insbesondere durch die Blockkette bzw. einem Smart-Contract realisiert werden oder ist eine Softwarekomponente der Blockketten-Infrastruktur oder ist eine Komponente eines Knoten, das die Steuerbefehle ausführen kann.

Das Steuersystem und/oder die verteilte Datenbanksystem bzw. seine Knoten (z. B. Blockketten-Knoten, Geräte (Geräteknoten und blockkettenexterne Geräte)) können beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN) ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über die Blockkette bzw. deren Infrastruktur miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Je nach gewählter Implementierungsvariante kann das verteilte Datenbanksystem das erste Überprüfungsmodul und/oder das erste Ausführungsmodul und/oder das zweite Speichermodul umfassen. Entsprechend können diese Module implementierungsabhängig auch als optionale Module bezeichnet werden.

In dieser Implementierungsvariante sind die Geräte einfach gehalten - z. B. ohne derartig korrespondierende Module. Dies ist vorteilhaft, um die Geräte möglichst einfach zu gestalten und an das verteilte Datenbanksystem anzubinden. Dadurch können insbesondere kostengünstige Geräte eingesetzt werden.

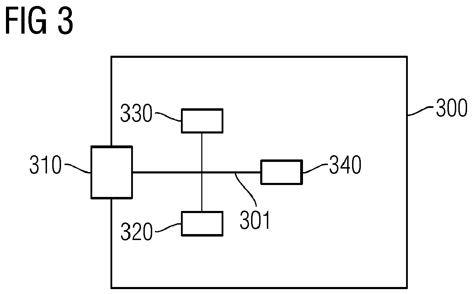

In einer weiteren Implementierungsvariante umfassen die Geräte ein erstes Geräte-Überprüfungsmodul und/oder ein erstes Geräte-Ausführungsmodul und/oder ein zweites Geräte-Speichermodul, so wie dies beispielsweise in Fig. 3 erläutert ist. Je nach gewählter Implementierung können das erste Überprüfungsmodul und/oder das erste Ausführungsmodul und/oder ein zweite Speichermodul bei der Realsierung ihrer Funktionalitäten/Aufgaben auf die korrespondierenden Module der Geräte zugreifen.

Mit anderen Worten kennt das Steuersystem bzw. das verteilte Datenbanksystem die entsprechenden Geräte(module) (indem z. B. mittels einer Tabelle diese Daten gespeichert sind). Das erste Überprüfungsmodul 140 und/oder das erste Ausführungsmodul 150 und/oder das zweite Speichermodul 160 verfügen über Informationen, wie die Gerätemodule 150_D angesprochen bzw. angesteuert werden können (z. B. über eine modulinterne Tabelle, die sich vorzugsweise automatisch aktualisiert beispielsweise über Broadcast-Nachrichten im ersten Kommunikationsnetzwerk NW1 oder über das verteilte Datenbanksystem BC). Das erste Überprüfungsmodul und/oder das erste Ausführungsmodul und/oder das zweite Speichermodul implementieren dabei vorzugsweise nur den Teil, der die notwendigen Informationen bzw. Aufgaben an das entsprechende Gerät bzw. die entsprechenden Geräte verteilt bzw. übermittelt (z. B. die Steuertransaktionen oder die Bestätigungstransaktionen oder das Ergebnis des Überprüfens durch das Überprüfungsmodul). Die restliche Funktionalität wird durch die Gerätemodule realisiert.

Dies ist dahingehend vorteilhaft, um rechenintensivere Überprüfungsaufgaben durch das erste Überprüfungsmodul oder Ausführungsaufgaben durch das erste Ausführungsmodul ganz oder teilweise auf die entsprechenden Geräte auszulagern.

Auch kann das Steuersystem noch ein optionales Registrierungsmodul umfassen.

Das Registrierungsmodul kann beispielsweise als Software- und/oder Hardwarekomponente ausgebildet sein - analog zum ersten Bestimmungsmodul 110 (z. B. als Smart-Contract der Blockkette oder als vertrauenswürdige Knoten der Blockkette). Das Registrierungsmodul kann insbesondere durch die Blockkette bzw. einen Smart-Contract realisiert werden oder ist eine Softwarekomponente der Blockketten-Infrastruktur. Alternativ kann das Registrierungsmodul als spezifischer vertrauenswürdiger Knoten realisiert sein, dessen Netzwerkadresse beispielsweise öffentlich bekannt ist. Handelt es sich beispielsweise um ein geschlossenes verteiltes Datenbanksystem, bei dem nur berechtigte Knoten und/oder Geräte an das Steuersystem bzw. an das verteilte Datenbanksystem angebunden werden, so ist insbesondere ausschließlich die Netzwerkadresse des Registrierungsmoduls öffentlich bekannt.

Das Registrierungsmodul ist dazu eingerichtet neue Knoten und/oder Geräte dem Steuersystem hinzuzufügen. Sobald ein neues Gerät und/oder Knoten dem Steuersystem bzw. dem verteilten Datenbanksystem beitreten möchte, wird durch das neue Gerät oder durch den neuen Knoten eine Anfrage an das Registrierungsmodul gesendet. Dies kann direkt erfolgen, indem beispielsweise Knoten- und/oder Geräteinformationen direkt an das Registrierungsmodul übermittelt werden. Erfolgt dies indirekt wird die Anfrage zwischen den Knoten und Modulen des verteilten Datenbanksystems weitergeleitet bis die Anfrage das Registrierungsmodul erreicht.

Die Knoten- und/oder Geräteinformationen können dabei folgendes umfassen:
- Geräteadresse/Knotenadresse
- Betreiber des Gerätes/Knotens
- Funktionsumfang des Gerätes/Knotens
- kryptographische Schlüssel (z. B. zum Überprüfen von Prüfsummen/digitalen Signaturen, die durch das Gerät/den Knoten erzeugt wurden)
- weitere Eigenschaften, die bei der Überprüfung der Ausführungsanforderungen benötigt werden

Die Knoten- und/oder Geräteinformationen können dann beispielsweise im Steuersystem (z. B. in entsprechenden Tabellen des Steuersystems, in dem verteilten Datenbanksystem selbst, oder einer Gerätedatenbank, wobei z. B. das Steuersystem und/oder das verteilte Datenbanksystem diese Gerätedatenbank umfasst) gespeichert werden, damit das Überprüfen und/oder das Ausführen der Steuerbefehle bzw. Steuertransaktionen durch die entsprechenden Module realisiert werden kann.

Handelt es sich bei dem Datenbanksystem beispielsweise um ein geschlossenes verteiltes Datenbanksystem, überprüft das Registrierungsmodul auch, ob das Gerät/der Knoten zugangsberechtigt ist - also ob insbesondere das Gerät/der Knoten als Teil des Steuersystems bzw. des verteilten Datenbanksystems akzeptiert ist. Hierfür stellt das Gerät/der Knoten beispielsweise Authentifizierungsinformationen (kryptographische Schlüssel, Passwörter, usw.) bereit, die durch das Registrierungsmodul überprüft werden.

Handelt es sich bei dem Datenbanksystem beispielsweise um ein offenes verteiltes Datenbanksystem, so werden beispielsweise die Knoten- und/oder Geräteinformationen erfasst.

Je nach Implementierungsvariante sind das Überprüfungsmodul 140 und/oder das Ausführungsmodul 150 und/oder das zweite Speichermodul 160 optionale Module.

Insbesondere kann mittels des Steuersystems beispielsweise auch ein digitaler Zwilling (z. B. in Form einer Blockkette) realisiert werden bzw. das Steuersystem ist ein digitaler Zwilling.

Der digitale Zwilling wird dabei beispielsweise für ein Steuergerät oder ein zu fertigendes Produkt realisiert (bzw. berechnet oder erzeugt).

Das verteilte Datenbanksystem kann beispielsweise das erste verteilte Datenbanksystem nach sein.

Im Übrigen ist ein Speichern von Transaktionen in Datenblöcken eine unter mehreren Varianten, die Transaktionen zu speichern. Beispielsweise sind Implementierungen bekannt, die z. B. als blocklose verteilte Datenbanken (bzw. Datenbanksysteme) realisiert sind. Entsprechend ist es auch möglich die entsprechenden Transaktionen direkt in dem verteilten Datenbanksystem zu speichern. Entsprechend bzw. auf analoge Weise kann eine Übermittlung von Transaktionen an Knoten oder Geräte auch ohne Datenblöcke realisiert werden. Entsprechend bzw. auf analoge Weise kann ein Zugriff, ein Laden oder ein Bereitstellen von Transaktionen (oder ähnliche Operationen) des verteilten Datenbanksystems auch ohne eine Verwendung von Datenblöcken realisiert werden.

In einer weiteren Variante umfasst das Steuersystem folgende Merkmale:
- beispielsweise ein erstes Bestimmungsmodul zum Bestimmen von Ausführungsanforderungen für eine Ausführung von Steuerbefehlen durch die Geräte, wobei
   - beispielsweise in den Ausführungsanforderungen gerätespezifischen Anforderungen und/oder vorausgesetzte Steuerbefehle gespeichert sind;
- beispielsweise ein verteiltes Datenbanksystem aufweisend,
   - beispielsweise eine Vielzahl von Knoten, wobei die Knoten und die Geräte über ein erstes Kommunikationsnetzwerk miteinander verbunden sind;
- beispielsweise ein erstes Zuordnungsmodul zum Zuordnen der jeweiligen Ausführungsanforderungen zu den Steuerbefehlen;
- beispielsweise ein erstes Speichermodul zum Speichern der jeweiligen Steuerbefehle mit den zugeordneten Ausführungsanforderungen in Steuertransaktionen, wobei
   - beispielsweise die Steuertransaktionen in Datenblöcken des verteilten Datenbanksystems gespeichert werden;
   - beispielsweise die Steuertransaktionen mittels der Datenblöcke an die Geräte übermittelt werden;
- beispielsweise ein erstes Überprüfungsmodul zum Überprüfen der jeweiligen Ausführungsanforderungen zum Ausführen der Steuerbefehle einer der Steuertransaktionen durch ein entsprechendes Gerät, wobei
   - beispielsweise die gerätespezifischen Anforderungen für das entsprechende Gerät überprüft werden; und/oder
   - beispielsweise überprüft wird, ob Bestätigungstransaktionen für die vorausgesetzten Steuerbefehle in Datenblöcken des verteilten Datenbanksystems verfügbar sind;
- beispielsweise ein Ausführungsmodul zum Ausführen der Steuerbefehle durch das entsprechende Gerät abhängig von einem Ergebnis des Überprüfens;

In einer weiteren Variante umfasst das Steuersystem folgende Merkmale:
- beispielsweise ein erstes Bestimmungsmodul (110), wobei
   - beispielsweise das erste Bestimmungsmodul zum Bestimmen von Ausführungsanforderungen für eine Ausführung von Steuerbefehlen durch die Geräte eingerichtet ist,
   - beispielsweise die Ausführungsanforderungen anhand der Steuerbefehle ermittelt werden,
   - beispielsweise in den Ausführungsanforderungen gerätespezifische Anforderungen und/oder vorausgesetzte Steuerbefehle gespeichert sind,
   - beispielsweise erste das Bestimmungsmodul zum Bestimmen von Übertragungsanforderungen für eine Übertragung der Steuerbefehle (z. B. mittels Steuertransaktionen) eingerichtet ist,
   - beispielsweise die Übertragungsanforderungen anhand der Steuerbefehle ermittelt werden;
- beispielsweise ein verteiltes Datenbanksystem (BC) aufweisend,
   - eine Vielzahl von Knoten (BCN, BCN D), wobei die Knoten (300, BCN, BCN_D) und die Geräte (300, D, BCN_D) über ein erstes Kommunikationsnetzwerk (NW1) miteinander verbunden sind;
- beispielsweise ein erstes Zuordnungsmodul (120) zum Zuordnen der jeweiligen Ausführungsanforderungen zu den Steuerbefehlen;
- beispielsweise ein erstes Speichermodul (130),
   - beispielsweise das erste Speichermodul zum Speichern der jeweiligen Steuerbefehle mit den (zugeordneten) Ausführungsanforderungen in Steuertransaktionen eingerichtet ist oder beispielsweise das erste Speichermodul zum Speichern der jeweiligen Steuerbefehle in Steuertransaktionen eingerichtet ist,
   - beispielsweise das erste Speichermodul anhand der Übertragungsanforderungen ein Übertragungsverfahren oder eine Kombination aus Übertragungsverfahren für eine Datenübertragung der Steuertransaktionen an die Geräte auswählt,
   - beispielsweise ein erstes ausgewähltes Übertragungsverfahren (z. B. für zeitunkritische Steuerbefehle/Steuertransaktionen) die Steuertransaktionen in dem verteilten Datenbanksystems (BC) gespeichert,
   - beispielsweise das erste ausgewählte Übertragungsverfahren die Steuertransaktionen mittels des verteilten Datenbanksystems an die Geräte (300, D, BCN_D) überträgt;
   - beispielsweise ein zweites ausgewähltes Übertragungsverfahren (z. B. für zeitkritische Steuerbefehle bzw. Steuertransaktionen) die Steuertransaktionen mittels separaten und/oder direkten Kommunikationskanälen an die Geräte (300, D, BCN_D) überträgt;
- beispielsweise ein erstes Überprüfungsmodul zum Überprüfen der jeweiligen Ausführungsanforderungen für ein Ausführen der Steuerbefehle einer der Steuertransaktionen durch das Gerät, wobei
   - beispielsweise überprüft wird, ob Bestätigungstransaktionen für die vorausgesetzten Steuerbefehle der jeweiligen Ausführungsanforderungen (z. B. des zweiten Teils der Ausführungsanforderungen oder der vorausgesetzten Steuerbefehle) der jeweiligen Steuertransaktion in dem verteilten Datenbanksystem verfügbar sind;
- beispielsweise ein erstes Ausführungsmodul zum Ausführen der Steuerbefehle durch das entsprechende Gerät abhängig von einem Ergebnis des Überprüfens.

Mit dieser Variante kann das Speichermodul, das z. B. ein Kommunikationsmodul umfasst, das Übertragungsverfahren auswählen, das für die Einhaltung der Ausführungsanforderungen und/oder Übertragungsanforderungen erforderlich ist. Dies ist insbesondere bei Echtzeitanwendungen vorteilhaft, wenn beispielsweise mit dem zweiten Übertragungsverfahren die Transaktionen/Nachrichten derart übertragen werden können, dass Echtzeitanforderungen erfüllt sind. Auch in dieser Variante oder den anderen Varianten kann eine Überprüfung der Ausführbarkeit der Steuerbefehle einstufig oder zweistufig erfolgen, indem beispielsweise das Bestimmungsmodul oder das Speichermodul die Ausführbarkeit anhand der Ausführungsanforderungen ermittelt (z. B. anhand des ersten Teils der Ausführungsanforderungen) .

In einer weiteren Variante kann das Steuersystem wie folgt ausgebildet sein:
In einer weiteren Variante umfasst das Steuersystem folgende Merkmale:
- beispielsweise ein erstes Bestimmungsmodul (110), wobei
   - beispielsweise erste das Bestimmungsmodul zum Bestimmen von Übertragungsanforderungen für eine Übertragung der Steuerbefehle (z. B. mittels Steuertransaktionen) eingerichtet ist,
   - beispielsweise die Übertragungsanforderungen anhand der Steuerbefehle ermittelt werden;
- beispielsweise ein verteiltes Datenbanksystem (BC) aufweisend,
   - eine Vielzahl von Knoten (BCN, BCN D), wobei die Knoten (300, BCN, BCN_D) und die Geräte (300, D, BCN_D) über ein erstes Kommunikationsnetzwerk (NW1) miteinander verbunden sind;
- beispielsweise ein erstes Zuordnungsmodul (120) zum Zuordnen der jeweiligen Ausführungsanforderungen zu den Steuerbefehlen;
- beispielsweise ein erstes Speichermodul (130),
   - beispielsweise beispielsweise das erste Speichermodul zum Speichern der jeweiligen Steuerbefehle in Steuertransaktionen eingerichtet ist,
   - beispielsweise das erste Speichermodul anhand der Übertragungsanforderungen ein Übertragungsverfahren oder eine Kombination aus Übertragungsverfahren für eine Datenübertragung der Steuertransaktionen an die Geräte auswählt,
   - beispielsweise ein erstes ausgewähltes Übertragungsverfahren (z. B. für zeitunkritische Steuerbefehle/Steuertransaktionen) die Steuertransaktionen in dem verteilten Datenbanksystems (BC) gespeichert,
   - beispielsweise das erste ausgewählte Übertragungsverfahren die Steuertransaktionen mittels des verteilten Datenbanksystems an die Geräte (300, D, BCN_D) überträgt;
   - beispielsweise ein zweites ausgewähltes Übertragungsverfahren (z. B. für zeitkritische Steuerbefehle bzw. Steuertransaktionen) die Steuertransaktionen mittels separaten und/oder direkten Kommunikationskanälen an die Geräte (300, D, BCN_D) überträgt;

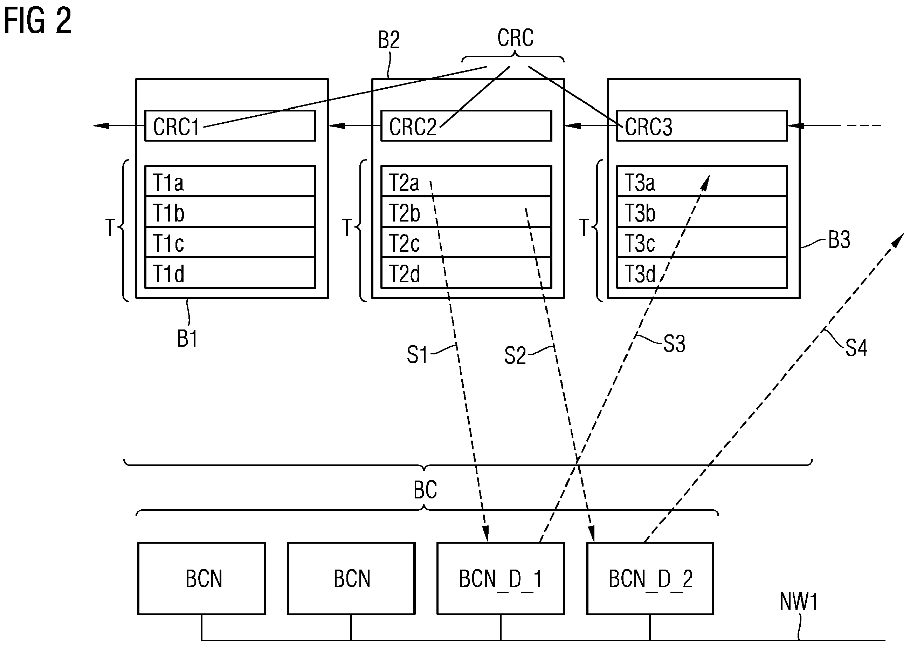

Die Fig. 2 zeigt ein zweites Ausführungsbeispiel der Erfindung, das eine Steuerung von Geräten implementiert, die als Knoten der Blockkette BC realisiert sind.

Diese Variante kann beispielsweise auch durch das Ausführungsbeispiel von Fig. 1 realisiert werden bzw. ist mit dieser kompatibel. Entsprechend kann das Steuersystem aus Fig. 2 ebenfalls eines oder mehrere Module des Steuersystems aus Fig. 1 aufweisen.

Durch das Steuersystem, das als Blockkette BC realisiert ist, werden mehrere Transaktionen T bereitgestellt, die auch Steuertransaktionen umfassen können.

Beispielsweise handelt es sich bei der fünften Transaktion T2a um eine erste Steuertransaktion, die erste Steuerbefehle und diesen Steuerbefehlen zugeordneten erste Ausführungsanforderungen umfasst. Bei der sechsten Transaktion T2b handelt es sich beispielsweise um eine zweite Steuertransaktion, die zweite Steuerbefehle und diesen Steuerbefehlen zugeordneten zweite Ausführungsanforderungen umfasst. Die zweiten Ausführungsanforderungen fordern als vorausgesetzte Steuerbefehle, dass die zweiten Steuerbefehle durch ein bestimmtes Gerät, beispielsweise einen zweiten Geräteknoten BCN_D_2 ausgeführt werden, und dass die ersten Steuerbefehle durch einen bestimmten Geräteknoten, beispielsweise einen ersten Geräteknoten BCN_D_1, ausgeführt sein müssen, bevor der zweite Geräteknoten BCN_D_2 mit der Abarbeitung der zweiten Steuerbefehle beginnen kann.

Mit anderen Worten ist durch die zweiten Ausführungsanforderungen für die zweiten Steuerbefehle festgelegt, dass mit deren Ausführung begonnen wird, wenn die ersten Steuerbefehle ausgeführt wurden und eine Bestätigung für deren Ausführung in (Bestätigungs-)Transaktionen, die in Blöcken der Blockkette gespeichert sind, durch die Blockkette bereitgestellt werden.

In einem ersten Schritt S1 werden die ersten Steuerbefehle der ersten Steuertransaktion durch die Blockkette an den ersten Geräteknoten BCN_D_1 übermittelt und durch den ersten Geräteknoten BCN_D_1 ausgeführt. Nach erfolgreicher Abarbeitung der ersten Steuerbefehle durch den ersten Geräteknoten BCN_D_1 wird hierfür in einem zweiten Schritt S2 eine Bestätigung über diese Abarbeitung in eine Bestätigungstransaktion geschrieben und in einem Datenblock der Blockkette gespeichert. Dies ist in diesem Ausführungsbeispiel die neunte Transaktion T3a.

Nachdem die Ausführungsanforderungen für die zweiten Steuerbefehle erfüllt sind, wird in einem dritten Schritt S3 durch die Blockkette die zweite Steuertransaktion dem zweiten Geräteknoten BCN_D_2 übermittelt. Dies kann beispielsweise durch die Blockkette selbst - so wie dies z. B. in Fig. 1 dargestellt ist - realisiert werden oder durch ein separates Modul oder Gerät durchgeführt werden.

Der zweite Geräteknoten BCN_D_2 arbeitet die zweiten Steuerbefehle ab. Ist das Abarbeiten erfolgreich, speichert der zweite Geräteknoten BCN_D_2 eine zweite Bestätigungstransaktion in einem Block der Blockkette in einem Schritt S4.

Unter einem Geräteknoten ist hierbei insbesondere ein Knoten der Blockkette zu verstehen, der zugleich ein Gerät ist oder Geräteeigenschaften aufweist, um Steuerbefehle abzuarbeiten.

Mit der Erfindung können auf einfache Weise komplexe Steuerbefehlsketten (auch Befehlsfolgen genannt) in einem (Automatisierungs-)Netzwerk, bei welchem Knoten und/oder Geräteknoten und/oder blockkettenexternen Geräte miteinander vernetzt sind, abgearbeitet werden, selbst wenn sich unterschiedliche Betreiber der einzelnen Knoten und Geräte nicht vertrauen.

Insbesondere kann mittels des verteilten Datenbanksystems beispielsweise auch ein digitaler Zwilling (z. B. in Form einer Blockkette) realisiert werden bzw. das verteilte Datenbanksystem ist ein digitaler Zwilling.

Der digitale Zwilling wird dabei beispielsweise für ein zu fertigendes Produkt (z. B. das Gerät aus Fig. 3 oder ein anderes Produkt/Gerät) realisiert (bzw. berechnet oder erzeugt) .

Die Fig. 3 zeigt ein drittes Ausführungsbeispiel der Erfindung, das ein Gerät betrifft, so wie es in der Fig. 1 oder der Fig. 2 mit den zugehörigen Ausführungsbeispielen erläutert wurde.

Das Gerät 300 umfasst ein erstes Kommunikationsmodul 310, ein optionales erstes Überprüfungsmodul 320, ein optionales erstes Ausführungsmodul 330 und ein optionales zweites Speichermodul 340, die über einen Bus 301 miteinander kommunikativ in Verbindung stehen. Ein Bus kann hierbei auch ein einfacher Programmfluss oder ein Datenaustausch zwischen den entsprechenden Komponenten sein.

Das Gerät kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über den Bus miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Kommunikationsmodul 310, beispielsweise eine Ethernet-Schnittstelle, ist zum Empfangen von Datenblöcken eines verteilten Datenbanksystems (beispielsweise einer Blockkette) eingerichtet, wobei
- Steuertransaktionen mit Steuerbefehlen für das Gerät in den Datenblöcken des verteilten Datenbanksystems gespeichert sind (mit anderen Worten werden die Steuertransaktionen mit den gespeicherten Steuerbefehlen mittels der Datenblöcke des verteilten Datenbanksystems empfangen),
- die Steuertransaktionen Ausführungsanforderungen umfassen,
- die Ausführungsanforderungen gerätespezifische Anforderungen für das Gerät und/oder vorausgesetzte Steuerbefehle umfassen,
- den jeweiligen Steuertransaktionen die entsprechenden Ausführungsanforderungen zugeordnet sind.

Insbesondere kann anhand der den (jeweiligen) Steuertransaktionen zugeordneten Ausführungsanforderungen durch das Gerät festgestellt werden, ob das Gerät die Steuerbefehle der (jeweiligen) Steuertransaktionen ausführen kann und/oder ob die Steuerbefehle für das Gerät zur Ausführung bestimmt sind.

Dabei ist das erste Kommunikationsmodul 310 insbesondere dazu eingerichtet die Steuertransaktionen mittels (oder mit Hilfe) der Datenblöcke des verteilten Datenbanksystems zu empfangen (bzw. die Steuertransaktionen werden mittels des verteilten Datenbanksystems an das Gerät übermittelt und das Gerät empfängt dann diese Steuertransaktionen).

Alternativ ist dabei das erste Kommunikationsmodul 310 insbesondere dazu eingerichtet die Steuertransaktionen mittels des verteilten Datenbanksystems zu empfangen. Zum Beispiel kann hierfür das Datenbanksystem die entsprechenden Steuertransaktionen an das erste Kommunikationsmodul bzw. das entsprechende Gerät senden.

Unter Empfangen ist hier insbesondere zu verstehen, dass die entsprechenden Transaktionen z. B. direkt mittels des verteilten Datenbanksystems an das Gerät übermittelt werden oder mittels des verteilten Datenbanksystems dem Gerät derart bereitgestellt werden (z. B. durch einen Knoten oder ein Blocckettenorakel), dass das Gerät die Transaktionen von dem verteilten Datenbanksystem abrufen bzw. empfangen kann.

Entsprechend kann in einer weiteren Variante das Kommunikationsmodul 310, beispielsweise eine Ethernet-Schnittstelle, zum Empfangen Steuertransaktionen von einem verteilten Datenbanksystems (beispielsweise einer Blockkette) eingerichtet sein, wobei
- beispielsweise die Steuertransaktionen Steuerbefehle für das Gerät umfassen,
- beispielsweise die Steuertransaktionen Ausführungsanforderungen umfassen,
- beispielsweise die Ausführungsanforderungen gerätespezifische Anforderungen für das Gerät und/oder vorausgesetzte Steuerbefehle umfassen,
- beispielsweise den jeweiligen Steuertransaktionen die entsprechenden Ausführungsanforderungen zugeordnet sind.

Das Kommunikationsmodul 310 kann in einer weiteren Variante auch anders ausgebildet sein. Die Steuertransaktionen (z. B. mit Steuerbefehlen und Ausführungsanforderungen) können z. B. mittels eines separaten und/oder direkten Kommunikationskanals an das (entsprechende) Gerät übertragen werden. Der Kommunikationskanal kann dabei Teil des verteilten Datenbanksystems sein oder unabhängig von diesem realisiert sein. Vorzugsweise wird nach einer Übertragung der Steuertransaktionen an das Gerät eine Übertragungsbestätigungstransaktion für die Übertragung der Steuertransaktionen zwischen dem Gerät und dem verteilten Datenbanksystem in dem verteilten Datenbanksystem gespeichert. Das Senden der Steuertransaktionen und/oder des Aufbaus des Kommunikationskanals und/oder das Speichern der Übertragungsbestätigungstransaktion können z. B. durch das Speichermoduls des verteilten Datenbanksystems und/oder des verteilten Datenbanksystems oder eines Kommunikationsmoduls des Steuersystems und/oder des verteilten Datenbanksystems (Fig. 1) erfolgen. Vorzugsweise wird beim Beenden/Schließen des Kommunikationskanals die Übertragungsbestätigungstransaktion durch das Gerät und/oder das verteilte Datenbanksystem/Steuersystem in dem verteilten Datenbanksystem gespeichert. Vorzugsweise umfasst Übertragungsbestätigungstransaktion die entsprechenden Steuertransaktionen und/oder eine Prüfsumme (z. B. eine digitale Signatur oder eine Transaktionsprüfsumme) über die entsprechenden Steuertransaktionen. Diese Prüfsumme kann z. B. von dem Bestimmungsmodul und/oder dem Speichermodul des Steuersystems (entsprechend Fig. 1) erzeugt worden sein, wenn beispielsweise die Ausführungsanforderungen erfolgreich bestimmt wurden und/oder die Ausführbarkeit der Steuerbefehle mittels der Ausführungsanforderungen (z. B. des ersten Teils der Ausführungsanforderungen) erfolgreich ermittelt wurde (z. B. wurde festgestellt, dass das Gerät die gerätespezifischen Anforderungen erfüllt). Das Kommunikationsmodul 310 kann beispielsweise auch als ein Hybridmodul ausgebildet sein, das z. B. über den Kommunikationskanal und/oder über das verteilte Datenbanksystem Transaktionen (z. B. Steuertransaktionen) empfangen kann. Über den separaten und/oder direkten Kommunikationskanal können ggf. Steuertransaktionen empfangen werden, die möglichst schnell verarbeitet werden sollen (z. B. im Falle von Echtzeitanforderungen). Über das verteilte Datenbanksystem können dann z. B. zeitunkritische Steuertransaktionen und/oder Bestätigungstransaktionen abgerufen werden.

Das erste Überprüfungsmodul 320 ist zum Überprüfen der jeweiligen Ausführungsanforderungen für ein Ausführen der Steuerbefehle einer der Steuertransaktionen durch das Gerät eingerichtet, wobei
- insbesondere die gerätespezifischen Anforderungen der jeweiligen Ausführungsanforderungen der jeweiligen Steuertransaktion für das Gerät überprüft werden, und/oder
- insbesondere überprüft wird, ob Bestätigungstransaktionen für die vorausgesetzten Steuerbefehle der jeweiligen Ausführungsanforderungen der jeweiligen Steuertransaktion in Datenblöcken des verteilten Datenbanksystems verfügbar sind (z. B. indem das verteilte Datenbanksystem die entsprechenden Bestätigungstransaktionen breitstellt bzw. überprüft wird, ob das verteilte Datenbanksystem die entsprechenden Bestätigungstransaktionen bereitstellt), und/oder
   - insbesondere überprüft wird, ob Bestätigungstransaktionen für die vorausgesetzten Steuerbefehle der jeweiligen Ausführungsanforderungen in dem verteilten Datenbanksystem verfügbar sind (z. B. in den Datenblöcken).

Das Gerät überprüft dabei die jeweiligen Ausführungsanforderungen, die den entsprechenden Steuerbefehlen zugeordnet sind. Die Ausführungsanforderungen und/oder die Steuerbefehle sind z. B. in einer der Steuertransaktionen gespeichert. Mit anderen Worten liest das Gerät z. B. die Steuerbefehle einer der empfangenen Steuertransaktionen aus und liest auch die zugehörigen Ausführungsanforderungen aus der entsprechenden Steuertransaktion aus (z. B. aus gleichen Steuertransaktion, die die Steuerbefehle umfasst oder eine separate Steuertransaktion, die die entsprechenden Ausführungsanforderungen umfasst) .

Insbesondere überprüft dabei das Gerät, die gerätespezifischen Anforderungen für das Gerät, wobei die gerätespezifischen Anforderungen in den entsprechenden Ausführungsanforderungen gespeichert sind. Mit anderen Worten wird dabei insbesondere überprüft, ob die gerätespezifischen Anforderungen für eine Ausführung der Steuerbefehle erfüllt sind.

Alternativ oder zusätzlich überprüft das Gerät, ob Bestätigungstransaktionen für die vorausgesetzten Steuerbefehle in dem verteilten Datenbanksystem verfügbar sind (z. B. in dem verteilten Datenbanksystem gespeichert sind oder in Datenblöcken des verteilten Datenbanksystems gespeichert sind). Mit anderen Worten wird dabei überprüft, ob für die Ausführung der Steuerbefehle die dafür notwendigen vorausgesetzten Steuerbefehle bereits ausgeführt wurden (und dies insbesondere in Bestätigungstransaktionen entsprechend gespeichert/dokumentiert ist).

Das Ergebnis dieses Überprüfens wird in einem Ergebnis gespeichert bzw. in einem Ergebnisdatensatz gespeichert.

Das erste Ausführungsmodul 330 ist zum Ausführen der Steuerbefehle durch das entsprechende Gerät abhängig von dem Ergebnis des Überprüfens eingerichtet. Hierbei werden dann beispielsweise Motoren, Fräsen oder mechatronische Bauteile durch das Gerät entsprechend der Steuerbefehle angesteuert, wenn das Ergebnis des Überprüfens dies erlaubt.

Das zweite Speichermodul 340 ist zum Speichern des Ergebnisses des Ausführens der Steuerbefehle in Bestätigungstransaktionen der Datenblöcke des verteilten Datenbanksystems eingerichtet.

Alternativ ist das zweite Speichermodul 340 zum Speichern des Ergebnisses des Ausführens der Steuerbefehle in Bestätigungstransaktionen des verteilten Datenbanksystems eingerichtet (z. B. indem die entsprechenden Bestätigungstransaktionen in dem verteilten Datenbanksystem gespeichert werden).

Die Module können beispielsweise als Hardwarekomponente oder als Softwarekomponente oder eine Kombination aus Hardware- und Softwarekomponenten realisiert werden. Beispielsweise können Softwarekomponenten wie Programmbibliotheken genutzt werden, um mit Programmgebefehlen der Programmbibliotheken den Prozessor derart zu konfigurieren, dass dieser die Funktionalitäten eines entsprechenden Moduls realisiert.

Das Gerät selbst kann ein Knoten einer Blockkette bzw. eines verteilten Datenbanksystems sein.

In einer weiteren Variante könnte das Gerät oder generell das Steuersystem oder die genannten Erfindungen mit ihren Merkmalen mittels eines blocklosen verteilten Datenbanksystems implementiert werden (z. B. mittels der von IOTA verwendeten Architektur). Insbesondere kann ein entsprechender Datenblock dann einer einzelnen (Steuer-)Transaktion entsprechen um z. B. ein blockloses verteiltes Datenbanksystem (z. B. eine blocklose Blockkette) zu realisieren.

In einer solchen Variante umfasst das Gerät ein Kommunikationsmodul zum Empfangen von/der Steuertransaktionen mittels eines/des verteilten Datenbanksystems, wobei
- die Steuertransaktionen gespeicherte Steuerbefehle umfassen,
- die Steuertransaktionen Ausführungsanforderungen umfassen,
- die Ausführungsanforderungen gerätespezifische Anforderungen für das Gerät und/oder vorausgesetzte Steuerbefehle umfassen,
- den jeweiligen Steuertransaktionen die entsprechende Ausführungsanforderungen zugeordnet sind.

In einer weiteren Variante, die (daten)blockbasiert implementiert ist, umfasst das Gerät ein Kommunikationsmodul 310 zum Empfangen von Datenblöcken eines/des verteilten Datenbanksystems, wobei
- Steuertransaktionen mit Steuerbefehlen für das Gerät mittels der Datenblöcke des verteilten Datenbanksystems empfangen werden,
- die Steuertransaktionen Ausführungsanforderungen umfassen,
- die Ausführungsanforderungen gerätespezifische Anforderungen für das Gerät und/oder vorausgesetzte Steuerbefehle umfassen,
- den jeweiligen Steuertransaktionen die entsprechende Ausführungsanforderungen zugeordnet sind.

Folglich kann das Kommunikationsmodul des erfindungsmäßen Gerätes entsprechend der genannten Varianten ausgebildet sein.

Die erläuterten Varianten können beispielsweise jeweils auch die bereits erläuterten Module wie das Überprüfungsmodul 320 und/oder das Ausführungsmodul 330 und/oder zweite Speichermodul umfassen.

Die erläuterten blocklosen Varianten können auf analoge Weise auch als Verfahren realisiert werden.

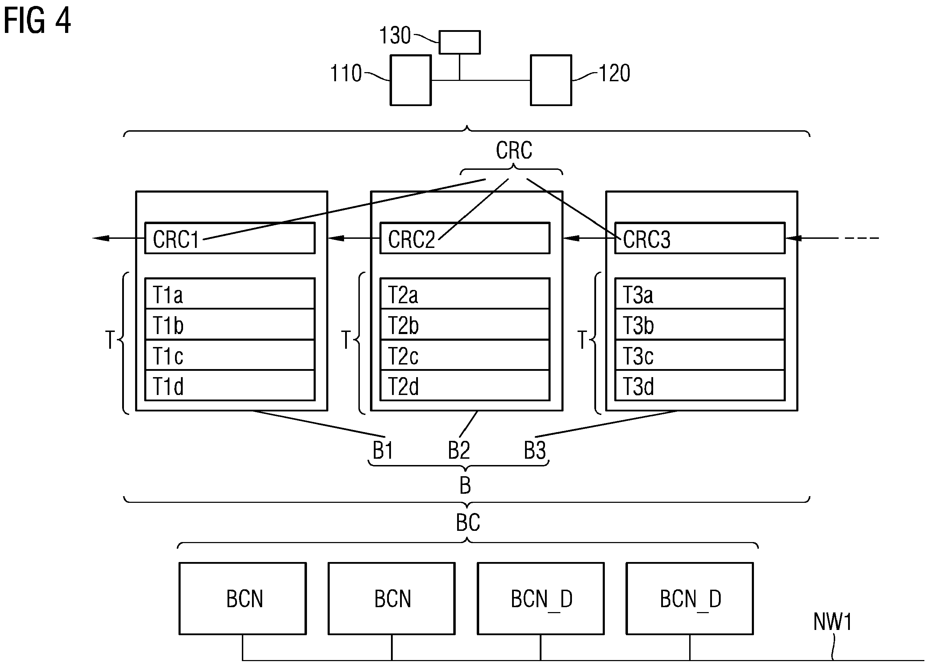

Weist das Gerät 300 beispielsweise das erste Überprüfungsmodul und/oder das erste Ausführungsmodul auf, ist dies dahingehend vorteilhaft, um rechenintensivere Überprüfungsaufgaben durch das Steuersystem (Fig. 1 - 2) oder dem verteilten Datenbanksystem (Fig. 4) ganz oder teilweise auf das Gerät 300 oder mehrere mit dem Gerät 300 gleichartige Geräte auszulagern.

In einer weiteren Variante umfasst das Gerät folgende Merkmale:
- beispielsweise ein erstes Kommunikationsmodul zum Empfangen von Steuertransaktionen, wobei ein verteiltes Datenbanksystem (oder das verteilte Datenbanksystem) die Steuertransaktionen bereitstellt, wobei
   - beispielsweise die Steuertransaktionen Steuerbefehle für das Gerät umfassen,
   - beispielsweise die Steuertransaktionen Ausführungsanforderungen umfassen,
   - beispielsweise die Ausführungsanforderungen gerätespezifische Anforderungen für das Gerät und/oder vorausgesetzte Steuerbefehle umfassen,
   - beispielsweise den jeweiligen Steuertransaktionen die entsprechende Ausführungsanforderungen zugeordnet sind;
- beispielsweise ein erstes Überprüfungsmodul zum Überprüfen der jeweiligen Ausführungsanforderungen für ein Ausführen der Steuerbefehle einer der Steuertransaktionen durch das Gerät, wobei
   - beispielsweise überprüft wird, ob Bestätigungstransaktionen für die vorausgesetzten Steuerbefehle der jeweiligen Ausführungsanforderungen der jeweiligen Steuertransaktion in dem verteilten Datenbanksystem verfügbar sind;
- beispielsweise ein erstes Ausführungsmodul zum Ausführen der Steuerbefehle durch das entsprechende Gerät abhängig von einem Ergebnis des Überprüfens.

Der Aspekt der Erfindung, der das Gerät betrifft, kann beispielsweise auch als ein Verfahren mit folgenden Verfahrensschritten realisiert werden:
- beispielsweise mit einem ersten Verfahrensschritt zum Empfangen von Steuertransaktionen, wobei ein verteiltes Datenbanksystem die Steuertransaktionen breitstellt, wobei
   - beispielsweise die Steuertransaktionen Steuerbefehle für das Gerät umfassen,
   - beispielsweise die Steuertransaktionen Ausführungsanforderungen umfassen,
   - beispielsweise die Ausführungsanforderungen gerätespezifische Anforderungen für das Gerät und/oder vorausgesetzte Steuerbefehle umfassen,
   - beispielsweise den jeweiligen Steuertransaktionen die entsprechende Ausführungsanforderungen zugeordnet sind.
- beispielsweise mit einem ersten Verfahrensschritt zum Überprüfen der jeweiligen Ausführungsanforderungen für ein Ausführen der Steuerbefehle einer der Steuertransaktionen durch das Gerät, wobei
   - beispielsweise überprüft wird, ob Bestätigungstransaktionen für die vorausgesetzten Steuerbefehle der jeweiligen Ausführungsanforderungen der jeweiligen Steuertransaktion in dem verteilten Datenbanksystems verfügbar sind;
- beispielsweise mit einem ersten Verfahrensschritt zum Ausführen der Steuerbefehle durch das entsprechende Gerät abhängig von einem Ergebnis des Überprüfens.

In einer weiteren Variante umfasst das Gerät:
- beispielsweise ein Kommunikationsmodul zum Empfangen von Datenblöcken eines verteilten Datenbanksystems, wobei
   - beispielsweise Steuertransaktionen mit Steuerbefehlen für das Gerät in den Datenblöcken des verteilten Datenbanksystems gespeichert sind,
   - beispielsweise die Steuertransaktionen Ausführungsanforderungen umfassen,
   - beispielsweise die Ausführungsanforderungen gerätespezifische Anforderungen für das Gerät und/oder vorausgesetzte Steuerbefehle umfassen,
   - beispielsweise den jeweiligen Steuertransaktionen die entsprechende Ausführungsanforderungen zugeordnet sind.

Optional kann das Gerät beispielsweise noch folgendes umfassen:
- beispielsweise ein erstes Überprüfungsmodul zum Überprüfen der jeweiligen Ausführungsanforderungen der Steuerbefehle einer der Steuertransaktionen eines Steuerbefehls durch das Gerät, wobei
   - insbesondere die gerätespezifischen Anforderungen für das Gerät überprüft werden; und/oder
   - insbesondere überprüft wird, ob Bestätigungstransaktionen für die vorausgesetzten Steuerbefehle in Datenblöcken des verteilten Datenbanksystems verfügbar sind;
   - insbesondere überprüft wird, ob Bestätigungstransaktionen für die vorausgesetzten Steuerbefehle in dem verteilten Datenbanksystems verfügbar sind;
- beispielsweise ein optionales Ausführungsmodul zum Ausführen der Steuerbefehle durch das entsprechende Gerät abhängig von einem Ergebnis des Überprüfens;
- beispielsweise ein optionales zweites Speichermodul zum Speichern des Ergebnisses des Ausführens der Steuerbefehle in Bestätigungstransaktionen, wobei die Bestätigungstransaktionen beispielsweise in dem verteilten Datenbanksystem gespeichert werden bzw. sind (z. B. in Datenblöcken des/eines verteilten Datenbanksystems).

In einer weiteren Variante umfasst das Gerät folgende Merkmale:
- beispielsweise ein Kommunikationsmodul zum Empfangen von Datenblöcken eines verteilten Datenbanksystems, wobei
   - beispielsweise Steuertransaktionen mit Steuerbefehlen für das Gerät in den Datenblöcken des verteilten Datenbanksystems gespeichert sind,
   - beispielsweise die Steuertransaktionen Ausführungsanforderungen umfassen,
   - beispielsweise die Ausführungsanforderungen gerätespezifische Anforderungen für das Gerät und/oder vorausgesetzte Steuerbefehle umfassen,
   - beispielsweise den jeweiligen Steuertransaktionen die entsprechende Ausführungsanforderungen zugeordnet sind;
- beispielsweise ein erstes Überprüfungsmodul zum Überprüfen der jeweiligen Ausführungsanforderungen der Steuerbefehle einer der Steuertransaktionen eines Steuerbefehls durch das Gerät, wobei
   - beispielsweise die gerätespezifischen Anforderungen für das Gerät überprüft werden; und/oder
   - beispielsweise überprüft wird, ob Bestätigungstransaktionen für die vorausgesetzten Steuerbefehle in Datenblöcken des verteilten Datenbanksystems verfügbar sind;
- beispielsweise ein Ausführungsmodul zum Ausführen der Steuerbefehle durch das entsprechende Gerät abhängig von einem Ergebnis des Überprüfens;
- beispielsweise ein zweites Speichermodul zum Speichern des Ergebnisses des Ausführens der Steuerbefehle in Bestätigungstransaktionen der Datenblöcke des verteilten Datenbanksystems.

Die Fig. 4 zeigt ein viertes Ausführungsbeispiel der Erfindung als ein verteiltes Datenbanksystem, so wie dieses in der Fig. 1 oder der Fig. 2 mit den zugehörigen Ausführungsbeispielen erläutert wurde.

Das verteilte Datenbanksystem, beispielsweise eine Blockkette BC oder eine Peer-2-Peer Datenbank, umfasst ein erstes Bestimmungsmodul 110, eine Vielzahl von Knoten BCN, BCN_D, ein erstes Zuordnungsmodul 120 und ein erstes Speichermodul 130, die über die Blockketteninfrastruktur kommunikativ miteinander verbunden sind, z. B. indem über das Netzwerk Blöcke der Blockkette für die Knoten repliziert werden. Die Blockketteninfrastruktur kann beispielsweise mittels eines ersten Kommunikationsnetzwerkes NW1 und der Knoten realisiert werden.

Das erste Bestimmungsmodul 110 ist zum Bestimmen von Ausführungsanforderungen für eine Ausführung von Steuerbefehlen durch Geräte eingerichtet, wobei in den Ausführungsanforderungen gerätespezifische Anforderungen und/oder vorausgesetzte Steuerbefehle gespeichert werden.

Die Vielzahl der Knoten und/oder Geräte (siehe vorhergehende Ausführungsbeispiele) sind über das erste Kommunikationsnetzwerk NW1 miteinander verbunden.

Das erste Zuordnungsmodul 120 ist zum Zuordnen der jeweiligen Ausführungsanforderungen zu den Steuerbefehlen eingerichtet.

Das erste Speichermodul 130 ist zum Speichern der jeweiligen Steuerbefehle zusammen mit den entsprechenden Ausführungsanforderungen in Steuertransaktionen eingerichtet, wobei die Steuertransaktionen in Datenblöcken des verteilten Datenbanksystems gespeichert werden und die Steuertransaktionen mittels der Datenblöcke an die Geräte übermittelt werden. Dies erfolgt beispielsweise dadurch, dass über das erste Kommunikationsnetzwerk NW1 für die Knoten die Blöcke der Blockkette oder ein Teil der Blöcke der Blockkette für einen jeweiligen Knoten repliziert werden, sodass ein entsprechender Knoten auf die Transaktionen (z. B. Steuertransaktionen oder Bestätigungstransaktionen) zugreifen kann.

Optional kann das verteilte Datenbanksystem ein erstes Überprüfungsmodul und/oder ein erstes Ausführungsmodul und/oder ein zweites Speichermodul umfassen, die beispielsweise über die Infrastruktur des verteilten Datenbanksystems miteinander und den anderen Modulen kommunikativ in Verbindung stehen. Die Module können beispielsweise auf die gleiche Weise ausgebildet sein, so wie dies in der Fig. 1 und der Fig. 2 mit den dazugehörigen Ausführungsbeispielen erläutert ist.

Beispielsweise können die Geräte ein erstes Geräte-Überprüfungsmodul und/oder ein erstes Geräte-Ausführungsmodul und/oder ein zweites Geräte-Speichermodul umfassen, so wie dies beispielsweise in Fig. 3 erläutert ist. Je nach gewählter Implementierung können das erste Überprüfungsmodul und/oder das erste Ausführungsmodul und/oder ein zweite Speichermodul bei der Realsierung ihrer Funktionalitäten/Aufgaben auf die korrespondierenden Module der Geräte zugreifen.

Dies ist dahingehend vorteilhaft, um rechenintensivere Überprüfungsaufgaben durch das erste Überprüfungsmodul und/oder Ausführungsaufgaben durch das erste Ausführungsmodul ganz oder teilweise auf die entsprechenden Geräte auszulagern.

Weisen die Geräte kein erstes Geräte-Überprüfungsmodul und/oder kein erstes Geräte-Ausführungsmodul und/oder kein zweites Geräte-Speichermodul, so ist dies vorteilhaft, um die Geräte möglichst einfach zu gestalten und das verteilte Datenbanksystem anzubinden.

Die Geräte (auch die Geräte der vorhergehenden Ausführungsbeispiele) beispielsweise können auch als Blockkettenorakel ausgebildet sein. In dem Sicherheitsmodul können beispielsweise kryptographische Schlüssel sicher abgelegt sein, um beispielsweise eine Transaktionsprüfsumme für eine entsprechende Transaktion zu berechnen und in die Blockkette einzustellen bzw. zu speichern.

Auch dieses Ausführungsbeispiel kann in einer Variante (daten)blocklos implementiert/realisiert sein. Hierbei umfasst das verteilte Datenbanksystem folgendes:
- beispielsweise ein erstes Bestimmungsmodul zum Bestimmen von Ausführungsanforderungen für eine Ausführung von Steuerbefehlen durch Geräte, wobei
   - beispielsweise in den Ausführungsanforderungen gerätespezifische Anforderungen und/oder vorausgesetzte Steuerbefehle gespeichert werden;
- beispielsweise eine Vielzahl von Knoten, wobei die Knoten über ein erstes Kommunikationsnetzwerk miteinander verbunden sind;
- beispielsweise ein erstes Zuordnungsmodul zum Zuordnen der jeweiligen Ausführungsanforderungen zu den Steuerbefehlen;
- beispielsweise ein erstes Speichermodul zum Speichern der jeweiligen Steuerbefehle mit den entsprechenden Ausführungsanforderungen in Steuertransaktionen, wobei
   - beispielsweise die Steuertransaktionen mittels des verteilten Datenbanksystems gespeichert werden (also insbesondere indem die Steuertransaktionen mittels oder durch das verteilte Datenbanksystem gespeichert werden oder gespeichert sind);
   - beispielsweise die Steuertransaktionen mittels des verteilten Datenbanksystems an die Geräte übermittelt werden.

In einer weiteren Variante umfasst das verteilte Datenbanksystem folgende Merkmale:
- beispielsweise ein erstes Bestimmungsmodul zum Bestimmen von Ausführungsanforderungen für eine Ausführung von Steuerbefehlen durch Geräte, wobei
   - beispielsweise in den Ausführungsanforderungen gerätespezifischen Anforderungen und/oder vorausgesetzte Steuerbefehle gespeichert werden;
- beispielsweise eine Vielzahl von Knoten, wobei die Knoten über ein erstes Kommunikationsnetzwerk miteinander verbunden sind;
- beispielsweise ein erstes Zuordnungsmodul zum Zuordnen der jeweiligen Ausführungsanforderungen zu den Steuerbefehlen;
- beispielsweise ein erstes Speichermodul zum Speichern der jeweiligen Steuerbefehle mit den entsprechenden Ausführungsanforderungen in Steuertransaktionen, wobei
   - beispielsweise die Steuertransaktionen in Datenblöcken des verteilten Datenbanksystems gespeichert werden;
   - beispielsweise die Steuertransaktionen mittels der Datenblöcke an die Geräte übermittelt werden;

In einer weiteren Variante umfasst das verteilte Datenbanksystem folgende Merkmale:
- beispielsweise ein erstes Bestimmungsmodul (110), wobei
   - beispielsweise das erste Bestimmungsmodul zum Bestimmen von Ausführungsanforderungen für eine Ausführung von Steuerbefehlen durch die Geräte eingerichtet ist,
   - beispielsweise die Ausführungsanforderungen anhand der Steuerbefehle ermittelt werden,
   - beispielsweise in den Ausführungsanforderungen gerätespezifische Anforderungen und/oder vorausgesetzte Steuerbefehle gespeichert sind,
   - beispielsweise erste das Bestimmungsmodul zum Bestimmen von Übertragungsanforderungen für eine Übertragung der Steuerbefehle (z. B. mittels Steuertransaktionen) eingerichtet ist,
   - beispielsweise die Übertragungsanforderungen anhand der Steuerbefehle ermittelt werden;
- beispielsweise eine Vielzahl von Knoten (BCN, BCN_D), wobei die Knoten (300, BCN, BCN_D) und die Geräte (300, D, BCN_D) über ein erstes Kommunikationsnetzwerk (NW1) miteinander verbunden sind;
- beispielsweise ein erstes Zuordnungsmodul (120) zum Zuordnen der jeweiligen Ausführungsanforderungen zu den Steuerbefehlen;
- beispielsweise ein erstes Speichermodul (130),
   - beispielsweise das erste Speichermodul zum Speichern der jeweiligen Steuerbefehle mit den (zugeordneten) Ausführungsanforderungen in Steuertransaktionen eingerichtet ist oder beispielsweise das erste Speichermodul zum Speichern der jeweiligen Steuerbefehle in Steuertransaktionen eingerichtet ist,
   - beispielsweise das erste Speichermodul anhand der Übertragungsanforderungen ein Übertragungsverfahren oder eine Kombination aus Übertragungsverfahren für eine Datenübertragung der Steuertransaktionen an die Geräte auswählt,
   - beispielsweise ein erstes ausgewähltes Übertragungsverfahren (z. B. für zeitunkritische Steuerbefehle/Steuertransaktionen) die Steuertransaktionen in dem verteilten Datenbanksystems (BC) gespeichert,
   - beispielsweise das erste ausgewählte Übertragungsverfahren die Steuertransaktionen mittels des verteilten Datenbanksystems an die Geräte (300, D, BCN_D) überträgt;
   - beispielsweise ein zweites ausgewähltes Übertragungsverfahren (z. B. für zeitkritische Steuerbefehle bzw. Steuertransaktionen) die Steuertransaktionen mittels separaten und/oder direkten Kommunikationskanälen an die Geräte (300, D, BCN_D) überträgt.

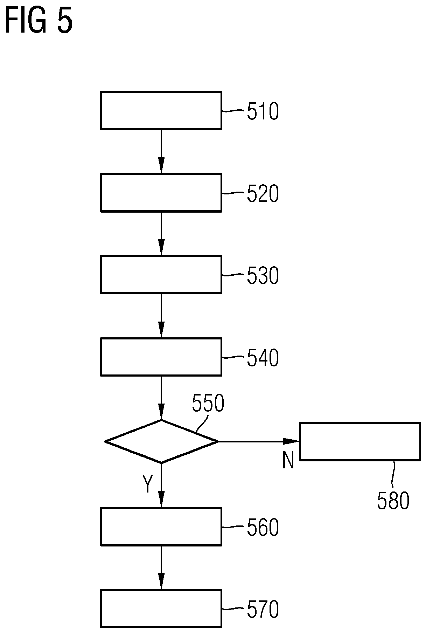

Die Fig. 5 zeigt ein fünftes Ausführungsbeispiel der Erfindung als Ablaufdiagramm des erfindungsgemäßen Verfahrens.

Das Verfahren ist vorzugsweise rechnergestützt realisiert.

Das Ausführungsbeispiel für ein Verfahren zum rechnergestützten Steuern von Geräten kann in einer Variante folgende Verfahrensschritte umfassen:
- Bestimmen von Ausführungsanforderungen für eine Ausführung der Steuerbefehlen durch die Geräte, wobei
   - in den Ausführungsanforderungen entsprechende gerätespezifische Anforderungen und/oder vorausgesetzte Steuerbefehle gespeichert werden;
- Zuordnen der jeweiligen Ausführungsanforderungen zu den Steuerbefehlen;
- Speichern der jeweiligen Steuerbefehle mit den entsprechenden Ausführungsanforderungen in Steuertransaktionen, wobei die Steuertransaktionen in Datenblöcken eines verteilten Datenbanksystems gespeichert werden;
- Übermitteln der Steuertransaktionen mittels der Datenblöcke an die Geräte;
- Überprüfen der jeweiligen Ausführungsanforderungen zum Ausführen der Steuerbefehle einer der Steuertransaktionen durch ein entsprechendes Gerät, wobei
- die gerätespezifischen Anforderungen für das entsprechende Gerät überprüft werden; und/oder
   - überprüft wird, ob Bestätigungstransaktionen für die vorausgesetzten Steuerbefehle in Datenblöcken des verteilten Datenbanksystems verfügbar sind;
- Ausführen der Steuerbefehle durch das entsprechende Gerät abhängig von einem Ergebnis des Überprüfens;
- Speichern des Ergebnisses des Ausführens der Steuerbefehle in Bestätigungstransaktionen der Datenblöcke des verteilten Datenbanksystems.

Im Einzelnen wird in diesem Ausführungsbeispiel ein Verfahren zum rechnergestützten Steuern von Geräten realisiert.

Das Verfahren umfasst einen ersten Verfahrensschritt zum Bestimmen 510 von Ausführungsanforderungen für eine Ausführung der Steuerbefehle durch die Geräte, wobei in den Ausführungsanforderungen entsprechende gerätespezifischen Anforderungen und/oder vorausgesetzte Steuerbefehle gespeichert werden. Dieser Verfahrensschritt kann zudem noch weitere Merkmale umfassen, die beispielsweise im Zusammenhang mit dem Bestimmungsmodul aus den vorhergehenden Ausführungsbeispielen offenbart wurden. Beim Bestimmen kann beispielsweise zusätzlich eine Ausführbarkeit der Steuerbefehle durch Knoten eines verteilten Datenbanksystems oder durch Geräte anhand der Ausführungsanforderungen ermittelt werden, wobei die Ausführungsanforderungen gerätespezifische Anforderungen und/oder vorausgesetzte Steuerbefehle umfassen.

Das Verfahren umfasst einen zweiten Verfahrensschritt zum Zuordnen 520 der jeweiligen Ausführungsanforderungen zu den Steuerbefehlen.

Das Zuordnen erfolgt beispielsweise durch ein Speichern von eindeutigen Identifizieren oder Adressen der Ausführungsanforderungen und der entsprechenden Steuerbefehle in einem Datensatz. Mit anderen Worten werden beispielsweise den Steuerbefehlen die Ausführungsanforderungen zugeordnet, die für diese Steuerbefehle bestimmt wurden.

Das Verfahren umfasst einen dritten Verfahrensschritt zum Speichern 530 der jeweiligen Steuerbefehle mit den entsprechenden Ausführungsanforderungen in Steuertransaktionen, wobei die Steuertransaktionen in Datenblöcken eines verteilten Datenbanksystems gespeichert werden.

Das Verfahren umfasst einen vierten Verfahrensschritt zum Übermitteln 540 der Steuertransaktionen mittels der Datenblöcke an die Geräte. Das Übermitteln erfolgt beispielsweise über das erste Kommunikationsnetzwerk mittels des verteilten Datenbanksystems, so wie dies in den vorherigen Ausführungsbeispielen erläutert wurde.

Das Verfahren umfasst einen fünften Verfahrensschritt zum Überprüfen 550 der jeweiligen Ausführungsanforderungen zum Ausführen von einem der Steuerbefehle oder eines Steuerbefehls oder den Steuerbefehlen einer Steuertransaktion durch ein entsprechendes Gerät, wobei die gerätespezifischen Anforderungen der Steuerbefehle für das entsprechende Gerät überprüft werden und/oder überprüft wird, ob Bestätigungstransaktionen für die vorausgesetzten Steuerbefehle der Steuerbefehle in Datenblöcken des verteilten Datenbanksystems verfügbar sind.

Das Überprüfen ergibt ein Ergebnis, das angibt, ob das entsprechende Gerät die Steuerbefehle ausführen kann Y oder nicht N.

Entsprechend umfasst das Verfahren einen sechsten Verfahrensschritt zum Ausführen 560 der Steuerbefehle durch das entsprechende Gerät abhängig von einem Ergebnis des Überprüfens, wobei die Steuerbefehle der Steuertransaktion ausgeführt werden, wenn dies durch das (Prüf-)Ergebnis erlaubt bzw. bestätigt Y wurde.

Das Verfahren umfasst einen siebten Verfahrensschritt zum Speichern 570 des Ergebnisses des Ausführens der Steuerbefehle in Bestätigungstransaktionen der Datenblöcke des verteilten Datenbanksystems.

Stellt sich beim Überprüfen heraus bzw. gibt das Ergebnis an, dass die Steuerbefehle durch das entsprechende Gerät nicht ausgeführt werden dürfen N, wird ein achter Verfahrensschritt 580 ausgeführt. Dieser kann beispielsweise die Ausführung der Steuerbefehle der Befehlsfolge abbrechen, indem beispielsweise ein Abbruch-Steuerbefehl für die Steuerbefehle der Befehlsfolge in einer Transaktion gespeichert wird, die wiederum in Blöcken der Blockkette gespeichert wird. Alternativ oder zusätzlich können diese oder weitere Steuerbefehle, die aus der Befehlsfolge resultiert sind, ganz oder teilweise abgebrochen werden oder für ungültig erklärt werden. Alternativ oder zusätzlich wird eine Ausführen/Abarbeiten der entsprechenden Steuerbefehle unterbunden.

Alternativ oder zusätzlich kann im achten Verfahrensschritt die Überprüfung neu gestartet werden und das Verfahren springt zu Verfahrensschritt fünf zurück. Auf diese Weise kann beispielsweise ein Warten realisiert werden, bis beispielsweise die Ausführungsanforderungen erfüllt sind. Hierzu kann beispielsweise eine konfigurierbare Zeitverzögerung berücksichtigt werden, die insbesondere angibt wie lange es dauert bis zum fünften Verfahrensschritt zurückgesprungen wird.

Alternativ oder zusätzlich kann das Ergebnis auch im achten Verfahrensschritt in einer Bestätigungstransaktion in der Blockkette gespeichert werden (also in einem Block der Blocckette) .

Die einzelnen Verfahrensschritte können - so wie dies in den vorhergehenden Ausführungsbeispielen erläutert wurde - durch unterschiedliche Komponenten des Steuersystems realisiert werden. Dies sind beispielsweise das verteilte Datenbanksystem selbst und/oder die Geräte und/oder Knoten des verteilten Datenbanksystems.

Die Verfahrensschritte drei bis acht (530 - 380) können je nach Implementierungsvariante jeweils optionale Verfahrensschritte sein.

Mittels der Erfindung (aus diesem Ausführungsbeispiel oder den vorhergehenden), lässt sich auf einfache Weise eine Befehlsfolge in Steuerbefehle bzw. Steuertransaktionen zerlegen, die dann durch entsprechend geeignete Geräte abgearbeitet werden. Dies wird sichergestellt durch die hohe Datenintegrität, die beispielsweise durch eine Blockkette erreicht wird (z. B. um einen Manipulationsschutz der abzuarbeitenden Steuerbefehle in den Steuertransaktionen zu erreichen). Dadurch, dass das Ergebnis der Abarbeitung der Steuerbefehle bzw. Steuertransaktionen in Bestätigungstransaktionen gespeichert wird, können die Geräte mit der Erfindung auch überwacht werden. Dabei können die Bestätigungstransaktionen auch Einzelheiten der Abarbeitung der Steuertransaktionen/Steuerbefehle umfassen. Dies sind z. B. Fertigungszeit oder Fertigungsprobleme, die bei dem Abarbeiten (z. B. der Fertigung eines Produktes) aufgetreten sind. Insofern kann eine Bestätigungstransaktion auch eine Information umfassen, dass die Abarbeitung der Steuerbefehle nicht erfolgreich war. Handelt es sich bei diesen nicht erfolgreich ausgeführten Steuerbefehlen um vorausgesetzte Steuerbefehle für andere/weitere Steuerbefehle, so würde insbesondere das Ergebnis des Überprüfens der Ausführungsanforderungen für diese anderen/weiteren Steuerbefehle ergeben, dass diese anderen/weiteren Steuerbefehle durch ein/das entsprechendes Gerät nicht ausgeführt werden dürfen.

Sind jedoch die Ausführungsanforderungen für die anderen/weiteren Steuerbefehle erfüllt, so werden diese durch ein entsprechendes Gerät ausgeführt.

Die Verfahrensschritte vier bis sieben (540 - 570) können je nach Implementierungsvariante optionale Verfahrensschritte sein.

In einer weiteren Variante des Verfahrens zum rechnergestützten Steuern von Geräten, umfasst das Verfahren folgende Verfahrensschritte:
- beispielsweise einen Verfahrensschritt zum Bestimmen von Ausführungsanforderungen für eine Ausführung der Steuerbefehle durch die Geräte;
- beispielsweise einen Verfahrensschritt Zuordnen der jeweiligen Ausführungsanforderungen zu den Steuerbefehlen;
- beispielsweise einen Verfahrensschritt Speichern der jeweiligen Steuerbefehle mit den entsprechenden Ausführungsanforderungen in Steuertransaktionen, wobei die Steuertransaktionen in Datenblöcken eines verteilten Datenbanksystems gespeichert werden.

In einer weiteren Variante des Verfahrens zum rechnergestützten Steuern von Geräten, umfasst das Verfahren folgende Verfahrensschritte:
- beispielsweise einen Verfahrensschritt zum Bestimmen von Ausführungsanforderungen für eine Ausführung der Steuerbefehle durch die Geräte, wobei
   - beispielsweise in den Ausführungsanforderungen entsprechende gerätespezifische Anforderungen und/oder vorausgesetzte Steuerbefehle gespeichert werden;
- beispielsweise einen Verfahrensschritt zum Zuordnen der jeweiligen Ausführungsanforderungen zu den Steuerbefehlen;
- beispielsweise einen Verfahrensschritt zum Speichern der jeweiligen Steuerbefehlen mit den entsprechenden Ausführungsanforderungen in Steuertransaktionen, wobei die Steuertransaktionen in Datenblöcken eines verteilten Datenbanksystems gespeichert werden;
- beispielsweise einen Verfahrensschritt zum Übermitteln der Steuertransaktionen mittels der Datenblöcke an die Geräte;
- beispielsweise einen Verfahrensschritt zum Überprüfen der jeweiligen Ausführungsanforderungen zum Ausführen der Steuerbefehle einer der Steuertransaktionen durch ein entsprechendes Gerät, wobei
   - beispielsweise die gerätespezifischen Anforderungen für das entsprechende Gerät überprüft werden; und/oder
   - beispielsweise überprüft wird, ob Bestätigungstransaktionen für die vorausgesetzten Steuerbefehle in Datenblöcken des verteilten Datenbanksystems verfügbar sind;
- beispielsweise einen Verfahrensschritt zum Ausführen der Steuerbefehle durch das entsprechende Gerät abhängig von einem Ergebnis des Überprüfens;
- beispielsweise einen Verfahrensschritt zum Speichern des Ergebnisses des Ausführens der Steuerbefehle in Bestätigungstransaktionen der Datenblöcke des verteilten Datenbanksystems.

In einer weiteren Variante des Verfahrens zum rechnergestützten Steuern von Geräten, umfasst das Verfahren folgende Verfahrensschritte:
- beispielsweise einen Verfahrensschritt zum Bestimmen von Ausführungsanforderungen für eine Ausführung der Steuerbefehle durch die Geräte, wobei
   - beispielsweise in den Ausführungsanforderungen entsprechende gerätespezifische Anforderungen und/oder vorausgesetzte Steuerbefehle gespeichert werden;
- beispielsweise einen Verfahrensschritt zum Zuordnen der jeweiligen Ausführungsanforderungen zu den Steuerbefehlen;
- beispielsweise einen Verfahrensschritt zum Speichern der jeweiligen Steuerbefehlen mit den entsprechenden Ausführungsanforderungen in Steuertransaktionen, wobei die Steuertransaktionen in Datenblöcken eines verteilten Datenbanksystems gespeichert werden;
- beispielsweise einen Verfahrensschritt zum Übermitteln der Steuertransaktionen mittels der Datenblöcke an die Geräte;
- beispielsweise einen Verfahrensschritt zum Überprüfen der jeweiligen Ausführungsanforderungen zum Ausführen der Steuerbefehle einer der Steuertransaktionen durch ein entsprechendes Gerät, wobei
   - beispielsweise die gerätespezifischen Anforderungen für das entsprechende Gerät überprüft werden; und/oder
   - beispielsweise überprüft wird, ob Bestätigungstransaktionen für die vorausgesetzten Steuerbefehle in dem verteilten Datenbanksystems verfügbar sind;
- beispielsweise einen Verfahrensschritt zum Ausführen der Steuerbefehle durch das entsprechende Gerät abhängig von einem Ergebnis des Überprüfens;
- beispielsweise einen Verfahrensschritt zum Speichern des Ergebnisses des Ausführens der Steuerbefehle in Bestätigungstransaktionen, wobei die Bestätigungstransaktionen beispielsweise in dem verteilten Datenbanksystem gespeichert werden.

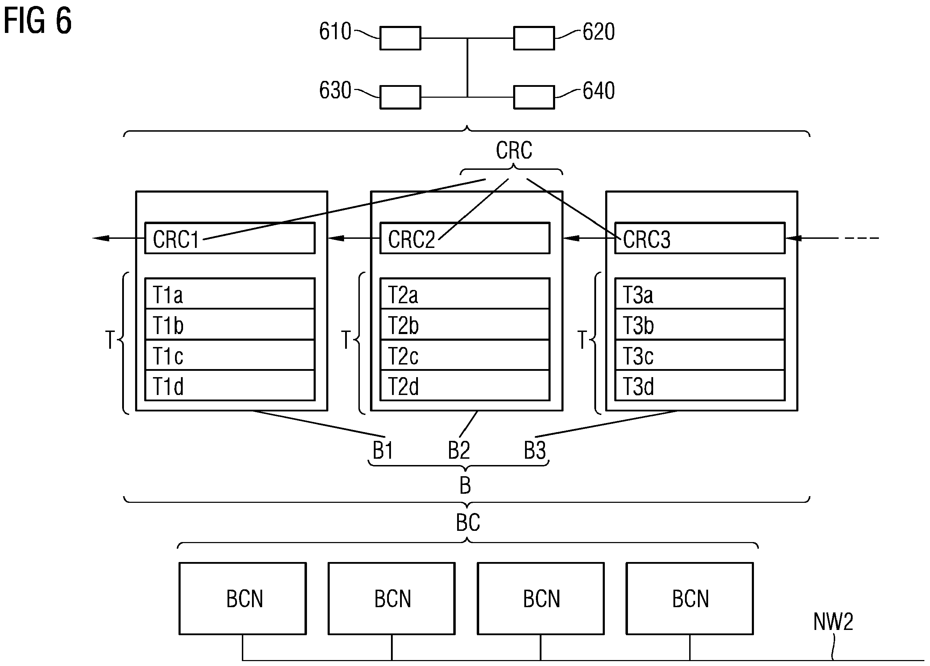

Die Fig. 6 zeigt ein weiteres Ausführungsbeispiel der Erfindung.

Im Einzelnen zeigt die Fig. 6 ein verteiltes Datenbanksystem (oder nur kurz verteilte Datenbank genannt), beispielsweise eine Blockkette BC, das vorzugsweise nur für eine spezifische Anwendung verwendet wird. Beispielsweis kann das erste verteilte Datenbanksystem das verteilte Datenbanksystem aus den vorherigen Ausführungsbeispielen sein bzw. eine Kombination hiervon, um beispielsweise ein anwendungsspezifisches Datenbanksystem zu schaffen, das insbesondere für die Abarbeitung der dort genannten Befehlsfolgen verwendet wird.

Im Einzelnen zeigt die Fig. 6 Blöcke B, beispielsweise einen ersten Block B1, einen zweiten Block B2 und einen dritten Block B3, der Blockkette BC.

Die Blöcke B umfassen jeweils mehrere Transaktionen T. Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen Hash-Funktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme.

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen.

Die Blockkette selbst wird durch eine Blockketten-Infrastruktur mit mehreren Blockketten-Knoten realisiert.

Die verteilte Datenbank, die mittels der Blockkette BC realisiert ist, umfasst zudem noch eine Vielzahl von Knoten BCN, ein drittes Speichermodul 610, zweites Zuordnungsmodul 620, drittes Zuordnungsmodul 630 und ein zweites Überprüfungsmodul 640 umfasst, die über die Infrastruktur des ersten verteilten Datenbanksystems miteinander kommunikativ in Verbindung stehen.

Das verteilte Datenbanksystem ist dabei zum Bereitstellen und/oder Speichern von Transaktionen und/oder Datenblöcken geeignet.

Die Vielzahl von Knoten BCN sind über ein zweites Kommunikationsnetzwerk NW2 (auch als Kommunikationsnetzwerk oder weiteres Kommunikationsnetzwerk bezeichenbar) miteinander verbunden. Diese bilden zumindest einen Teil oder vollständig die Infrastruktur des ersten verteilten Datenbanksystems. Bei dem zweiten Kommunikationsnetzwerk kann es sich beispielsweise auch um das erste Kommunikationsnetzwerk aus den vorherigen Ausführungsbeispielen handeln.

Das dritte Speichermodul 610 ist zum Speichern von (bzw. der) Transaktionen in dem verteilten Datenbanksystem eingerichtet (z. B. werden/sind diese Transaktionen in Datenblöcken des verteilten Datenbanksystems gespeichert). Mit anderen Worten werden/sind die entsprechenden Transaktionen mittels des verteilten Datenbanksystems oder durch das verteilte Datenbanksystem gespeichert (z. B. mittels der Datenblöcke). Mit anderen Worten werden/sind diese Transaktionen durch das verteilte Datenbanksystem gespeichert.

Das zweite Zuordnungsmodul 620 ist zum Zuordnen eines Aufgabendatensatzes einer spezifischen Aufgabe zu dem verteilten Datenbanksystem eingerichtet, wobei insbesondere die Transaktionen Daten zum Durchführen der spezifischen Aufgabe umfassen. Im Einzelnen umfasst dabei insbesondere der Aufgabendatensatz die spezifische Aufgabe.

Das zweite Zuordnungsmodul 620 kann beispielsweise auch als ein (viertes) Speichermodul ausgebildet sein, das dazu eingerichtet ist den Aufgabendatensatz zu speichern. Zusätzlich oder alternativ ist das vierte Speichermodul dazu eingerichtet dem verteilten Datenbanksystem den Aufgabendatensatz zuzuordnen. Im Einzelnen umfasst dabei insbesondere der Aufgabendatensatz die spezifische Aufgabe.

Mit anderen Worten kann das zweite Zuordnungsmodul beispielsweise als ein viertes Speichmodul zum Speichern eines Aufgabendatensatzes (mit) einer spezifischen Aufgabe eingerichtet oder ausgebildet sein, wobei
- insbesondere dem verteilten Datenbanksystem der Aufgabendatensatz zugeordnet ist (und/oder wird) und
- insbesondere die Transaktionen Daten (z. B. Steuerbefehle die von einem zu überwachenden Gerät ausgeführt werden sollen) zum Durchführen der spezifischen Aufgabe umfassen.

Beispielsweise kann die spezifische Aufgabe gerätespezifisch oder sein (z. B. für ein bestimmtes Gerät oder einer Klasse von Geräten) oder systemspezifisch sein (z. B. für ein bestimmtes technisches System). Hierzu kann die spezifische Aufgabe z. B. eine UID der entsprechenden Geräte oder die UID des technischen Systems (z. B. die UID des Systems und/oder die UIDs der Geräte des technischen Systems) umfassen, die beispielsweise ebenfalls im Aufgabendatensatz gespeichert sind bzw. durch das Speichern der spezifischen Aufgaben im Aufgabendatensatz mitgespeichert oder zusammen gespeichert sind. Die spezifische Aufgabe kann beispielsweise mittels einer Schnittstelle abgerufen oder bereitgestellt werden bzw. abgerufen oder bereitgestellt sein. Beispielsweise kann dem ersten verteilten Datenbanksystem die spezifischen Aufgaben bzw. der Aufgabendatensatz zugeordnet worden sein (oder die Zuordnung erfolgt auf diese weise).

Zunächst übermittelt beispielsweise ein entsprechendes technisches System oder Gerät Geräte- oder Systemeigenschaften (z. B. mittels der gerätespezifischen Daten realisiert). Diese Übermittlung kann beispielsweise an das erste verteilte Datenbanksystem oder an ein Erstellungsgerät (z. B. eine Cloudumgebung und/oder einem Framework, das ein entsprechendes erstes verteiltes Datenbanksystem instanziiert) direkt erfolgen, wobei hierzu insbesondere das erste verteilte Datenbanksystem und/oder das Erstellungsgerät eine Schnittstelle umfassen.
Anhand der Geräte- oder Systemeigenschaften wählt das erste verteilte Datenbanksystem und/oder das Erstellungsgerät die spezifische Aufgabe aus. Die Auswahl kann beispielsweise dadurch erfolgen, dass über eine weitere Schnittstelle die spezifische Aufgabe für das Gerät bzw. das technische System abgerufen wird. Diese Auswahl bzw. das Abrufen erfolgt vorzugsweise rechnergestützt bzw. automatisiert. Beispielsweise können für bestimmte Typen oder Klassen von Geräten oder technischen Systemen die entsprechende spezifische Aufgabe vorkonfiguriert sein und z. B. über die Schnittstelle von einer Aufgabendatenbank bereitgestellt werden. Entsprechend erfolgt die Auswahl beispielsweise dadurch, dass über die weitere Schnittstelle die spezifische Aufgabe für das das technische System von der Aufgabendatenbank abgerufen wird, wobei die spezifische Aufgabe vorzugsweise für das entsprechende technische System vorkonfiguriert in der Aufgabendatenbank gespeichert ist. Um insbesondere festzustellen welche vorkonfigurierte spezifische Aufgabe gewählt werden soll, werden hierzu die Geräte- oder Systemeigenschaften ausgewertet. Erfolgt dies beispielsweise mittels einer UID wird die Aufgabendatenbank abgefragt, ob es zu dieser UID eine entsprechende spezifische Aufgabe gibt. Ist dies der Fall wird die spezifische Aufgabe von der Aufgabendatenbank abgerufen und im Aufgabendatensatz gespeichert. Ist beispielsweise keine UID für das entsprechende technische System vorhanden, so kann eine "Default"-Aufgabe entsprechend gewählt werden, die z. B. anhand der Geräteklasse (z. B. Schleifmaschinen, Windturbinen, Stator, Rotor, Feldgerät, Transformator, Fertigungsroboter) gewählt wird.

Ob diese Realisierung mittels des Erstellungsgeräts oder des ersten verteilten Datenbanksystems erfolgt, ist abhängig von der gewählten Implementierungsvariante. In einer Variante, die mit dem Erstellungsgerät realisiert ist, kann beispielsweise kann das Erstellungsgerät eine Cloudumgebung und/oder einem Framework sein, das eine entsprechende verteilte Datenbank bzw. Datenbanksystem anhand der Informationen (Geräteeigenschaften) über das technische Gerät instanziiert und entsprechend den Aufgabendatensatz dem ersten verteilten Datenbanksystem zuordnet.

In der Variante, in der das Zuordnen bzw. das Speichern der spezifischen Aufgabe durch das erste verteilte Datenbanksystem selbst erfolgt, kann beispielsweise das erste verteilte Datenbanksystem bereits instanziiert jedoch noch nicht konfiguriert sein. Das Zuordnen/Speichern erfolgt dann z. B. automatisiert das erste verteilte Datenbanksystem selbst.

Das Zuordnen kann vorzugsweise nur einmalig erfolgen, sodass später keine Zuordnung zu einem anderen technischen System erfolgen kann. Hierzu kann beispielsweise nach dem das Zuordnen des Aufgabendatensatzes erfolgt ist, die entsprechende Funktion des ersten verteilten Datenbanksystems zum Zuordnen ausgeschaltet werden.

Das dritte Zuordnungsmodul 630 ist zum Zuordnen eines Gültigkeitsdatensatzes für das verteilte Datenbanksystem eingerichtet, wobei der Gültigkeitsdatensatz eine Gültigkeit für vorgegebene Funktionen des verteilten Datenbanksystems angibt.

Im Einzelnen umfasst dabei insbesondere der Gültigkeitsdatensatz die Gültigkeit für die entsprechenden vorgegebenen Funktionen (was z. B. auch eine einzelne Funktion oder eine Auswahl von Funktionen sein kann) des verteilten Datenbanksystems.

Das dritte Zuordnungsmodul 630 kann beispielsweise auch als ein (fünftes) Speichermodul ausgebildet sein, das dazu eingerichtet ist den Gültigkeitsdatensatz zu speichern. Zusätzlich oder alternativ ist das fünfte Speichermodul dazu eingerichtet dem verteilten Datenbanksystem den Gültigkeitsdatensatz zuzuordnen. Im Einzelnen umfasst dabei insbesondere der Gültigkeitsdatensatz die Gültigkeit für die entsprechenden vorgegebenen Funktionen (was z. B. auch eine einzelne Funktion oder eine Auswahl von Funktionen sein kann) des verteilten Datenbanksystems.

Mit anderen Worten kann das dritte Zuordnungsmodul 630 beispielsweise als ein fünftes Speichmodul zum Speichern (oder Zuordnen) eines Gültigkeitsdatensatz eingerichtet oder ausgebildet sein, wobei
- insbesondere dem verteilten Datenbanksystem der Gültigkeitsdatensatz zugeordnet ist (und/oder wird) und
- insbesondere der Gültigkeitsdatensatz eine Gültigkeit für vorgegebene Funktionen des verteilten Datenbanksystems angibt (oder umfasst).
Es ist beispielsweise auch möglich, dass die entsprechenden Zuordnungsmodule jeweils ein entsprechendes Speichermodul (z. B. das vierte Speichermodul oder das fünfte Speichermodul) umfassen. Die jeweiligen Speichermodule können beispielsweise durch einen (Daten-)Block oder Transaktionen realisiert sein, die durch das bzw. mittels des verteilten Datenbanksystems gespeichert werden.

Beispielsweise kann die Gültigkeit gerätespezifisch oder sein (z. B. für ein bestimmtes Gerät oder einer Klasse von Geräten) oder systemspezifisch sein (z. B. für ein bestimmtes technisches System). Hierzu kann die Gültigkeit z. B. eine UID der entsprechenden Geräte oder die UID des technischen Systems (z. B. die UID des Systems und/oder die UIDs der Geräte des technischen Systems) umfassen, die beispielsweise ebenfalls im Gültigkeitsdatensatz gespeichert sind bzw. durch das Speichern der Gültigkeit im Gültigkeitsdatensatz mitgespeichert oder zusammen gespeichert sind. Die spezifische Gültigkeit kann beispielsweise mittels einer Schnittstelle abgerufen oder bereitgestellt werden bzw. abgerufen oder bereitgestellt sein. Beispielsweise kann dem ersten verteilten Datenbanksystem die Gültigkeit bzw. der Gültigkeitsdatensatz zugeordnet worden sein (oder die Zuordnung erfolgt auf diese weise).

Zunächst übermittelt beispielsweise ein entsprechendes technisches System oder Gerät Geräte- oder Systemeigenschaften (z. B. mittels der gerätespezifischen Daten realisiert) oder es werden diese Daten, die bei der Auswahl der Aufgabe schon verarbeitet wurden, auch hierfür verwendet. Diese Übermittlung kann beispielsweise an das erste verteilte Datenbanksystem oder an das Erstellungsgerät (z. B. eine Cloudumgebung und/oder einem Framework, das ein entsprechendes erstes verteiltes Datenbanksystem instanziiert) direkt erfolgen, wobei hierzu insbesondere das erste verteilte Datenbanksystem und/oder das Erstellungsgerät eine Schnittstelle umfassen. Anhand der Geräte- oder Systemeigenschaften wählt das erste verteilte Datenbanksystem und/oder das Erstellungsgerät die Gültigkeit aus. Die Auswahl kann beispielsweise dadurch erfolgen, dass über eine weitere Schnittstelle die Gültigkeit für das Gerät bzw. das technische System abgerufen wird. Diese Auswahl bzw. das Abrufen erfolgt vorzugsweise rechnergestützt bzw. automatisiert. Beispielsweise können für bestimmte Typen oder Klassen von Geräten oder technischen Systemen die entsprechende Gültigkeit vorkonfiguriert sein und z. B. über die Schnittstelle von einer Gültigkeitsdatenbank bereitgestellt werden. Entsprechend erfolgt die Auswahl beispielsweise dadurch, dass über die weitere Schnittstelle die Gültigkeit für das das technische System von der Gültigkeitsdatenbank abgerufen wird, wobei die Gültigkeit vorzugsweise für das entsprechende technische System vorkonfiguriert in der Gültigkeitsdatenbank gespeichert ist. Um insbesondere festzustellen welche vorkonfigurierte Gültigkeit gewählt werden soll, werden hierzu die Geräte- oder Systemeigenschaften ausgewertet. Erfolgt dies beispielsweise mittels einer UID wird die Gültigkeitsdatenbank abgefragt, ob es zu dieser UID eine entsprechende Gültigkeit gibt. Ist dies der Fall wird die Gültigkeit von der Gültigkeitsdatenbank abgerufen und im Gültigkeitsdatensatz gespeichert. Ist beispielsweise keine UID für das entsprechende technische System vorhanden, so kann eine "Default"-Gültigkeit entsprechend gewählt werden, die z. B. anhand der Geräteklasse (z. B. Schleifmaschinen, Windturbinen, Stator, Rotor, Feldgerät, Transformator, Fertigungsroboter) gewählt wird.

Ob diese Realisierung mittels des Erstellungsgeräts oder des ersten verteilten Datenbanksystems erfolgt, ist abhängig von der gewählten Implementierungsvariante. In einer Variante, die mit dem Erstellungsgerät realisiert ist, kann beispielsweise kann das Erstellungsgerät eine Cloudumgebung und/oder einem Framework sein, das eine entsprechende verteilte Datenbank bzw. Datenbanksystem anhand der Informationen (Geräteeigenschaften) über das technische Gerät instanziiert und entsprechend den Gültigkeitsdatensatz dem ersten verteilten Datenbanksystem zuordnet.

In der Variante, in der das Zuordnen bzw. das Speichern der Gültigkeit bzw. des Gültigkeitsdatensatzes durch das erste verteilte Datenbanksystem selbst erfolgt, kann beispielsweise das erste verteilte Datenbanksystem bereits instanziiert jedoch noch nicht konfiguriert sein. Das Zuordnen/Speichern erfolgt dann z. B. automatisiert das erste verteilte Datenbanksystem selbst.

Das Zuordnen kann vorzugsweise nur einmalig erfolgen, sodass später keine Zuordnung zu einem anderen technischen System erfolgen kann (also dem ersten verteilten Datenbanksystem nicht erneut ein Aufgabendatensatz und/oder ein Gültigkeitsdatensatz zugeordnet werden kann). Hierzu kann beispielsweise nach dem das Zuordnen des Aufgabendatensatzes erfolgt ist, die entsprechende Funktion des ersten verteilten Datenbanksystems zum Zuordnen ausgeschaltet werden.

Insbesondere können beispielsweise die Aufgabendatenbank und die Gültigkeitsdatenbank als eine (integrale) Datenbank ausgebildet sein, die über eine gemeinsame Schnittstelle kommuniziert bzw. Daten austauscht.

In einer weiteren Variante kann beispielsweise ein Steuersignal bereitgestellt werden, wenn beispielsweise Funktionen benutzt werden, deren Gültigkeit abgelaufen ist. Dies kann beispielsweise der Fall sein, dass die Gültigkeit für die vorgegebenen Funktionen beispielsweise am 1.1.2018 abgelaufen ist, jedoch am 2.1.2018 jemand versucht eine dieser nun ungültigen Funktionen zu nutzen (z. B. wird versucht ein neuer Block der Blockkette hinzuzufügen, jedoch ist dies entsprechend der Gültigkeit nach dem Ablauf der Gültigkeit nicht erlaubt; oder es wird versucht das technische System und/oder das Gerät nach eine Ablauf der Gültigkeit zu starten, obwohl das Starten nach dem Ablauf der Gültigkeit nicht erlaubt ist). Das Steuersignal kann dann beispielsweise einen Alarm auslösen, einen Administrator informierten oder das Gerät und/oder das erste verteilte Datenbanksystem in einen sicheren Zustand versetzen (z. B. durch ein Ausschalten).

In einer weiteren Implementierungsvariante der Erfindung umfasst das erste verteilte Datenbanksystem zum Speichern und/oder Bereitstellen von Transaktionen (z. B. von Daten(-Blöcken)) folgendes:
- eine Vielzahl von Knoten (BCN), die über ein zweites Kommunikationsnetzwerk (NW2) miteinander verbunden sind;
- ein drittes Speichermodul zum Speichern von Transaktionen in Datenblöcken des verteilten Datenbanksystems;
- ein viertes Speichermodul zum Speichern eines Aufgabendatensatzes, wobei
   - der Aufgabendatensatzes eine spezifische Aufgabe umfasst,
   - dem verteilten Datenbanksystem der Aufgabendatensatz zugeordnet ist oder wird;
- ein fünftes Speichermodul zum Speichern eines Gültigkeitsdatensatzes, wobei
   - der Gültigkeitsdatensatz eine Gültigkeit umfasst,
   - dem verteilten Datenbanksystem der Gültigkeitsdatensatz zugeordnet ist oder wird.

Der Gültigkeitsdatensatz kann beispielsweise einen Zeitraum und/oder einen Zeitpunkt und/oder ein Ereignis angeben, bis zu dem eine der Funktionen oder alle Funktionen ausgeführt werden können.

Alternativ oder zusätzlich wird ein Ablaufen der Gültigkeit (die in dem Gültigkeitsdatensatzgespeichert ist) ein Zeitpunkt oder Gültigkeitszeitraum festgelegt, der durch einen Austausch eines Gerät oder Feldgerät bestimmt wird. Beispielsweise ist das erste verteilte Datenbanksystem für eine Überwachung eines bestimmten Gerätes erzeugt worden. In diesem Fall ist die Aufgabe das Überwachen des entsprechenden Gerätes und die Gültigkeit ist der Nutzungszeitraum beginnend mit dem erstmaligen Einschalten des Gerätes bis zum Ersetzen des Gerätes durch ein anderes Gerät oder dem Ausbau des Gerätes.

Alternativ oder zusätzlich ist das Ereignis das Erfüllen der spezifischen Aufgabe.

Alternativ oder zusätzlich ist der Zeitraum eine Lebensdauer eines Gerätes oder Feldgerätes.

Alternativ oder zusätzlich ist der Zeitraum eine Durchführungszeit einer Befehlsfolge und/oder einer Wartungsaktion und/oder einer Steuerungsaktion eines Gerätes oder Feldgerätes. Die entsprechenden Geräte (auch die Geräte der vorhergehenden Ausführungsbeispiele) oder Feldgeräte können beispielsweise über Sicherheitsmodule verfügen, um die entsprechenden Transkationen in das verteilte Datenbanksystem bzw. die Blockkette einzustellen, indem diese beispielsweise als Blockkettenorakel ausgebildet sind. Die entsprechenden Geräte (auch die Geräte der vorhergehenden Ausführungsbeispiele) können beispielsweise auch als Blockkettenorakel ausgebildet sein. In dem Sicherheitsmodul können beispielsweise kryptographische Schlüssel sicher abgelegt sein, um beispielsweise eine Transaktionsprüfsumme für eine entsprechende Transaktion zu berechnen und in die Blockkette einzustellen bzw. zu speichern.

Das Speichern des Aufgabendatensatzes und/oder des Gültigkeitsdatensatzes kann dabei auf unterschiedliche Weise realisiert werden. Beispielsweise kann der jeweilige Datensatz in einer Transaktion des verteilten Datenbanksystems gespeichert werden. Diese Transaktion kann z. B. in einem Datenblock des verteilten Datenbanksystems gespeichert werden, dies kann insbesondere der erste Datenblock (auch z. B. Genesis-Block bei Bitcoin genannt)

Das zweite Überprüfungsmodul 640 ist zum Überprüfen der Gültigkeit für vorgegebene Funktionen eingerichtet. Beispielsweise gibt die Gültigkeit an, dass ab einem bestimmten Zeitpunkt oder ab dem Erfüllen einer bestimmten Bedingung (z. B. Gerät wurde gegen ein neues Gerät ausgetauscht, Garantiezeit ist abgelaufen) keine neuen der vorgegebenen Funktionen mehr ausgeführt werden können. Die vorgegebenen Funktionen können beispielsweise sein, dass Blöcke zu der Blockkette hinzugefügt werden können und/oder Transaktionen ausgeführt werden und/oder Smart-Contracts in den Transaktionen (in den Blöcken der Blockkette) ausgeführt werden. Dabei ist bis zum Ablauf der Gültigkeit beispielsweise die spezifische Aufgabe, das Gerät zu überwachen und die an das Gerät übermittelten Transaktionen und Befehle zu protokollieren und/oder die Aktionen und/oder Ausgaben des entsprechenden Gerätes zu überwachen. Dazu werden die dafür notwendigen Informationen entweder durch das Gerät selbst oder durch ein Überwachungsgerät (z. B. eine Firewall, die den Netzwerkverkehr überwacht) in die Blockkette geschrieben.

Ist die Gültigkeit für die Blockkette abgelaufen, unterbindet beispielsweise das zweite Überprüfungsmodul 640 eine Ausführung der vorgegebenen Funktionen, für welche die Gültigkeit abgelaufen ist. Das zweite Überprüfungsmodul 640 kann beispielsweise als ein Sicherheitschip oder Sicherheitsprozessor realisiert sein.

Mit der Erfindung wird insbesondere das Problem von konventionellen Blockketten gelöst, dass Informationen, die einmal in der Blockkette gespeichert wurden, aus dieser nicht mehr zu entfernen sind, obwohl diese Information nur für einen begrenzten Zeitraum (z. B. für die Lebensdauer eines Gerätes und/oder deren Garantiezeitraum) bereitgestellt werden muss.

Dieses Problem kann im Fin-Tech Bereich nicht zwangsläufig ein Nachteil sein, jedoch im Internet der Dinge und bei einer Gerätesteuerung auf Basis von Blockketten ist es wünschenswert eine Blockkette nur für eine solche spezifische Aufgabe zu nutzen (z. B. eine Herstellung eines Produktes, eine Steuerung einer Kraftwerksanlage für einen bestimmte Zeitraum) und/oder diese Daten nur für eine bestimmte Zeit vorzuhalten (z. B. bis zum Garantieablauf oder bis zur gesetzlichen Mindestaufbewahrungsfrist).

Die erfinderische Idee besteht insbesondere darin, einer spezifischen Blockkette für eine spezifische Aufgabe vorgegebene Gültigkeitseigenschaften - oder nur Gültigkeit genannt - (z. B. mittels des Gültigkeitsdatensatzes) zuzuordnen. Diese Gültigkeit, die vorzugsweise in dem Gültigkeitsdatensatz gespeichert ist, legt beispielsweise einen bestimmten Lebenszyklus oder Gültigkeitszeitraum für die Blockkette fest. Der Beginn der Gültigkeit kann durch einen ersten Trigger zur Erzeugung der Blockkette gestartet werden (z. B. der Startbefehl einer Befehlsfolge zum Steuern eine Kraftwerksanlage) und die Gültigkeit wird durch einen zweiten Trigger beendet, wenn z. B. der letzte Befehl einer Befehlsfolge abgearbeitet wurde. Alternativ kann der erste Trigger das erstmalige Starten eines bestimmten Gerätes sein, dem die Blockkette zugeordnet ist bzw. die Blockkette (oder das erste verteilte Datenbanksystem), die spezifische für das bestimmte Gerät erzeugt wurde. Der zweite Trigger kann dann dadurch realisiert sein, wenn das bestimmte Gerät gegen ein anderes Gerät ausgetauscht wird. Das bestimmte Gerät und das Austauschgerät sind dabei insbesondere Geräte eines komplexen technischen Systems.

Die Befehlsfolge kann hierbei an eine Vielzahl von Geräten in einem Energieversorgungsnetz gerichtet sein (so wie dies in den vorherigen Ausführungsbeispielen erläutert wurde) und wenn alle Geräte ihre Befehle abgearbeitet haben endet der Lebenszyklus der Blockkette.

Wenn die Gültigkeit für die Blockkette erloschen ist bzw. die Gültigkeit nicht mehr gegeben ist, kann die Blockkette in eine andere Datenbank (z. B. eine andere Blockkette oder ein hierarchische Datenbanksystem) geschrieben werden. Hierbei muss gar nicht die gesamte spezifische Blockkette in die andere Datenbank geschrieben werden, sondern es ist ausreichend eine Referenz auf den letzten Block der (spezifischen) Blocckette und/oder den entsprechende Hashwert des (letzten) Blocks und/oder ein Speicherort der Blockkette in der anderen Datenbank zu speichern. Insbesondere kann das erste Datenbanksystem eine andere Implementierung haben als das andere/zweite verteilte Datenbanksystem. Beispielsweise ist das erste Datenbanksystem als Blockkette realisiert und das zweite Datenbanksystem als hierarchische Datenbank realisiert (z. B. in SQL).

Es sind hierbei unterschiedliche Erweiterungen denkbar: Beispielsweise kann mit dem Ablaufen der Gültigkeit der spezifische Blockkette die Blockkette versiegelt werden (z. B. via eines Smart Contracts), sodass keine neuen Glieder mehr hinzugefügt werden können. Dies kann beispielsweise auch mittels des zweiten Überprüfungsmoduls 640 erfolgen, das beispielsweise als Smart-Contract der Blockkette realisiert ist und in einer Transaktion gespeichert ist, die wiederum in einem Block der Blockkette gespeichert ist.

Der Gültigkeitsdatensatz bzw. die Gültigkeit kann beispielsweise ein Ablaufdatum für die Blockkette umfassen. Die Blocckette wird insbesondere nach dem Ablauf dieses Datums vom Speicherort automatisiert gelöscht. Dies kann beispielsweise auch mittels des zweiten Überprüfungsmoduls 640 erfolgen, das beispielsweise als Smart-Contract der Blockkette realisiert ist und in einer Transaktion gespeichert ist, die wiederum in einem Block der Blockkette gespeichert ist.

Auch können beispielsweise der erste Trigger und/oder der zweite Trigger als Smart-Contract realisiert sein, die beispielsweise eine aufgabenspezifische Blockkette erzeugen oder überprüfen, wann beispielsweise die Aufgabe erfüllt und/oder die Gültigkeit erloschen ist.

Mit der Erfindung lässt sich das erste verteilte Datenbanksystem beispielsweise nach Ablauf der Gültigkeit als eine "Read Only" (nur lesend verwendbare) verteilte Datenbank nutzen. Hierbei werden ggf. noch als Funktion lesende Zugriffe erlaubt jedoch schreibende unterbunden. Dies kann beispielsweise durch die Gültigkeit bzw. dem Gültigkeitsdatensatz festlegt sein.

Auch kann das erste verteilte Datenbanksystem noch ein optionales Registrierungsmodul umfassen.

Das Registrierungsmodul kann beispielsweise als Software- und/oder Hardwarekomponente ausgebildet sein - analog zum ersten Bestimmungsmodul 110 aus Fig. 1 (z. B. als Smart-Contract der Blockkette oder als vertrauenswürdige Knoten der Blockkette). Das Registrierungsmodul kann insbesondere durch die Blockkette bzw. einen Smart-Contract realisiert werden oder ist eine Softwarekomponente der Blockketten-Infrastruktur. Alternativ kann das Registrierungsmodul als spezifischer vertrauenswürdiger Knoten realisiert sein, dessen Netzwerkadresse beispielsweise öffentlich bekannt ist. Handelt es sich beispielsweise um ein geschlossenes verteiltes Datenbanksystem, bei dem nur berechtigte Knoten und/oder Geräte an das Steuersystem bzw. dem verteilten Datenbanksystem angebunden werden, so ist insbesondere ausschließlich die Netzwerkadresse des Registrierungsmoduls öffentlich bekannt.

Das Registrierungsmodul ist dazu eingerichtet neue Knoten und/oder Geräte dem ersten verteilten Datenbanksystem hinzuzufügen. Sobald ein neues Gerät und/oder Knoten dem ersten verteilten Datenbanksystem beitreten möchte, wird durch das neue Gerät oder durch den neuen Knoten eine Anfrage an das Registrierungsmodul gesendet. Dies kann direkt erfolgen, indem beispielsweise Knoten- und/oder Geräteinformationen direkt an das Registrierungsmodul übermittelt werden. Erfolgt dies indirekt wird die Anfrage zwischen den Knoten und Modulen des ersten verteilten Datenbanksystems weitergeleitet bis die Anfrage das Registrierungsmodul erreicht.

Die Knoten- und/oder Geräteinformationen können dabei folgendes umfassen:
- Geräteadresse/Knotenadresse
- Betreiber des Gerätes/Knotens
- Funktionsumfang des Gerätes/Knotens
- kryptographische Schlüssel (z. B. zum Überprüfen von Prüfsummen/digitalen Signaturen, die durch das Gerät/den Knoten erzeugt wurden)
- weitere Eigenschaften, die bei der Überprüfung der Ausführungsanforderungen benötigt werden

Die Knoten- und/oder Geräteinformationen können dann beispielsweise im ersten verteilten Datenbanksystem (z. B. in entsprechenden Tabellen) gespeichert werden, damit beispielsweise das Überprüfen und/oder das Ausführen der Steuerbefehle bzw. Steuertransaktionen durch die entsprechenden Module realisiert werden kann (siehe Fig. 1).

Handelt es sich bei dem ersten verteilten Datenbanksystem beispielsweise um ein geschlossenes verteiltes Datenbanksystem, überprüft das Registrierungsmodul auch, ob das Gerät/der Knoten zugangsberechtigt ist - also ob insbesondere das Gerät/der Knoten als Teil des ersten verteilten Datenbanksystems akzeptiert ist/wird. Hierfür stellt das Gerät/der Knoten beispielsweise Authentifizierungsinformationen (kryptographische Schlüssel, Passwörter, usw.) bereit, die durch das Registrierungsmodul überprüft werden.

Handelt es sich bei dem Datenbanksystem beispielsweise um ein offenes verteiltes Datenbanksystem, so werden beispielsweise die Knoten- und/oder Geräteinformationen erfasst.

Die Module können beispielsweise als Software- und/oder Hardwarekomponente ausgebildet sein - analog zum ersten Bestimmungsmodul 110 aus Fig. 1 (z. B. als Smart-Contract der Blockkette oder als vertrauenswürdige Knoten der Blockkette). Die Module können insbesondere durch die Blockkette bzw. einem Smart-Contract realisiert werden oder sind eine Softwarekomponente der Blockketten-Infrastruktur.

In einer weiteren Implementierungsvariante der Erfindung umfasst das erste verteilte Datenbanksystem zum Speichern von Datenblöcken folgendes:
- eine Vielzahl von Knoten (BCN), die über ein zweites Kommunikationsnetzwerk (NW2) miteinander verbunden sind;
- ein drittes Speichermodul zum Speichern von Transaktionen in Datenblöcken des verteilten Datenbanksystems;
- ein zweites Zuordnungsmodul zum Zuordnen eines Aufgabendatensatzes einer spezifischen Aufgabe zu dem verteilten Datenbanksystem;
- ein drittes Zuordnungsmodul zum Zuordnen eines Gültigkeitsdatensatzes für das verteilte Datenbanksystem.

Mit der Erfindung können auf einfache Weise komplexe Steuerbefehlsketten in einer Blockkette für eine spezifische Aufgabe zur Steuerung von Geräten verwaltet werden. Insbesondere erlaubt die Erfindung für eine spezifische Aufgabe einer blockkettenbasierten Gerätesteuerung eine vorgegebene Gültigkeit zuzuordnen, wobei die Gültigkeit beispielsweise durch den Lebenszyklus (z. B. die Nutzungsdauer) eines Gerätes definiert ist.

Insbesondere kann mittels des ersten verteilten Datenbanksystems beispielsweise auch ein digitaler Zwilling (z. B. in Form einer Blockkette) realisiert werden bzw. das erste verteilte Datenbanksystem ist ein digitaler Zwilling.

Der digitale Zwilling wird dabei beispielsweise für ein erstes verteiltes Datenbanksystem oder ein zu fertigendes Produkt (z. B. das Gerät aus Fig. 3 oder ein anderes Produkt) realisiert (bzw. berechnet oder erzeugt). Dabei kann das erste verteilte Datenbanksystem beispielsweise mittels einer UID (oder eine andere Form eines eindeutigen Identifizierers) eines Gerätes dem ersten verteilten Datenbanksystem zugeordnet werden (z. B. durch ein Speichern der entsprechenden UID im Aufgabendatensatz bzw. der spezifischen Aufgabe). Das erste verteilte Datenbanksystem kann beispielsweise das verteilte Datenbanksystem aus einem der Ansprüche 1-15 sein.des Steuersystems sein (z. B. in Fig. 1 gezeigt).

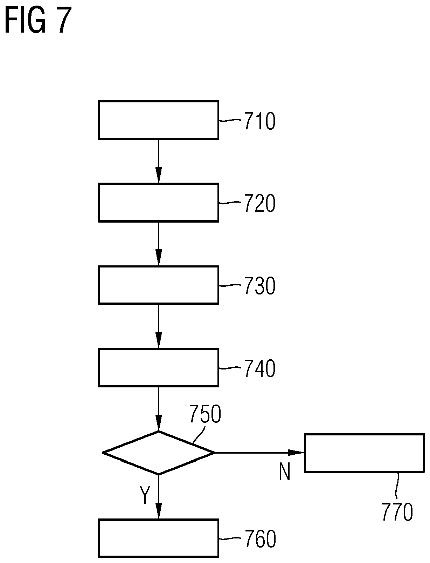

Die Fig. 7 zeigt ein siebtes Ausführungsbeispiel der Erfindung als Ablaufdiagramm eines erfindungsgemäßen Verfahrens.

Das Verfahren ist vorzugsweise rechnergestützt realisiert.

Im Einzelnen wird in diesem Ausführungsbeispiel ein Verfahren zum rechnergestützten Bereitstellen von Transaktionen realisiert.

Das Verfahren umfasst einen ersten Verfahrensschritt zum Speichern 710 von Daten in Transaktionen, wobei die Transaktionen in einem ersten verteilten Datenbanksystems gespeichert sind und/oder werden (z. B. werden/sind diese Transaktionen in Datenblöcken des verteilten Datenbanksystems gespeichert). Mit anderen Worten werden die entsprechenden Transaktionen mittels des verteilten Datenbanksystems oder durch das verteilte Datenbanksystem gespeichert (z. B. mittels Datenblöcken; beispielsweise sind die Transaktionen in den Datenblöcken des ersten verteilten Datenbanksystems gespeichert).

Das Verfahren umfasst einen zweiten Verfahrensschritt 720 zum Zuordnen eines Aufgabendatensatzes einer spezifischen Aufgabe zu dem verteilten Datenbanksystem, wobei die Transaktionen Daten zum Durchführen der spezifischen Aufgabe umfassen. Im Einzelnen umfasst dabei insbesondere der Aufgabendatensatz die spezifische Aufgabe.

Der zweite Verfahrensschritt 720 kann insbesondere entsprechend der nachfolgend genannten unterschiedlichen Varianten ausgebildet oder implementiert sein.

Insbesondere kann der zweite Verfahrensschritt 720 beispielsweise auch als ein Verfahrensschritt zum Speichern eines Aufgabendatensatzes mit einer spezifischen Aufgabe ausgebildet/implementiert sein. Zusätzlich oder alternativ kann im zweiten Verfahrensschritt 720 dem verteilten Datenbanksystem der Aufgabendatensatz zugeordnet werden. Im Einzelnen umfasst dabei insbesondere der Aufgabendatensatz die spezifische Aufgabe.

Mit anderen Worten kann es sich bei dem zweiten Verfahrensschritt 720 beispielsweise um einen Verfahrensschritt zum Speichern eines Aufgabendatensatzes mit einer spezifischen Aufgabe handeln (oder z. B. um einen Verfahrensschritt handeln, der entsprechend ausgebildet/implementiert ist), wobei
- insbesondere dem verteilten Datenbanksystem der Aufgabendatensatz zugeordnet ist (und/oder wird) und
- insbesondere die Transaktionen Daten zum Durchführen der spezifischen Aufgabe umfassen.

Bei den Daten kann es sich beispielsweise um Steuerbefehle oder Gerätedaten (z. B. Bestätigungstransaktionen) handeln, so wie dies in den vorherigen Ausführungsbeispielen erläutert wurde.

Das Verfahren umfasst einen dritten Verfahrensschritt 730 zum Zuordnen eines Gültigkeitsdatensatzes für das verteilte Datenbanksystem, wobei der Gültigkeitsdatensatz eine Gültigkeit für vorgegebene Funktionen des ersten verteilten Datenbanksystems angibt. Im Einzelnen umfasst dabei insbesondere der Gültigkeitsdatensatz die Gültigkeit für die entsprechenden vorgegebenen Funktionen (was z. B. auch eine einzelne Funktion oder eine Auswahl von Funktionen sein kann) des verteilten Datenbanksystems.

Der dritte Verfahrensschritt 730 kann insbesondere entsprechend der nachfolgend genannten unterschiedlichen Varianten ausgebildet oder implementiert sein.

Insbesondere kann der dritte Verfahrensschritt 730 beispielsweise auch als ein Verfahrensschritt zum Speichern des Gültigkeitsdatensatzes ausgebildet sein. Zusätzlich oder alternativ kann im dritten Verfahrensschritt 730 dem verteilten Datenbanksystem der Gültigkeitsdatensatz zugeordnet werden. Im Einzelnen umfasst dabei insbesondere der Gültigkeitsdatensatz die (entsprechende) Gültigkeit für die (entsprechenden) vorgegebenen Funktionen (was z. B. auch eine einzelne Funktion oder eine Auswahl von Funktionen sein kann) des verteilten Datenbanksystems.

Mit anderen Worten kann es sich bei dem dritten Verfahrensschritt 730 beispielsweise um einen Verfahrensschritt zum Speichern eines Gültigkeitsdatensatz mit einer spezifischen Aufgabe handeln, wobei
- insbesondere dem verteilten Datenbanksystem der Gültigkeitsdatensatz zugeordnet ist (und/oder wird) und
- insbesondere der Gültigkeitsdatensatz eine Gültigkeit für vorgegebene Funktionen des verteilten Datenbanksystems angibt (oder umfasst).

Das Verfahren umfasst einen vierten Verfahrensschritt 740 zum Überprüfen der Gültigkeit des ersten verteilten Datenbanksystems und/oder der vorgegebenen Funktionen.

Abhängig vom Ergebnis dieses Überprüfens kann in einem Verfahrensschritt 750 entschieden werden, ob nun eine Funktion ausgeführt wird oder nicht.

Ist das Ergebnis, dass das erste verteilte Datenbanksystem oder die vorgegebene Funktion noch gültig Y ist, so wird die entsprechende Funktion (z. B. Einfügen einer Transaktion in das erste verteilte Datenbanksystem) in einem fünften Verfahrensschritt 760 durch das erste verteilte Datenbanksystem ausgeführt.

Ist das Ergebnis, dass das erste versteilte Datenbanksystem oder die vorgegebene Funktion nicht gültig N ist, so wird die entsprechende Funktion in einem sechsten Verfahrensschritt 760 durch die das erste verteilte Datenbanksystem unterbunden und nicht ausgeführt.

In einer Implementierungsvariante der Erfindung umfasst das Verfahren zum rechnergestützten Bereitstellen von Transaktionen folgende Verfahrensschritte:
- Speichern 710 von Daten in Transaktionen, wobei die Transaktionen in Datenblöcke eines ersten verteilten Datenbanksystems gespeichert sind;
- Zuordnen 720 eines Aufgabendatensatzes einer spezifischen Aufgabe zu dem verteilten Datenbanksystem;
- Zuordnen 730 eines Gültigkeitsdatensatzes für das verteilte Datenbanksystem.

Die Fig. 8 zeigt ein achtes Ausführungsbeispiel der Erfindung als Bestimmungsmodul 110.

Das Bestimmungsmodul 110 ist für ein verteiltes Datenbanksystem oder für ein Steuersystem mit einem verteilten Datenbanksystem zum Steuern und/oder Überwachen von Geräten oder für Geräte geeignet, die Steuerbefehle (z. B. im Form von Transaktionen) ausführen.

Das Bestimmungsmodul 110 umfasst eine erste Schnittstelle 810, eine erste Evaluierungseinheit 820 und optional einen Konfigurationsspeicher 830, die über einen Bus 901 vorzugsweise miteinander kommunikativ in Verbindung stehen. Ein Bus kann hierbei z. B. auch ein einfacher Programmfluss oder ein Datenaustausch zwischen den entsprechenden Komponenten sein.

Das Bestimmungsmodul kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über den Bus miteinander kommunikativ verbunden sein.

Bei dem Prozessor kann es sich beispielsweise um einen ASIC handeln, der anwendungsspezifisch für die Funktionen eines jeweiligen Moduls (oder einer Einheit) oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Die erste Schnittstelle 810 ist zum Empfangen oder Abrufen von Steuerbefehlen eingerichtet. Die Steuerbefehle können dabei z. B. von einem Nutzer mittels einer GUI an die erste Schnittstelle 810 übermittelt werden. Die Steuerbefehle können aber auch durch einen Server oder eine andere Datenbank bereitgestellt werden. Dies kann beispielsweise wieder ein verteiltes Datenbanksystem sein oder eine hierarchische Datenbank sein. Sollte das Bestimmungsmodul beispielsweise in einem erfindungsgemäßen Steuersystem eingesetzt/installiert werden, so können die Steuerbefehle oder eine Befehlsfolge dem Steuersystem (z. B. das Steuersystem aus Fig. 1) auf die gleiche Weise übermittelt werden, so wie dies in diesem Ausführungsbeispiel beschrieben wird.

Die Steuerbefehle können beispielsweise auch von einem Zerlegemodul, so wie es in den vorhergehenden Ausführungsbeispielen erläutert wurde, bereitgestellt werden. Das Zerlegemodul empfängt oder ruft hierzu die Steuerbefehle oder Befehlsfolgen ab.

Die Steuerbefehle oder Befehlsfolgen können dabei z. B. von einem Nutzer mittels einer GUI und beispielsweise über eine zweite Schnittstelle oder die erste Schnittstelle 810, an das erste Zerlegemodul übermittelt werden. Die Steuerbefehle oder die Befehlsfolgen können aber auch durch einen Server oder eine andere Datenbank dem Zerlegemodul bereitgestellt werden. Dies kann beispielsweise wieder ein verteiltes Datenbanksystem sein oder eine hierarchische Datenbank sein.

Die erste Evaluierungseinheit 820 ist zum Bestimmen von Ausführungsanforderungen für eine Ausführung von Steuerbefehle durch Knoten eines/des verteilten Datenbanksystems oder durch Geräte, die z. B. mittels eines verteilten Datenbanksystems verbunden sind, eingerichtet, wobei
- insbesondere die Ausführungsanforderungen anhand von gerätespezifischen Anforderungen und/oder vorausgesetzte Steuerbefehle bestimmt werden, die z. B. für die Steuerbefehle ermittelt wurden,
- in den Ausführungsanforderungen z. B. die gerätespezifische Anforderungen und/oder die vorausgesetzte Steuerbefehle gespeichert sind;
- das verteilte Datenbanksystem beispielsweise eine Blocckette ist.

In einer Variante ist die erste Evaluierungseinheit 820 zum Bestimmen von Ausführungsanforderungen für eine Ausführung von Steuerbefehle durch Knoten eines/des verteilten Datenbanksystems oder durch Geräte, die z. B. mittels eines verteilten Datenbanksystems verbunden sind, eingerichtet, wobei
- die Ausführungsanforderungen anhand der Steuerbefehle bestimmt werden,
- insbesondere gerätespezifische Anforderungen und/oder vorausgesetzte Steuerbefehle bestimmt werden,
- in den Ausführungsanforderungen z. B. die gerätespezifische Anforderungen und/oder die vorausgesetzte Steuerbefehle gespeichert sind,
- das verteilte Datenbanksystem beispielsweise eine Blockkette ist.

In einer Variante kann eine Ausführbarkeit der Steuerbefehle durch Knoten eines verteilten Datenbanksystems oder durch Geräte anhand der Ausführungsanforderungen ermittelt werden. Mit anderen Worten kann beispielsweise ermittelt werden, ob die Steuerbefehle von den Knoten und/oder Geräten ausführbar sind.

Die Ausführbarkeit kann beispielsweise dadurch bestimmt werden, dass überprüft wird, ob die Geräte und/oder Knoten in der Lage sind die entsprechenden Steuerbefehle auszuführen. Dies kann beispielsweise dadurch bestimmt werden, indem die gerätespezifischen Anforderungen mit den gerätespezifischen Daten abgeglichen werden, um festzustellen ob ein Gerät und/oder welches Gerät in der Lage ist die entsprechenden Steuerbefehle umzusetzen/auszuführen.

Hierzu können zunächst die entsprechenden Geräteinformationen (oder gerätespezifische Daten oder Geräteeigenschaften) aus dem/einem Registrierungsmodul oder einer Gerätedatenbank (beispielsweise kann das Bestimmungsmodul die Gerätedatenbank und/oder das Registrierungsmodul umfassen oder mit diesen kommunikativ in Verbindung stehen) abgerufen werden und mit den gerätespezifischen Anforderungen abgeglichen werden. Erfüllt ein Gerät oder mehrere Geräte die gerätespezifischen Anforderungen, ist die Ausführbarkeit der Steuerbefehle hinsichtlich der gerätespezifischen Anforderungen (erfolgreich) ermittelt worden. Mit anderen Worten sind die entsprechenden Steuerbefehle zumindest durch ein Gerät bzw. Knoten ausführbar.

In einer Variante können von dem Steuersystem, dem Bestimmungsmodul, dem Registrierungsmodul oder der Gerätedatenbank aktuelle gerätespezifische Daten von einem entsprechenden Gerät abgerufen werden oder zusätzlich abgerufen werden, um beispielsweise einen aktuellen Gerätezustand (z. B. Fehlerzustand des Gerätes, Gerät ist in einem Wartungsmodus, Gerät ist aktuell betriebsbereit) des Gerätes/Knoten bei der Ermittlung der Ausführbarkeit zu berücksichtigen. Beispielsweise kann ein entsprechendes Gerät laut den Geräteinformationen des Registrierungsmoduls die Steuerbefehle ausführen. Sind diese Geräteinformationen beispielsweise veraltet (diese wurden z. B. bei der Installation des Gerätes im Registrierungsmodul gespeichert), so kann es beispielsweise sein, dass der aktuelle Gerätezustand (z. B. Gerät ist in einem Fehlerzustand) keine Ausführung der Steuerbefehle durch eines der Geräte erlaubt. In einem solchen Fall kann die Ausführbarkeit der Steuerbefehle nicht erfolgreich ermittelt werden bzw. eine Ausführbarkeit der Steuerbefehle wird nicht bestätigt. Ein Gerätezustand ist dabei z. B. ein "Fehlerzustand" (z. B. Betriebssystem abgestürzt, Werkzeug defekt, ein Gerätebauteil ist defekt), ein "Wartungszustand" (das Gerät kann beispielsweise keine Steuerbefehle ausführen, da gerade Ersatzteile eingebaut werden), "Ausgelastet" (das Gerät kann beispielsweise im Augenblick keine Steuerbefehle abarbeiten, da es im Augenblick bereits Steuerbefehle abarbeitet) oder "Betriebsbereit" (das Gerät ist in der Lage die Steuerbefehle abzuarbeiten). Die aktuellen gerätespezifischen Daten umfassen dabei vorzugsweise einen aktuellen Gerätezustand und/oder eine Information wann das Gerät in der Lage ist die Steuerbefehle abzuarbeiten und/oder wann das Gerät voraussichtlich die Steuerbefehle abgearbeitet hat und/oder wann das Gerät die Steuerbefehle sicher abgearbeitet hat. Dabei ist insbesondere eine Information wann das Gerät die Steuerbefehle sicher abgearbeitet hat für Echtzeitanwendungen oder in Echtzeitszenarien relevant. Wurden beispielsweise aktuelle gerätespezifische Daten ermittelt, werden anhand dieser Daten beispielsweise die Einträge in der Gerätedatenbank aktualisiert.

In einer Variante wird beispielsweise zunächst überprüft, wann die gerätespezifischen Daten für ein entsprechendes Gerät (oder einen entsprechenden Knoten) in der Gerätedatenbank aktualisiert wurden. Erfolgte dies kürzlich (z. B. innerhalb eines vorgegebenen Zeitraums - beispielsweise 1 Stunde oder 5 Minuten) so kann beispielsweise auf ein erneutes Abrufen gerätespezifischer Daten verzichtet werden, da die Daten der Gerätedatenbank als aktuell angesehen werden. Entsprechend umfassen die Einträge in der Gerätedatenbank mit gerätespezifischer Daten beispielsweise einen Zeitstempel, der die letzte Aktualisierung angibt.

Der Datenaustausch hier oder auch in den anderen Ausführungsbeispielen der Erfindung wird beispielsweise mittels der Infrastruktur oder Kommunikationsinfrastruktur des verteilten Datenbanksystems realisiert, indem z. B. entsprechende Nachrichten oder Transaktionen mit entsprechenden Daten ausgetauscht werden.

In einer Variante wird die Ausführbarkeit der Steuerbefehle ermittelt bzw. überprüft, indem überprüft wird, ob z. B. für die entsprechenden vorausgesetzten Steuerbefehle entsprechende Bestätigungstransaktionen beispielsweise im verteilten Datenbanksystem vorhanden sind bzw. von dem verteilten Datenbanksystem gespeichert sind. Mit anderen Worten sind beispielsweise die Steuerbefehle durch ein entsprechendes Gerät ausführbar, wenn Bestätigungstransaktionen für die (entsprechenden) vorausgesetzten Steuerbefehle der jeweiligen Ausführungsanforderungen der jeweiligen Steuertransaktion im verteilten Datenbanksystem verfügbar sind. Beispielsweise wenn solche Bestätigungstransaktionen in entsprechenden Datenblöcken gespeichert sind.

In einer weiteren Variante können beispielsweise auch die Geräte direkt befragt werden, ob diese in der Lage sind die entsprechenden Steuerbefehle auszuführen bzw. die entsprechenden Ausführungsanforderungen einhalten. Dies kann z. B. erfolgen indem entsprechende Anfragetransaktionen oder Anfragenachrichten an die entsprechenden Geräte gesendet werden. Wenn die Geräte dies z. B. mittels entsprechender Nachrichten bestätigen und beispielsweise auch eine Einhaltung der Ausführungsanforderungen bestätigen, werden die entsprechenden Ausführungsanforderungen für die entsprechenden Steuerbefehle bestimmt bzw. erzeugt.

Die Ausführungsanforderungen können in einer weiteren Variante z. B. auch in einem zweistufigen Prozess überprüft werden. Beispielsweise wird ein erster Teil der Ausführungsanforderungen z. B. bereits beim Bestimmen der Ausführungsanforderungen und/oder beim Ermitteln der Ausführbarkeit der Steuerbefehle überprüft. Ein zweiter Teil der Ausführungsanforderungen wird beispielsweise dann von dem Gerät bzw. dem Überprüfungsmodul überprüft. Beispielsweise wird beim Überprüfen des ersten Teils der Ausführungsanforderungen überprüft, ob die Geräte technisch in der Lage sind (z. B. aktuell technisch in der Lage sind) die Steuerbefehle auszuführen. Beispielsweise wird beim Überprüfen des zweiten Teils er Ausführungsanforderungen überprüft, ob z. B. die vorausgesetzten Steuerbefehle bereits ausgeführt wurden. Wird beispielsweise bereits beim Überprüfen des ersten Teils der Ausführungsanforderungen festgestellt, dass dieser erste Teil der Ausführungsanforderungen nicht von den Geräten/Knoten erfüllt werden kann, kann beispielsweise ein Zuordnen der Ausführungsanforderungen zu den Steuerbefehlen unterbleiben und/oder ein Speichern der Steuertransaktionen unterbleiben. Mit anderen Worten wird das Zuordnung und/oder Speichern abhängig von einem Ergebnis des Überprüfens der Ausführbarkeit (z. B. des ersten Teils der Ausführungsanforderungen) der Steuerbefehle von/durch die Geräte und/oder den Knoten durchgeführt.

Der Konfigurationsspeicher umfasst die gerätespezifischen Daten über die Geräte und/oder gerätespezifische Daten über die Knoten und/oder die gerätespezifische Anforderungen.

Das Bestimmungsmodul ist dahingehend vorteilhaft, um insbesondere die Ausführung von Steuerbefehlen von Geräten oder Knoten (z. B. Fertigungsroboter, Steuersysteme für ein Energieverteilungsnetzwerk, Bankterminals, Geldautomaten, Transfers zwischen Banken) zu verbessern, die über ein Netzwerk miteinander verbunden sind.

Das Bestimmungsmodul kann auch beispielsweise die Steuerbefehle spezifischen Geräten zuordnen, die diese Ausführen sollen. Dies wird vorzugsweise in den Ausführungsanforderungen gespeichert.

Zusätzlich kann beispielsweise die Sicherheit beim Betreiben einer verteilten Infrastruktur (z. B. ein verteiltes Datenbanksystem mit Geräten und/oder Knoten oder Knoten/Geräte die auf das verteilte Datenbanksystem zugreifen) erhöht werden, die ganz oder teilweise mittels eines verteilten Datenbanksystems (z. B. einer Blockkette) implementiert ist.

Insbesondere ist der Begriff Steuerbefehle breit zu verstehen. Hierbei kann es sich beispielsweise zusätzlich zu der oben genannten Definition auch um Transaktionen handeln, die durch ein Gerät (z. B. einen Knoten einer Blockkette oder ein Gerät außerhalb der Blockkette, z. B. Gerät D) ausgeführt werden sollen. Mit anderen Worten werden durch die Vorrichtung insbesondere ungeprüfte Transaktionen in geprüfte Transaktionen konvertiert, wobei die Prüfung beispielsweise anhand der gerätespezifischen Anforderungen und gerätespezifischen Daten erfolgt, welche die Steuerbefehle ausführen sollen.

Mittels der Erfindung können beispielsweise geforderte gerätespezifische Anforderungen für die Ausführung der Steuerbefehle am Gerät sichergestellt bzw. überprüft werden. Dabei können die gerätespezifischen Anforderungen beispielsweise auch Sicherheitsanforderungen und/oder ortsbezogene Anforderungen (z. B. eine Länderangabe, eine GPS-Angabe oder PLZ) sein, die ein Gerät für die Ausführung der Steuerbefehle erfüllen soll. Die Sicherheitsanforderungen und/oder ortsbezogene Anforderungen können beispielsweise auch in den Ausführungsanforderungen gespeichert sein. Oder es kann beispielsweise noch eine bestimmte/vorgegebene Authentisierung und/oder Authentifizierung durch die gerätespezifischen Anforderungen für die Ausführung von Steuerbefehlen gefordert werden. Beispielsweise wird bestimmt welche der entsprechenden Anforderungen (Ausführungsanforderungen, vorausgesetzte Steuerbefehle, gerätespezifische Anforderungen, Sicherheitsanforderungen, ortsbezogene Anforderungen) für eine Ausführung von entsprechenden Steuerbefehlen durch Geräte relevant sind bzw. berücksichtigt werden müssen. Können beispielsweise keine Ausführungsanforderungen für entsprechende Steuerbefehle ermittelt werden, beispielsweise weil keines der Geräte die entsprechenden Ausführungsanforderungen erfüllt, kann beispielsweise ein Speichern der Steuerbefehle in Steuertransaktionen unterbunden werden bzw. nicht erfolgen.
Die gerätespezifischen Anforderungen für Knoten oder Geräte können beispielsweise auch nutzerbezogen sein oder nutzerspezifische Anforderungen umfassen. Beispielsweise kann ein erster Nutzer in den ihm zugeordneten gerätespezifischen Anforderungen eine niedrige Präzision bei der Fertigung eines Werkstückes fordern. Beispielsweise kann dann ein zweiter Nutzer in den ihm zugeordneten gerätespezifischen Anforderungen eine höhere Präzision bei der Fertigung eines Werkstückes fordern. Auf diese Weise können auch Sicherheitsanforderungen nutzerbezogen gespeichert werden. Es ist beispielsweise auch denkbar, dass bestimmten Typen oder Arten von Steuerbefehlen - nutzerbezogen oder nicht - gerätespezifische Anforderungen zugeordnet sind, die durch das Bestimmungsmodul berücksichtigt werden. Beispielsweise kann gefordert sein, dass ein Steuerbefehl zum Aufspielen einer Firmware nur durch ein Gerät erfolgt, das vorgegebene Sicherheitsanforderungen erfüllt, um z. B. sicherzustellen, dass nicht ohne weiteres Know-How der Firmware für jeden in einer Fertigungsanlage zugängig ist. Durch diese vorgegebenen Sicherheitsanforderungen kann beispielsweise gefordert sein, dass nur bestimmtes Personal einen Zugriff auf ein entsprechendes Gerät hat oder das Gerät durch ein Passwort und/oder anderen kryptographischen Mechanismen geschützt ist (z. B. Zugriff ist nur durch Einstecken einer Chipkarte und Eingeben einer Pin möglich).

Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert (z. B. bei seiner Heimatbank oder beim Onlinebanking), dass er vorzugsweise nur in vorgegebenen Ländern, z. B. Italien, Frankreich und Österreich, eine Bargeldauszahlung erlaubt, so wird dies in den gerätespezifischen Anforderungen gespeichert, die vorzugsweise einem bestimmten Nutzer zugeordnet sind. Ein Geldautomat in Andorra würde dann ggf. keine Auszahlung erlauben bzw. diese unterbinden. Auch kann beispielsweise durch die Sicherheitsanforderungen eine vorgegebene Authentifizierung des Kunden gefordert sein. Beispielsweise, dass ein Pin für eine Auszahlung eingegeben wird (was z. B. in den USA nicht zwangsläufig der Fall ist) und/oder eine bestimmte Pin-Länge gefordert ist (z. B. 8 Zeichen) und/oder, dass andere zusätzliche Authentisierungsverfahren gefordert sind (z. B. 2 Faktor-Authentisierung, Mobile-Tan, Google Authenticator). Auf ähnliche Weise kann beispielsweise ein Aufladen einer Geldkarte realisiert sein, wobei z. B. die gerätespezifischen Anforderungen für die Geldkarte und das Gerät zum Aufladen Sicherheitsanforderungen vorgeben. Beispielsweise müssen die Geldkarte oder das Gerät zum Aufladen vorgegebene kryptographische Verfahren und/oder Authentifizierungsverfahren nutzen bzw. über die verfügen, um den Aufladevorgang durch zu führen.

Alternativ oder zusätzlich kann die (erste) Evaluierungseinheit die Steuerbefehle auch weiter analysieren oder umfangreicher analysieren. Wenn beispielsweise die Evaluierungseinheit bereits feststellt, dass die gerätespezifischen Anforderungen nicht erfüllt sind oder nicht erfüllbar sind (z. B. die Steuerbefehle wurden aus einem nicht freigegebenen Land geschickt oder sind für die Ausführung in einem nicht freigegebenen Land gedacht), kann z. B. die (erste) Evaluierungseinheit eine Steuertransaktion erstellen, die das entsprechende Gerät, Knoten oder das System auf die Nicht-Ausführbarkeit hinweist und vorzugsweise eine Ausführung der Steuerbefehle unterbindet bzw. verbietet. Alternativ kann beispielsweise auch keine Steuertransaktion erzeugt werden und es gibt irgendwann einen Timeout für die Ausführung der Steuerbefehle, z. B. nach einem vorgegebenen Zeitraum.

Um dies festzustellen, vergleicht die (erste) Evaluierungseinheit die gerätespezifischen Daten für das Gerät, das die Steuerbefehle ausführen soll, mit den gerätespezifischen Anforderungen z. B. für die Steuerbefehle. Abhängig vom Ergebnis dieses Vergleichens wird dann entweder eine Steuertransaktion erzeugt, die eine Ausführung der Steuerbefehle auf dem entsprechenden Gerät erlaubt, oder es wird keine Steuertransaktion erstellt oder es wird eine Steuertransaktion erstellt, die eine Ausführung der Steuerbefehle verbietet bzw. unterbindet. Mit anderen Worten wird beispielsweise eine Steuertransaktion für entsprechende Steuerbefehle erzeugt, wenn erfolgreich Ausführungsanforderungen bestimmt/berechnet werden konnten. Konnten beispielsweise dagegen keine Ausführungsanforderungen erstellt werden, wird beispielsweise keine Steuertransaktion für die entsprechenden Steuerbefehle erstellt. Alternativ kann beispielsweise eine Steuertransaktion zum unterbinden/verbieten (oder unterbrechen) der Steuerbefehle erzeugt werden und in dem verteilten Datenbanksystem gespeichert werden, wenn beispielsweise die Steuerbefehle bereits in Transaktionen des verteilten Datenbanksystems gespeichert sind.

Stellt die (erste) Evaluierungseinheit fest, dass die Steuerbefehle ausführbar sind (der Vergleich also positiv ist), erzeugt die (erste) Evaluierungseinheit entsprechende Ausführungsanforderungen und übermittelt die Steuerbefehle und die Ausführungsanforderungen beispielsweise an das erste Zuordnungsmodul zum Zuordnen der jeweiligen Ausführungsanforderungen zu den Steuerbefehlen. Das erste Zuordnungsmodul kann z. B. eine integrale Komponente des Bestimmungsmoduls sein oder eine integrale Komponente der Evaluierungseinheit.

Entsprechend kann somit insbesondere abhängig vom Ergebnis dieses Vergleichens dann entweder eine Steuertransaktion erzeugt werden, die eine Ausführung der Steuerbefehle auf dem entsprechenden Gerät erlaubt, oder es wird keine Steuertransaktion erstellt oder es wird eine Steuertransaktion erstellt, die eine Ausführung der Steuerbefehle verbietet bzw. unterbindet und/oder denjenigen der die Steuerbefehle bereitgestellt hat darüber informiert, dass die Steuerbefehle nicht ausführbar sind.

Danach werden die Steuerbefehle ggf. zusammen mit den zugehörigen Ausführungsanforderungen beispielsweise an ein erstes Speichermodul des Bestimmungsmoduls übermittelt. Diese Übermittlung kann beispielsweise durch das Zuordnungsmodul, die (erste) Evaluierungseinheit oder das Bestimmungsmodul selbst erfolgen.

Das erste Speichermodul ist zum Speichern der jeweiligen Steuerbefehle in Steuertransaktionen eingerichtet, wobei die Steuerbefehle beispielsweise zusammen mit den zugeordneten Ausführungsanforderungen in den Steuertransaktionen gespeichert werden, wenn beispielsweise die Steuerbefehle durch eines der Geräte (z. B. einem Geldautomat) Gerät ausführbar sind. Dies kann beispielsweise dadurch festgestellt werden, indem für entsprechende Steuerbefehle erfolgreich Ausführungsanforderungen bestimmt wurden bzw. für die entsprechenden Steuerbefehle Ausführungsanforderungen vorliegen.

Mit anderen Worten wird abhängig vom Ergebnis des Vergleichens festlegt, ob eine Steuertransaktion gespeichert wird und/oder mit welchem Inhalt eine Steuertransaktion gespeichert wird.

Zum Speichern können die Steuertransaktionen dann in Datenblöcken (B) des verteilten Datenbanksystems (BC) gespeichert werden, wobei insbesondere die Steuertransaktionen mittels der Datenblöcke (B) an die Geräte (300, D, BCN_D) oder die Knoten übertragen werden - sofern eine Steuertransaktion erstellt wurde.

Zusätzlich kann das Bestimmungsmodul 110 beispielsweise noch ein erstes Zuordnungsmodul und/oder ein erstes Speichermodul und/oder weitere Module umfassen, so wie dies in den Ausführungsbeispielen erläutert wurde. Die Knoten oder Geräte können dann beispielsweise ein Überprüfungsmodul und/oder ein Ausführungsmodul umfassen, so wie dies in den Ausführungsbeispielen erläutert wurde.

Es wäre beispielsweise auch denkbar, dass Online-Banking auf die oben genannte Weise abgesichert wird, indem Sicherheitsanforderungen und/oder ortsbezogene Anforderungen des Rechners (also das Gerät, das Steuerbefehle verschickt) überprüft werden und, um festzustellen, ob die Auszahlung oder Überweisung durch ein anderes Gerät erlaubt ist. Hierzu kann beispielsweise dieser Rechner ein Knoten des verteilten Datenbanksystems sein oder ein Gerät - so wie dies bereits erläutert wurde.

Die Fig. 9 zeigt ein neuntes Ausführungsbeispiel der Erfindung als Ablaufdiagramm eines erfindungsgemäßen Verfahrens.

Das Verfahren ist vorzugsweise rechnergestützt realisiert.

Im Einzelnen wird in diesem Ausführungsbeispiel ein Verfahren zum rechnergestützten Bestimmen von Ausführungsanforderungen für Steuerbefehle realisiert. Das Verfahren kann beispielsweise auch verwendet werden, um die Ausführbarkeit von Steuerbefehlen zu ermitteln, so wie dies beispielsweise in Fig. 8 erläutert ist.

Das Verfahren umfasst einen ersten Verfahrensschritt 910 zum Empfangen oder Abrufen von Steuerbefehlen.

Das Verfahren umfasst einen zweiten Verfahrensschritt 920 zum Prüfen einer Ausführbarkeit der Steuerbefehle durch Knoten eines verteilten Datenbanksystems oder durch Geräte anhand gerätespezifischer Anforderungen und/oder vorausgesetzte Steuerbefehle. Bei dieser Prüfung werden zusätzlich beispielsweise die gerätespezifischen Daten und/oder die bereits ausgeführten Steuerbefehle bzw. Steuertransaktionen mit geprüft. Beispielsweise wird geprüft, ob ein Gerät die gerätespezifischen Anforderungen erfüllt, indem für das entsprechende Gerät die gerätespezifischen Daten überprüft werden.

Das Verfahren umfasst einen dritten Verfahrensschritt 930 zum Bestimmen von Ausführungsanforderungen abhängig vom Ergebnis des Prüfens der Ausführbarkeit für eine Ausführung von Steuerbefehlen durch Knoten eines verteilten Datenbanksystems oder durch Geräte.

Mit anderen Worten werden die Ausführungsanforderungen anhand von gerätespezifischen Anforderungen und/oder vorausgesetzte Steuerbefehle bestimmt.

Der zweite und der dritte Verfahrensschritt können beispielsweise durch die (erste) Evaluierungseinheit des Bestimmungsmoduls aus Fig.8 implementiert werden.

In den Ausführungsanforderungen sind dabei bzw. werden die gerätespezifische Anforderungen und/oder die vorausgesetzten Steuerbefehle gespeichert. Das verteilte Datenbanksysten ist dabei beispielsweise eine Blockkette.

Die Knoten oder die Geräte sind dabei z. B. mittels des verteilten Datenbanksystems verbunden.

Zum Bestimmen der Ausführungsanforderungen werden z. B. die gerätespezifischen Anforderungen oder vorausgesetzten Steuerbefehle analysiert und mit den bereits ausgeführten Steuerbefehlen und gerätespezifischen Anforderungen für verfügbare Geräte verglichen. Beispielsweise kann in diesem Schritt auch eine spezifische Zuweisung bzw. Zuordnung eines spezifischen Knotens oder eines spezifischen Gerätes erfolgen, das die Steuerbefehle ausführen soll. Damit werden insbesondere die Zuverlässigkeit und die Sicherheit der Ausführung verbessert bzw. sichergestellt, dass die Ausführung z. B. das gewünschte Resultat erzeugt. Dies ist z. B., dass ein Produkt mit der erforderlichen Präzision gefertigt wurde.

In einer weiteren Variante betrifft die Erfindung ein Verfahren zum rechnergestützten Bestimmen von Ausführungsanforderungen für Steuerbefehle mit folgenden Verfahrensschritten:
- Empfangen oder Abrufen von Steuerbefehlen;
- Bestimmen von Ausführungsanforderungen für eine Ausführung von Steuerbefehlen durch Knoten eines verteilten Datenbanksystems oder durch Geräte, wobei
   - die Ausführungsanforderungen anhand gerätespezifischer Anforderungen und/oder vorausgesetzter Steuerbefehle bestimmt werden, die für die Steuerbefehle ermittelt wurden
   - das verteilte Datenbanksystem beispielsweise eine Blockkette ist.

In einer weiteren Variante betrifft die Erfindung ein Verfahren zum rechnergestützten Bestimmen von Ausführungsanforderungen für Steuerbefehle mit folgenden Verfahrensschritten:
- mit beispielsweise einem Verfahrensschritt zum Empfangen oder Abrufen von Steuerbefehlen;
- mit beispielsweise einem Verfahrensschritt zum Bestimmen von Ausführungsanforderungen für eine Ausführung von Steuerbefehlen durch Knoten eines verteilten Datenbanksystems oder durch Geräte, wobei
   - beispielsweise die Ausführungsanforderungen anhand gerätespezifischer Anforderungen und/oder vorausgesetzter Steuerbefehle bestimmt werden, die für die Steuerbefehle ermittelt wurden,
   - das verteilte Datenbanksystem beispielsweise eine Blockkette ist.

Dies kann beispielsweise dadurch erfolgen, dass zunächst die gerätespezifischer Anforderungen und/oder die vorausgesetzten Steuerbefehle für die Steuerbefehle ermittelt werden, die dann wiederum in den Ausführungsanforderungen gespeichert werden.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles, Stand 14.03.2018 https://blockchainhub.net/blockchain-oracles/
[9] Joseph Poon, Thaddeus Dryja: The Bitcoin Lightning Network: Scalable Off-Chain Instant Payments. 14. Januar 2016, abgerufen am 30. Juni 2018 (PDF; 3 MB, englisch).

## Patentansprüche

1. Bestimmungsmodul (110) für ein verteiltes Datenbanksystem oder für ein Steuersystem mit einem verteilten Datenbanksystem zum Steuern und/oder Überwachen von Geräten aufweisend:
- eine erste Schnittstelle (810) zum Empfangen oder Abrufen von Steuerbefehlen;
- eine erste Evaluierungseinheit (820) zum Bestimmen von Ausführungsanforderungen für eine Ausführung von Steuerbefehlen durch Knoten eines verteilten Datenbanksystems oder durch Geräte, wobei
- die Ausführungsanforderungen anhand von gerätespezifischen Anforderungen und/oder vorausgesetzte Steuerbefehle bestimmt werden, die für die Steuerbefehle ermittelt wurden.

2. Bestimmungsmodul (110) nach Anspruch 1, wobei
- das Bestimmungsmodul (110) einen Optimierer umfasst,
- der Optimierer die Ausführung der Steuerbefehle durch die Geräte anhand eines vorgegebenen Kriteriums optimiert.

3. Bestimmungsmodul (110) nach Anspruch 1 oder 2, wobei
- das Bestimmungsmodul (110) ein erstes Zerlegemodul umfasst,
- das erste Zerlegemodul dazu eingerichtet ist, eine Befehlsfolge in die entsprechenden Steuerbefehle zu zerlegen;
- die entsprechenden Steuerbefehle beispielsweise dem Steuersystem oder dem ersten Bestimmungsmodul bereitgestellt werden.

4. Bestimmungsmodul (110) nach einem der vorhergehenden Ansprüche, wobei
- die Vorrichtung oder das Bestimmungsmodul (110) ein Aktivitätsmodul umfasst,
- das Aktivitätsmodul dazu eingerichtet ist, die Aktivität der Vorrichtung und/oder des Bestimmungsmoduls anzuzeigen oder zu dokumentieren.

5. Bestimmungsmodul (110) nach einem der vorhergehenden Ansprüche, wobei das Bestimmungsmodul einen Konfigurationsspeicher umfasst, der gerätespezifische Daten über die Geräte und/oder gerätespezifische Daten über die Knoten und/oder die gerätespezifische Anforderungen umfasst.

6. Bestimmungsmodul (110) nach einem der vorhergehenden Ansprüche, wobei das Bestimmungsmodul eine administrative Schnittstelle umfasst.

7. Bestimmungsmodul (110) nach einem der vorhergehenden Ansprüche, wobei das Bestimmungsmodul eine Erfassungseinheit zum Erfassen von gerätespezifischen Daten über die Geräte oder von gerätespezifischen Daten über Knoten umfasst.

8. Bestimmungsmodul (110) nach einem der vorhergehenden Ansprüche, wobei das Bestimmungsmodul ein Knoten eines verteilten Datenbanksystems ist oder ein Smart-Contract eines verteilten Datenbanksystems oder als Gerät ausgebildet ist.

9. Bestimmungsmodul (110) nach einem der vorhergehenden Ansprüche, wobei das Bestimmungsmodul ein erstes Zuordnungsmodul (120) zum Zuordnen der jeweiligen Ausführungsanforderungen zu den Steuerbefehlen umfasst.

10. Bestimmungsmodul (110) nach einem der vorhergehenden Ansprüche, wobei
- die erste Evaluierungseinheit die Ausführungsanforderungen für die Ausführung anhand der gerätespezifische Anforderungen und/oder vorausgesetzte Steuerbefehle und gerätespezifischen Daten und/oder bereits ausgeführten Steuerbefehlen bestimmt, die für die Steuerbefehle ermittelt wurden,
- insbesondere die Ausführungsanforderungen abhängig von einem Ergebnis eines Vergleiches der gerätespezifische Anforderungen und/oder vorausgesetzte Steuerbefehle mit gerätespezifischen Daten und/oder bereits ausgeführten Steuerbefehlen bestimmt werden.

11. Bestimmungsmodul (110) nach einem der vorhergehenden Ansprüche, wobei
- die erste Evaluierungseinheit die Ausführungsanforderungen für die Ausführung anhand einer Ausführbarkeit der Steuerbefehle durch einen Knoten der verteilten Daten oder ein Gerät bestimmt,
- insbesondere die Ausführungsanforderungen abhängig von einem Ergebnis einer Prüfung einer Ausführbarkeit Steuerbefehle durch einen Knoten des verteilten Datenbanksystem oder der Geräte bestimmt werden.

12. Bestimmungsmodul (110) nach einem der vorhergehenden Ansprüche, wobei
- das Bestimmungsmodul ein erstes Speichermodul (130) zum Speichern der jeweiligen Steuerbefehle in Steuertransaktionen umfasst,
- insbesondere die Steuertransaktionen in dem verteilten Datenbanksystems (BC) gespeichert werden,
- insbesondere die Steuertransaktionen mittels des verteilten Datenbanksystems an die Geräte (300, D, BCN D) oder die Knoten übertragen werden,
- insbesondere die Steuerbefehle zusammen mit den zugeordneten Ausführungsanforderungen in den Steuertransaktionen gespeichert werden, wenn die Steuerbefehle durch ein Gerät oder einen Knoten des verteilten Datenbanksystems ausführbar sind.

13. Verfahren zum rechnergestützten Bestimmen von Ausführungsanforderungen für Steuerbefehle mit folgenden Verfahrensschritten:
- Empfangen (910) oder Abrufen von Steuerbefehlen;
- Bestimmen (920, 930) von Ausführungsanforderungen für eine Ausführung von Steuerbefehlen durch Knoten eines verteilten Datenbanksystems oder durch Geräte, wobei
- die Ausführungsanforderungen anhand gerätespezifischer Anforderungen und/oder vorausgesetzter Steuerbefehle bestimmt werden,
- das verteilte Datenbanksystem beispielsweise eine Blockkette ist.

14. Computerprogrammprodukt mit Programmbefehlen zur Durchführung des Verfahrens nach Anspruch 13.

15. Computerprogrammprodukt mit Programmbefehlen für ein Erstellungsgerät, das mittels der Programmbefehle konfiguriert wird, das Bestimmungsmodul nach einem der Ansprüche 1 - 12 zu erstellen.

16. Bereitstellungsvorrichtung für das Computerprogrammprodukt nach Anspruch 14 und/oder 15, wobei die Bereitstellungsvorrichtung das Computerprogrammprodukt speichert und/oder bereitstellt.
